# EUROPEAN PATENT APPLICATION

(11) **EP 4 685 967 A1**
(43) Date of publication of application: **28.01.2026**
(21) Application number: 23962900.9
(22) Date of filing: 29.12.2023
(51) Int. Cl.: H01M 50/342

(54) **BATTERY CELL, BATTERY AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LI, Yao, Ningde, Fujian 352100 (CN); LI, Wei, Ningde, Fujian 352100 (CN); LIU, Sike, Ningde, Fujian 352100 (CN); CHEN, Weike, Ningde, Fujian 352100 (CN); LI, Quankun, Ningde, Fujian 352100 (CN); HUANG, Xiuxue, Ningde, Fujian 352100 (CN); GAN, Jiuqiang, Ningde, Fujian 352100 (CN)
(74) Representative: Ran, Handong
(86) International application number: PCT/CN2023/143581
(87) International publication number: WO 2025/138226

(57) **Abstract**

The embodiments of the present application belong to the technical field of batteries. Provided are a battery cell, a battery and an electrical device. The battery cell comprises a casing and a pressure relief component; the casing comprises a first wall portion, the pressure relief component being arranged on the first wall portion; the pressure relief component comprises a first recess and second recesses, the first recess and at least one second recess jointly defining at least one predetermined pressure relief region; the pressure relief component is configured to be able to rupture along at least a part of the first recess when the battery cell relieves pressure; the second recess is configured to guide at least a part of the predetermined pressure relief region to turn over, so as to open the at least a part of the predetermined pressure relief region. The volume of the first recess is V, and the sum of the areas of all predetermined pressure relief regions is A, satisfying: 0.05 mm ≤ V/A ≤ 0.5 mm. Thus, the flatness of the surface of the pressure relief component where the first recess is provided can be improved, and both the requirement for the service life of the battery cell during normal use and the requirement for the reliability of the battery cell during thermal runaway are met.

## Description

### TECHNICAL FIELD

The present application relates to the technical field of batteries, and in particular, to a battery cell, a battery, and an electrical device.

### BACKGROUND

With the development of new-energy technologies, batteries are increasingly widely applied, such as applied in a mobile phone, a laptop, a storage battery car, an electric vehicle, an electric airplane, an electric boat, an electric toy car, an electric toy boat, an electric toy airplane, and an electric tool.

For a general battery cell, a pressure relief component is provided in the battery cell. When the battery cell thermally runs away, the pressure inside the battery cell is relieved through the pressure relief component to improve reliability of the battery cell. The pressure relief component may be provided with a pressure relief groove, and the pressure relief component can rupture along the pressure relief groove when the battery cell undergoes pressure relief to relieve the pressure inside the battery cell. However, the provision of the pressure relief groove may result in poor surface flatness of the pressure relief component, affecting production quality of the battery cell.

### SUMMARY OF THE INVENTION

Embodiments of the present application provide a battery cell, a battery and an electrical device capable of effectively improving production quality of battery cell.

In a first aspect, an embodiment of the present application provides a battery cell including a shell and a pressure relief component; the shell includes a first wall portion, the pressure relief component is disposed on the first wall portion, and the pressure relief component includes a first groove and a second groove; in a thickness direction of the first wall portion, a projection of the first groove and a projection of at least one second groove jointly define at least one predetermined pressure relief region; the pressure relief component is configured to be capable of rupturing along at least a part of the first groove when the battery cell undergoes pressure relief, and the second groove is configured to guide at least a part of the predetermined pressure relief region to be flipped to open the at least a part of the predetermined pressure relief region; where a volume of the first groove is V, and a sum of areas of all the predetermined pressure relief regions is A, with 0.05 mm ≤ V/A ≤ 0.5 mm.

In the above technical solution, the pressure relief component includes a first groove, so that the pressure relief component can rupture along at least a part of the first groove when the battery cell undergoes pressure relief to relieve the internal pressure of the battery cell. The pressure relief component further includes the second groove, the first groove and the second groove jointly define at least one predetermined pressure relief region, the second groove is capable of guiding at least a part of the predetermined pressure relief region to be flipped to open the at least a part of the predetermined pressure relief region for pressure relief, and the second groove assists the predetermined pressure relief region, so that the predetermined pressure relief region is flipped more easily, which reduces the difficulty of flipping the predetermined pressure relief region, and increases a rate of opening the predetermined pressure relief region. With V/A ≤ 0.5 mm, when the first groove is formed, a surplus material extruded from a region of the pressure relief component on which the first groove is disposed can be shared by a larger predetermined pressure relief region, which decreases the stacking amount per unit area of the predetermined pressure relief region, so that a height of a material stacking protrusion formed on a surface of the predetermined pressure relief region due to material extrusion on the region of the pressure relief component where the first groove is disposed is not too large, which, on the one hand, improves flatness of the surface of the pressure relief component on which the first groove is disposed, and on the other hand, reduces release of a large residual stress during normal use of the battery cell due to an excessive height of the material stacking protrusion of the predetermined pressure relief region that may result in a risk of reducing fatigue strength of the pressure relief component, thereby improving service life of the battery cell. With V/A ≥ 0.05 mm, the height of the material stacking protrusion formed on the surface of the predetermined pressure relief region due to the material extrusion on the region of the pressure relief component where the first groove is disposed is not too small, and the residual stress released by the material stacking protrusion helps the pressure relief component to rupture along the first groove in a more timely manner when the battery cell thermally runs away, which improves the timeliness of pressure relief of the battery cell and reduces the risk of explosion of the battery cell, thereby improving the reliability of the battery cell. Therefore, meeting 0.05 mm ≤ V/A ≤ 0.5 mm can improve the flatness of the surface of the pressure relief component on which the first groove is disposed and improve production quality of battery cells, and take into account the requirements for the service life of the battery cell during normal use and the reliability requirements of the battery cell during thermal runaway.

In some embodiments, 0.1 mm ≤ V/A ≤ 0.35 mm is met. Meeting V/A ≤ 0.35 mm, on the one hand, further improves the flatness of the surface of the pressure relief component on which the first groove is disposed, and on the other hand, further reduces the influence of the material stacking protrusion in the predetermined pressure relief region on the fatigue strength of the pressure relief component. Meeting V/A ≥ 0.1 mm further improves timeliness of pressure relief of the battery cell, and further reduces the risk of explosion of the battery cell.

In some embodiments, 82 mm³ ≤ V ≤ 450 mm³ is met. With V ≤ 450 mm³, the extrusion amount at the time of forming the first groove is not too large, which reduces forming force on the pressure relief component at the time of forming the first groove, and reduces the risk of damaging the pressure relief component at the time of forming the first groove. With V ≥ 82 mm³, the extrusion amount at the time of forming the first groove is not too small, making it easier to meet the depth, width, and length requirements of the first groove, and reducing the difficulty of forming the first groove.

In some embodiments, 115 mm³ ≤ V ≤ 265 mm³ is met. Meeting V ≤ 265 mm³ further decreases the extrusion amount at the time of forming the first groove, further reduces the forming force on the pressure relief component at the time of forming the first groove, and reduces the risk of damaging the pressure relief component at the time of forming the first groove. Meeting V ≥ 115 mm³ further increases the extrusion amount at the time of forming the first groove, and further reduces the difficulty of forming the first groove.

In some embodiments, 160 mm² ≤ A ≤ 1500 mm² is met. With A ≤ 1500 mm², the area of the predetermined pressure relief region is not too large, thereby reducing the risk that the pressure relief component ruptures along the first groove in advance due to deformation of the predetermined pressure relief region caused by pressure changes inside the battery cell. With A ≥ 160 mm², the pressure relief component has a sufficiently large pressure relief area, increasing the pressure relief rate of the battery cell.

In some embodiments, 400 mm² ≤ A ≤ 1200 mm² is met. Meeting A ≤ 1200 mm² further reduces the risk that the pressure relief component ruptures along the first groove. Meeting A ≥ 400 mm² further increases the pressure relief rate of the battery cell.

In some embodiments, in the thickness direction of the first wall portion, the pressure relief component has a first surface and a second surface opposite to each other, and the second groove is recessed from the second surface toward the first surface. In a width direction of the second groove, the second groove includes a first groove side surface and a second groove side surface provided opposite to each other and connected with the second surface, the first groove side surface is closer to the predetermined pressure relief region than the second groove side surface, an angle formed by the first groove side surface and the second surface is a, an angle formed by the second groove side surface and the second surface is b, with 90°≤ a < b < 180°, and the width direction of the second grooves is perpendicular to the thickness direction of the first wall portion. In this way, it is equivalent to reducing the angle between the first groove side surface and the second surface, which can reduce the stacking amount of the surplus material in the predetermined pressure relief region extruded at the time of forming the second groove, reducing the height of the material stacking protrusion formed on the surface of the predetermined pressure relief region due to material extrusion on the region of the pressure relief component where the first groove is disposed, and improving the surface flatness of the predetermined pressure relief region.

In some embodiments, 90° ≤ a ≤ 150° is met. This further reduces the angle between the first groove side surface and the second surface, further reduces an inclination angle of the first groove side surface, and is beneficial to decreasing the stacking amount of the surplus material extruded at the time of forming the second groove in the predetermined pressure relief region.

In some embodiments, 90° ≤ b ≤ 170° is met. This further reduces the angle between the second groove side surface and the second surface, further reduces an inclination angle of the second groove side surface, and reduces the difficulty of forming the second groove.

In some embodiments, the pressure relief component is provided with a plurality of second grooves, in the thickness direction of the first wall portion, the projection of the first groove and projections of the plurality of second grooves jointly define a plurality of predetermined pressure relief regions, and each predetermined pressure relief region is disposed corresponding to one or more second grooves. In the event of thermal runaway of the battery cell, the plurality of predetermined pressure relief regions all may be opened. When a total pressure relief area of the pressure relief component is constant, the rate of opening the predetermined pressure relief regions can be increased to achieve pressure relief more quickly.

In some embodiments, in the thickness direction of the first wall portion, the projection of the second groove does not overlap with the projection of the first groove. This reduces mutual influence of the first groove and the second groove during machining, and reduces the risk that the first groove and the second groove communicate with each other during machining.

In some embodiments, in the width direction of the second groove, the second groove is spaced apart from the first groove, and the width direction of the second groove is perpendicular to the thickness direction of the first wall portion. In this way, it is possible to realize that the projection of the second groove in the thickness direction of the first wall portion does not overlap with the projection of the first groove in the thickness direction of the first wall portion, which, on the one hand, can further reduce the mutual influence of the first groove and the second groove during machining, on the other hand, can reduce the influence of residual stress between a region of the pressure relief component on which the first groove is disposed and a region of the pressure relief component on which the second groove is disposed, and can reduce a risk that a rupture generated by rupturing of the pressure relief component along the first groove spreads to the second groove and accordingly the pressure relief component ruptures along the second groove.

In some embodiments, in the thickness direction of the first wall portion, both ends of the projection of the second groove in an extension direction respectively extend beyond both ends of the projection of the first groove. In this way, the second groove is made longer, which enhances the auxiliary flipping effect of the second groove on the predetermined pressure relief region.

In some embodiments, a minimum residual thickness of the first groove is D₁, and a minimum residual thickness of the second groove is D₂, with D₁ < D₂. Therefore, the strength of the region of the pressure relief component on which the first groove is disposed is less than the strength of the region of the pressure relief component on which the second groove is disposed, so that the pressure relief component can preferentially rupture along the first groove to achieve rapid opening of the predetermined pressure relief region.

In some embodiments, in the thickness direction of the first wall portion, a maximum groove depth of the first groove is H₁, and a maximum groove depth of the second groove is H₂, with H₂ < H₁. During the production process, the depth of the first groove may be machined deeper than the depth of the second groove, thereby achieving a smaller minimum residual thickness of the first groove than the minimum residual thickness of the second groove.

In some embodiments, in the thickness direction of the first wall portion, the maximum groove depth of the first groove is H₁, and a thickness of the pressure relief component is D, with 0.16 ≤ H₁/D < 1. Therefore, a ratio of a maximum depth of the first groove to the thickness of the pressure relief component is not too small, so that a burst pressure of the battery cell is not too high, which is beneficial to improving the timeliness of pressure relief of the battery cell.

In some embodiments, 0.4 mm ≤ H₁ ≤ 2 mm is met, and 0.8 mm ≤ D ≤ 2.5 mm is met. Controlling the maximum depth of the first groove and the thickness of the pressure relief component within a reasonable range leads to good economy.

In some embodiments, in the thickness direction of the first wall portion, the pressure relief component has a first surface and a second surface opposite to each other, the first groove is disposed on the first surface, and the second groove is disposed on the second surface. Therefore, the first groove and the second groove are respectively located on both sides of the pressure relief component along the thickness direction of the first wall portion, so that the first groove and the second groove are respectively machined on both sides of the pressure relief component, which is conducive to reducing the mutual influence of the first groove and the second groove during machining.

In some embodiments, in the width direction of the second groove, the projection of the first groove at least partially overlaps with the projection of the second groove, and the width direction of the second groove is perpendicular to the thickness direction of the first wall portion. Therefore, the projections of the first groove and the second groove in the width direction of the second groove have an overlapping region, which, on the one hand, can improve the absorption effect of the second groove on the surplus material extruded at the time of forming the first groove, and reduce the risk that the surplus material extruded from the first groove diffuses to a surface close to the shell in the width direction of the second groove that may cause the surface to be uneven, and on the other hand, can improve the absorption effect of the second groove on the deformation energy of the battery cell when the battery cell is deformed by internal and external forces in the width direction of the second groove, and reduce the influence of expansion and deformation of the battery cell in the width direction of the second groove on the pressure relief component.

In some embodiments, in the thickness direction of the first wall portion, a groove bottom surface of the second groove is closer to the first surface than a groove bottom surface of the first groove. This structure is conducive to achieving more overlapping regions between the projections of the second groove and the first groove in the width direction of the second groove, further improving the absorption effect of the second groove on the surplus material extruded at the time of forming the first groove, and further improving the absorption effect of the second groove on the deformation energy of the battery cell when the battery cell is deformed by the internal and external forces in the width direction of the second groove.

In some embodiments, in the thickness direction of the first wall portion, the maximum groove depth of the second groove is H₂, and the minimum residual thickness of the first groove is D₁, with D₁ < H₂. Such a structure is conducive to achieving more overlapping regions between the projection of the second groove and the first groove in the width direction of the second groove, further improving the absorption effect of the second groove on the surplus material extruded at the time of forming the first groove, and further improving the absorption effect of the second groove on the deformation energy of the battery cell when the battery cell is deformed by the internal and external forces in the width direction of the second groove.

In some embodiments, the first groove includes a plurality of stages of grooves sequentially provided in a direction from the first surface to the second surface, and in the thickness direction of the first wall portion, among adjacent two stages of grooves, a stage of groove away from the first surface is disposed on a groove bottom surface of the other stage of groove close to the first surface; where a stage of groove of the plurality of stages of grooves disposed on the first surface is a first-stage groove, and in the width direction of the second groove, the projection of the second groove at least partially overlaps with a projection of the first-stage groove, and the width direction of the second groove is perpendicular to the thickness direction of the first wall portion. By disposing the first groove as a plurality of stages of grooves arranged in the thickness direction of the first wall portion, when the first groove is formed, each stage of groove may be machined one by one in the direction from the first surface to the second surface, which reduces the forming depth of each stage of groove, decreases the forming force on the pressure relief component at the time of forming the first groove, and reduces the risk of damaging the pressure relief component at the time of forming the first groove. Since the projection of the first-stage groove of the first groove in the width direction of the second groove at least partially overlaps with the projection of the second groove in the width direction of the second groove, the projection of the second groove in the width direction can cover other stages of grooves of the first groove except the first-stage groove, which, on the one hand, can improve the absorption effect of the second groove on the surplus material extruded from the first groove at the time of machining the plurality of stages of grooves, on the other hand, can further improve the absorption effect of the second groove on the deformation energy of the battery cell when the battery cell is deformed by the internal and external impact forces, and reduce the influence of the expansion and deformation of the battery cell in the width direction of the second groove on the pressure relief component.

In some embodiments, in the thickness direction of the first wall portion, the groove bottom surface of the second groove is flush with a groove bottom surface of the first-stage groove, or the groove bottom surface of the second groove is closer to the first surface than the groove bottom surface of the first-stage groove. In this way, the projection of the second groove in the width direction can cover other stages of grooves of the first groove except the first-stage groove, which, on the one hand, can improve the absorption effect of the second groove on the surplus material extruded from the first groove at the time of forming the plurality of stages of grooves, on the other hand, can improve the absorption effect of the second groove on the deformation energy of the battery cell when the battery cell is deformed by the internal and external impact forces, and reduce the influence of the expansion and deformation of the battery cell in the width direction of the second groove on the pressure relief component.

In some embodiments, in the thickness direction of the first wall portion, the pressure relief component has a first surface and a second surface opposite to each other, and both the first groove and the second groove are recessed from the second surface toward the first surface. In this way, the first groove and the second groove are disposed on the same side of the pressure relief component in the thickness direction, making it easier to machine the first groove and the second groove on the pressure relief component, and machining of the first groove and the second groove may be realized without flipping of the pressure relief component, which is conducive to optimizing production rhythm of the battery cell.

In some embodiments, the first groove includes a plurality of stages of grooves sequentially provided in a direction from the second surface to the first surface, and in the thickness direction of the first wall portion, among adjacent two stages of grooves, a stage of groove away from the second surface is disposed on a groove bottom surface of the other stage of groove close to the second surface; where a stage of groove of the plurality of grooves disposed on the second surface is a first-stage groove, and in the thickness direction of the first wall portion, a groove bottom surface of the first-stage groove is closer to the second surface than the groove bottom surface of the second groove. By disposing the first groove as a plurality of stages of grooves arranged in the thickness direction of the first wall portion, when the first groove is formed, each stage of groove can be machined one by one in the direction from the second surface to the first surface, which reduces the forming depth of each stage of groove, decreases the forming force on the pressure relief component at the time of forming the first groove, and reduces the risk of damaging the pressure relief component at the time of forming the first groove. Since the groove bottom surface of the first-stage groove is closer to the second surface than the groove bottom surface of the second groove, the projection of the second groove in the width direction at least covers the first-stage groove of the first groove, so that the second groove has a deeper depth, so that the second groove can have a good absorption effect on the surplus material extruded at the time of forming the first-stage groove, and the second groove can have a good absorption effect on the deformation energy of the battery cell when the battery cell is deformed by the internal and external impact forces.

In some embodiments, in the thickness direction of the first wall portion, the maximum groove depth of the second groove is H₂, and a maximum groove depth of the first-stage groove is H₃, with H₃ < H₂. Therefore, the second groove has a deeper depth, so that the second groove can have a good absorption effect on the surplus material extruded at the time of forming the first-stage groove, and the second groove can have a good absorption effect on the deformation energy of the battery cell when the battery cell is deformed by the internal and external impact forces.

In some embodiments, the first surface is a surface of the pressure relief component facing an exterior of the battery cell, and the second surface is a surface of the pressure relief component facing an interior of the battery cell. The first surface is a surface of the pressure relief component facing the exterior of the battery cell. In the case that the first groove is disposed on the first surface, the first groove is disposed on the outside of the pressure relief component, which facilitates machining and forming of the first groove on the exterior of the battery cell, and helps to reduce the difficulty of forming the first groove, thereby improving production efficiency of the battery cell. The second surface is a surface of the pressure relief component facing the interior of the battery cell. In the case that the second groove is disposed on the second surface, the second groove is disposed on the inside of the pressure relief component, on the one hand, when the predetermined pressure relief region is flipped outward and opened, both groove side surfaces of the second groove in the width direction are less likely to come into contact, which is conducive to increasing the opening area of the predetermined pressure relief region; on the other hand, the second groove is not exposed to the exterior of the battery cell, reducing the risk of oxidation and corrosion of the pressure relief component in the second groove.

In some embodiments, in the thickness direction of the first wall portion, the projection of the first groove, the projection of the second groove, and a projection of an extension line of the second groove jointly enclose the predetermined pressure relief region; or in the thickness direction of the first wall portion, the projection of the first groove, a projection of an extension line of the first groove, and the projection of the second groove jointly enclose the predetermined pressure relief region; or in the thickness direction of the first wall portion, the projection of the first groove, a projection of an extension line of the first groove, the projection of the second groove, and a projection of an extension line of the second groove jointly enclose the predetermined pressure relief region. In this structure, the projection of the second groove in the thickness direction of the first wall portion and the projection of the first groove in the thickness direction of the first wall portion do not form a closed structure, thereby reducing the mutual influence of the first groove and the second groove during machining.

In some embodiments, the first groove extends along an arc trajectory; and/or the second groove extend along a linear trajectory. The first groove extends along the arc trajectory, that is, the first groove is an arc groove. The first groove with this structure only includes one groove segment, which simplifies the structure of the first groove. The second groove extend along the linear trajectory, that is, the second groove is a linear groove, which has a simple structure and is easy to machine and form.

In some embodiments, the first groove includes a first groove segment and a second groove segment, and the first groove segment is connected with the second groove segment; in the thickness direction of the first wall portion, a projection of the first groove segment, a projection of the second groove segment, the projection of the second groove and the projection of the extension line of the second groove jointly enclose the predetermined pressure relief region; or in the thickness direction of the first wall portion, a projection of the first groove segment, a projection of an extension line of the first groove segment, a projection of the second groove segment, a projection of an extension line of the second groove segment, and the projection of the second groove jointly enclose the predetermined pressure relief region; or in the thickness direction of the first wall portion, a projection of the first groove segment, a projection of an extension line of the first groove segment, a projection of the second groove segment, a projection of an extension line of the second groove segment, the projection of the second groove, and the projection of the extension line of the second groove jointly enclose the predetermined pressure relief region. The first groove with this structure has a simple structure, and a position at which the first groove segment and the second groove segment are connected has more concentrated stress, is weaker, and is easier to rupture, so that the pressure relief component can quickly rupture from the first groove segment and the second groove segment after the pressure relief component ruptures from the position at which the first groove segment and the second groove segment are connected when the battery cell thermally runs away, so that the predetermined pressure relief region can be opened more quickly to relieve pressure in time.

In some embodiments, the first groove includes a first groove segment, a second groove segment and a third groove segment, the second groove segment and the third groove segment are disposed opposite to each other, the first groove segment connects the second groove segment and the third groove segment, and the first groove segment and the second groove are disposed opposite to each other; in the thickness direction of the first wall portion, a projection of the first groove segment, a projection of the second groove segment, a projection of the third groove segment, the projection of the second groove and the projection of the extension line of the second groove jointly enclose the predetermined pressure relief region; or in the thickness direction of the first wall portion, a projection of the first groove segment, a projection of the second groove segment, a projection of an extension line of the second groove segment, a projection of the third groove segment, a projection of an extension line of the third groove segment and the projection of the second groove jointly enclose the predetermined pressure relief region; or in the thickness direction of the first wall portion, a projection of the first groove segment, a projection of the second groove segment, a projection of an extension line of the second groove segment, a projection of the third groove segment, a projection of an extension line of the third groove segment, the projection of the second groove, and the projection of the extension line of the second groove jointly enclose the predetermined pressure relief region. By adopting the first groove with this structure, an intersection position of the first groove segment and the second groove segment and a connection position of the first groove segment and the third groove segment are weaker, and the predetermined pressure relief region more easily ruptures and is opened for pressure relief, and the opening area of the predetermined pressure relief region can be further increased, thereby increasing the pressure relief area of the battery cell and improving the pressure relief rate of the battery cell.

In some embodiments, a connection position of the second groove segment and the first groove segment is offset from both ends of the second groove segment, and the connection position of the third groove segment and the first groove segment is offset from both ends of the third groove segment, so that the predetermined pressure relief regions are formed on both sides of the first groove segment. In this way, the first groove segment of the first groove is located between two predetermined pressure relief regions, and after the pressure relief component ruptures along the first groove segment, the two predetermined pressure relief regions can be opened in a split manner for pressure relief when the battery cell undergoes pressure relief, so that the two predetermined pressure relief regions can be quickly opened, which is conducive to improving the pressure relief rate of the battery cell.

In some embodiments, the first groove segment extends along a linear or arc trajectory; and/or the second groove segment extends along a linear or arc trajectory; and/or the third groove segment extends along a linear or arc trajectory. If the first groove segment extends along a linear trajectory, the first groove segment is a linear groove, which can reduce the difficulty of forming the first groove segment. If the first groove segment extends along an arc trajectory and the first groove segment is an arc groove, the pressure relief component is more likely to rupture along the first groove segment when the battery cell undergoes pressure relief, so that the predetermined pressure relief regions can be opened more quickly. If the second groove segment extends along a linear trajectory, the second groove segment is a linear groove, which can reduce the difficulty of forming the second groove segment. If the second groove segment extends along an arc trajectory, the second groove segment is an arc groove, and the pressure relief component is more likely to rupture along the second groove segment when the battery cell undergoes pressure relief, so that the predetermined pressure relief region can be opened more quickly. If the third groove segment extends along a linear trajectory, the third groove segment is a linear groove, which can reduce the difficulty of forming the third groove segment. If the third groove segment extends along an arc trajectory and the third groove segment is an arc groove, the pressure relief component is more likely to rupture along the third groove segment when the battery cell undergoes pressure relief, so that the predetermined pressure relief regions can be opened more quickly.

In some embodiments, the pressure relief component is integrally formed with the first wall portion. Therefore, the first groove and the second groove may be directly formed on the first wall portion to form an integrated pressure relief structure, which results in higher reliability, eliminates the mounting process of the pressure relief component, and has better economy.

In some embodiments, the first groove is stamped and formed on the first wall portion; and/or the second groove is stamped and formed on the first wall portion. If the first groove is stamped and formed on the first wall portion, the first groove has a simple forming method, which is conducive to reducing the production cost of the battery cell. If the second groove is stamped and formed on the first wall portion, the second groove has a simple forming method, which is conducive to reducing the production cost of the battery cell.

In some embodiments, the pressure relief component is disposed separately from the first wall portion, and the pressure relief component is mounted on the first wall portion. The pressure relief component is a component independent of the shell, and the pressure relief component and the shell can be produced and assembled separately, resulting in low production difficulty and high efficiency.

In some embodiments, the first wall portion is a rectangular wall portion, and the first groove and the second groove are arranged in a width direction of the first wall portion. In this way, the second groove is closer to an edge of the first wall portion in the width direction of the first wall portion, so that the region of the pressure relief component on which the first groove is disposed has a higher strength, reducing the risk that the pressure relief component ruptures along the second groove when the battery cell undergoes pressure relief. In addition, during use of the battery cell, the expansion amount of the battery cell in the width direction of the first wall portion is greater than the expansion amount of the battery cell in a length direction of the first wall portion, and the expansion of the battery cell in the width direction of the first wall portion has a greater influence on the pressure relief component. The first groove and the second groove are arranged in the width direction of the first wall portion, and the second groove can have a good absorption effect on the deformation energy of the battery cell when the battery cell expands and is deformed in the width direction of the first wall portion, thereby reducing the influence of the expansion of the battery cell in the width direction of the first wall portion on the pressure relief component.

In some embodiments, the shell includes a case and end covers; openings are formed at least at one end of the case; and the end covers correspond to the openings one by one, and the end covers close the openings; where at least one of the end covers is the first wall portion; and/or at least one wall portion in the case is the first wall portion. If at least one end cover is the first wall portion, the at least one end cover has a pressure relief function, which reduces the difficulty of forming the first groove and the second groove on the end cover or the difficulty of mounting the pressure relief component. If at least one wall portion in the case is the first wall portion, the case has a pressure relief function, emissions discharged from the interior of the battery cell are less likely to affect an external component outside the end cover when the battery cell undergoes pressure relief, reducing the risk of damaging the external component by the emissions.

In some embodiments, the opening is formed at only one end of the case, and a wall portion of the case opposite to the end cover is the first wall portion. The case is a structure with the openings at one end, which further simplifies the structure of the entire battery cell. The first wall portion is the wall portion of the case opposite to the end cover, which can achieve directional pressure relief from the bottom of the case.

In some embodiments, the openings are formed at each of two opposite ends of the case, and at least one wall portion in the case is the first wall portion. The case is a structure with openings formed at two opposite ends, and an electrode assembly may be assembled into the case through any of the opening, which can reduce the assembly difficulty of the battery cell and improve the assembly quality of the battery cell. The case with this structure can be made larger in length (openings are formed at both ends of the case in the length direction), which is conducive to increasing capacity of the battery cell.

In some embodiments, the material of the pressure relief component includes steel. Steel has the characteristic of high strength, and the pressure relief component made of steel has better strength. In the case that the battery cell has a constant burst pressure, the pressure relief component may be made thinner to reduce the volume of the pressure relief component.

In some embodiments, the steel is carbon steel or stainless steel.

In some embodiments, the material of the pressure relief component includes an aluminum alloy. The aluminum alloy has the characteristics of light weight and good ductility, making it easier to machine the first groove and the second groove on the pressure relief component.

In some embodiments, the aluminum alloy includes components at the following percentage mass contents: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%. This aluminum alloy has lower hardness and better forming ability, reduces machining difficulty of the first groove and the second groove, helps to increase machining accuracy of the first groove and the second groove, and improves pressure relief consistency of the pressure relief component.

In some embodiments, the aluminum alloy includes components at the following percentage mass contents: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and the sum of other elements ≤ 0.15%. The pressure relief components made of this aluminum alloy have higher hardness, greater strength, and good resistance to damage.

In a second aspect, an embodiment of the present application provides a battery, which includes the battery cell provided by any embodiment in the first aspect.

In a third aspect, the embodiments of the present application provide an electrical device, including the battery cell provided by any embodiment of the first aspect. The battery cell is configured to supply electric energy to the electric device.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a structural schematic diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is an assembly diagram of the battery cell shown in FIG. 3;
FIG. 5 is a partial view of the shell shown in FIG. 4;
FIG. 6 is an A-A cross-sectional view of the shell shown in FIG. 5;
FIG. 7 is a partial enlarged view of part B in FIG. 6;
FIG. 8 is an assembly diagram of a battery cell provided in some other embodiments of the present application;
FIG. 9 is a partial view of the shell shown in FIG. 8;
FIG. 10 is a C-C cross-sectional view of the shell shown in FIG. 9;
FIG. 11 is a partial enlarged view of part D in FIG. 10;
FIG. 12 is a partial cross-sectional view of a shell provided in some embodiments of the present application;
FIG. 13 is a partial enlarged view of part E in FIG. 12;
FIG. 14 is a partial view of a shell (a first groove is an arc groove) provided in some embodiments of the present application;
FIG. 15 is an F-F cross-sectional view of the shell shown in FIG. 14;
FIG. 16 is a partial view of a shell (a first groove is an arc groove) provided in some other embodiments of the present application;
FIG. 17 is a partial view of a shell (a first groove is an arc groove) provided in some still other embodiments of the present application;
FIG. 18 is a partial view of a shell (a first groove is a V-shaped groove) provided in some embodiments of the present application;
FIG. 19 is a G-G cross-sectional view of the shell shown in FIG. 18;
FIG. 20 is a partial view of a shell (a first groove is a V-shaped groove) provided in some other embodiments of the present application;
FIG. 21 is a partial view of a shell (a first groove is a V-shaped groove) provided in some still other embodiments of the present application;
FIG. 22 is a partial view of a shell (a first groove is an H-shaped groove) provided in some other embodiments of the present application;
FIG. 23 is a partial view of a shell (a first groove is an H-shaped groove) provided in some still other embodiments of the present application;
FIG. 24 is an exploded view of a shell (an opening is formed at one end of a case, the case includes a first wall portion, and a pressure relief component is the first wall portion) provided in some embodiments of the present application;
FIG. 25 is an exploded view of a shell (an opening is formed at one end of a case, the case includes a first wall portion, and a pressure relief component is mounted on the first wall portion) provided in some embodiments of the present application;
FIG. 26 is an exploded view of a shell (an opening is formed at one end of a case, and an end cover is a pressure relief component) provided in some embodiments of the present application;
FIG. 27 is an exploded view of a shell (an opening is formed at one end of a case, an end cover is a first wall portion, and a pressure relief component is mounted on the first wall portion) provided in some embodiments of the present application; and
FIG. 28 is an exploded view of a battery cell provided in some other embodiments of the present application.

Reference numerals: 1-shell; 11-case; 12-end cover; 13-first wall portion; 131-pressure relief hole; 14-second wall portion; 15-third wall portion; 2-electrode assembly; 21-tab; 3-electrode terminal; 4-current collecting member; 5-insulating member; 6-pressure relief component; 61-first groove; 61a-extension line of the first groove; 611-first groove segment; 612-second groove segment; 613-third groove segment; 614-groove bottom surface of the first groove; 615-first-stage groove; 62-second groove; 62a-extension line of the second groove; 621-first groove side surface; 622-second groove side surface; 623-first end; 624-second end; 625-groove bottom surface of the second groove; 63-predetermined pressure relief region; 64-first surface; 65-second surface; 10-battery cell; 20-box body; 201-first portion; 202-second portion; 100-battery; 200-controller; 300-motor; 1000-vehicle; X-thickness direction of the first wall portion; Y-extension direction of the second groove; and Z-width direction of the second groove.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like.

The battery cell generally includes an electrode assembly. The electrode assembly includes a positive electrode, a negative electrode and a spacer. During charge-discharge of the battery cell, active ions (e.g., lithium ions) are intercalated and de-intercalated back and forth between the positive electrode and the negative electrode. The spacer is arranged between the positive electrode and the negative electrode, and may function to reduce a risk of short circuit between the positive electrode and the negative electrode, while allowing active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, silver surface-treated aluminum or stainless steel, stainless steel, copper, aluminum, nickel, a carbon electrode, carbon, nickel, titanium or the like may be used as the metal foil. The foam metal may be foam nickel, foam copper, foam aluminum, a foam alloy, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the spacer is an isolation film. The isolation film can be any well-known porous separator with high chemical stability and mechanical stability.

As an example, the material of the isolation film may be selected from a group consisting of at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some embodiments, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some embodiments, the electrode assembly may be cylindrical, flat, polyprismatic, or the like.

In some embodiments, the electrode assembly is provided with a tab. The tab may conduct current out from the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell of another shape. The prismatic battery cell includes a square-case battery cell, a blade-shaped battery cell and a multi-prismatic battery such as a hexa-prismatic battery.

The battery mentioned in the embodiments of the present application refers to a single physical module comprising one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

The development of battery technology requires simultaneous consideration of many design factors, such as energy density, cycle life, discharge capacity, charge/discharge rate and other performance parameters. In addition, the reliability of the battery also needs to be taken into account.

In order to improve the reliability of the battery cell, a pressure relief component may be generally provided in the battery cell, and the pressure relief component may be a part of a shell of the battery cell or a component mounted to the shell. In the event of thermal runaway of the battery cell, the pressure inside the battery cell may be relieved through the pressure relief component.

In order to achieve timely pressure relief of the battery cell, a pressure relief groove may be provided on the pressure relief component, so that the pressure relief component can rupture along at least a part of the pressure relief groove when the battery cell undergoes pressure relief, so that a pressure relief region of the pressure relief component may be quickly opened to more quickly relieve the pressure inside the battery cell.

In order to make the pressure relief region of the pressure relief component easier to open, a flipping groove may be provided in the pressure relief component, and the flipping groove helps open the pressure relief region of the pressure relief component, thereby reducing the difficulty of opening the pressure relief region. The provision of the flipping groove weakens the ability of the surplus material extruded from the pressure relief groove to diffuse to an outer surface of the battery cell in a width direction of the flipping groove, so that the surplus material extruded from a region of the pressure relief component on which the pressure relief groove is disposed will accumulate in a predetermined pressure relief region jointly defined by the flipping groove and the pressure relief groove, forming a material stacking protrusion on the surface of the predetermined pressure relief region, which will affect flatness of a surface of the pressure relief component on which the pressure relief groove is disposed, affect production quality of the battery cell, and even affect service performance of the battery cell.

Based on the above considerations, in order to solve the problem of low production quality of the battery cell, an embodiment of the present application provides a battery cell. The battery cell includes a shell and a pressure relief component, the shell includes a first wall portion, the pressure relief component is disposed on the first wall portion, and the pressure relief component includes a first groove (a pressure relief groove) and a second groove (a flipping groove); in a thickness direction of the first wall portion, a projection of the first groove and a projection of at least one second groove jointly define at least one predetermined pressure relief region; and the pressure relief component is configured to be capable of rupturing along at least a part of the first groove when the battery cell undergoes pressure relief, and the second groove is configured to guide at least a part of the predetermined pressure relief region to be flipped to open the at least a part of the predetermined pressure relief region. Here, a volume of the first groove is V, and a sum of areas of all the predetermined pressure relief regions is A, with 0.05 mm ≤ V/A ≤ 0.5 mm.

In such a battery cell, with V/A ≤ 0.5 mm, when the first groove is formed, a surplus material extruded from a region of the pressure relief component on which the first groove is disposed can be shared by a larger predetermined pressure relief region, which decreases the stacking amount per unit area of the predetermined pressure relief region, so that a height of a material stacking protrusion formed on a surface of the predetermined pressure relief region due to material extrusion on the region of the pressure relief component where the first groove is disposed is not too large, which, on the one hand, improves flatness of the surface of the pressure relief component on which the first groove is disposed, and on the other hand, reduces release of a large residual stress during normal use of the battery cell due to an excessive height of the material stacking protrusion of the predetermined pressure relief region that may result in a risk of reducing fatigue strength of the pressure relief component, thereby improving service life of the battery cell; and with V/A ≥ 0.05 mm, the height of the material stacking protrusion formed on the surface of the predetermined pressure relief region 63 due to the material extrusion on the region of the pressure relief component where the first groove is disposed is not too small, and the residual stress released by the material stacking protrusion helps the pressure relief component to rupture along the first groove in a more timely manner when the battery cell thermally runs away, which improves the timeliness of pressure relief of the battery cell and reduces the risk of explosion of the battery cell, thereby improving the reliability of the battery cell. Therefore, meeting 0.05 mm ≤ V/A ≤ 0.5 mm can improve the flatness of the surface of the pressure relief component on which the first groove is disposed and improve production quality of battery cells, and take into account the requirements for the service life of the battery cell during normal use and the reliability requirements of the battery cell during thermal runaway.

The battery cell in the embodiments of the present application is suitable for a battery and an electrical device using the battery cell.

The electrical device may be, but not limited to, a vehicle, a mobile phone, a portable device, a laptop computer, a ship, a spacecraft, an electric toy or an electric tool, etc. The vehicle may be a fuel vehicle, a gas vehicle or a new-energy vehicle. The new-energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

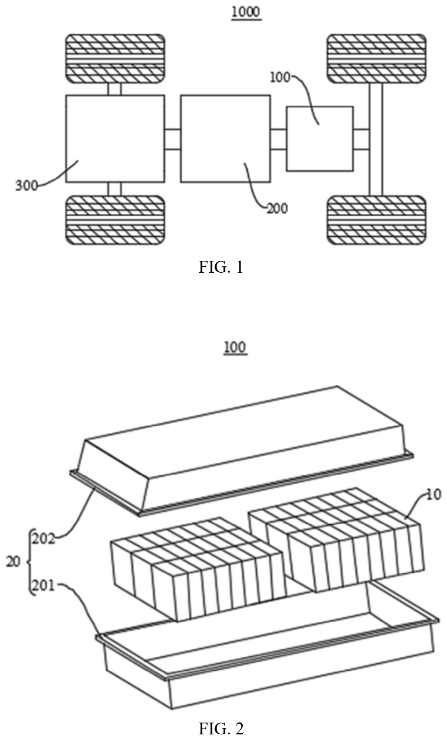

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to FIG. 2, FIG. 2 is an exploded diagram of a battery 100 according to some embodiments of the present application. The battery 100 includes a box cell 10 and a box body 20. The battery cell 10 is accommodated in the box body 20.

The box body 20 is a component for accommodating the battery cell 10, and the box body 20 provides an accommodating space for the battery cell 10. The box body 20 may be of various structures. In some embodiments, the box body 20 may include a first portion 201 and a second portion 202. The first portion 201 and the second portion 202 are covered by each other to define the accommodating space for accommodating the battery cell 10. The first portion 201 and the second portion 202 may be in various shapes, such as a cuboid shape, a cylinder shape, or the like. The first portion 201 may be of a hollow structure with one side open, the second portion 202 may also be of a hollow structure with one side open, and the open side of the second portion 202 covers the open side of the first portion 201, so as to form the box body 20 having the accommodating space. It is also possible that the first portion 201 may be of a hollow structure with one side open, the second portion 202 may be a plate-like structure, and the second portion 202 covers the open side of the first portion 201, so as to form the box body 20 having the accommodating space. The first portion 201 and the second portion 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. Alternatively, all of the battery cells 10 may be directly connected together by series connection, or parallel connection, or parallel-series connection, and then the integral whole formed by all of the battery cells 10 is accommodated within the box body 20.

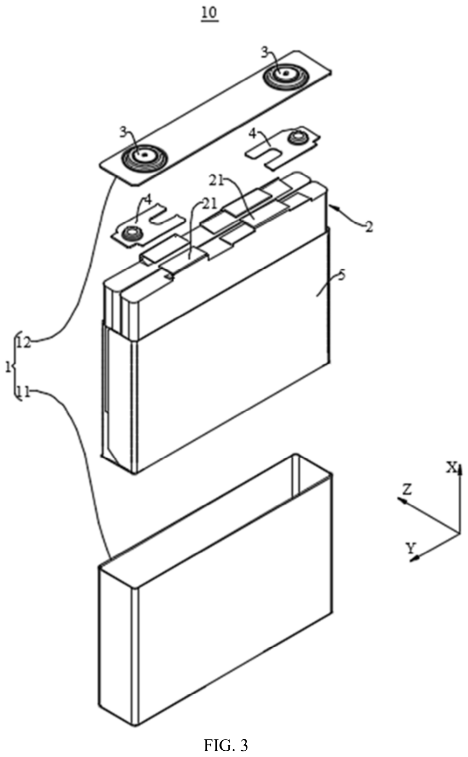

With reference to FIG. 3, FIG. 3 is an exploded view of a battery cell 10 provided by some embodiments of the present application. The battery cell 10 can include a shell 1 and an electrode assembly 2, and the electrode assembly 2 is accommodated in the shell 1.

In some embodiments, the shell 1 can include a case 11 and an end cover 12, the case 11 is provided with an opening, and the end cover 12 seals the opening of the case 11.

The case 11 is a component for accommodating the electrode assembly 2, the case 11 can be of a hollow structure with an opening formed in one end, and the case 11 can be of a hollow structure with openings formed in two opposite ends. The case 11 can be in various shapes, such as a cylinder shape, and a cuboid shape. The case 11 can be made of various materials, such as copper, iron, aluminum, steel, and aluminum alloy.

The end cover 12 is a component that closes the opening of the case 11 to isolate an internal environment of the battery cell 10 from an external environment. The end cover 12 and the case 11 jointly define an accommodating space for accommodating the electrode assembly 2, an electrolyte solution and other components. The end cover 12 can be connected to the case 11 in a welding or rolling sealing manner so as to seal the opening of the case 11. The shape of the end cover 12 can be matched with the shape of the shell 1, for example, if the case 11 is of a cuboid structure, the end cover 12 will be of a rectangular plate-shaped structure matched with the shell 1, for another example, if the case 11 is of a cylinder structure, and the end cover 12 will be of a circular plate-shaped structure matched with the case 11. The case 12 may also be made of various materials, such as copper, iron, aluminum, steel, aluminum alloy, and plastic. The material of the end cover 12 and the material of the case 11 may be the same or different.

In the embodiment where the case 11 has the opening formed in one end, one end cover 12 can be correspondingly provided. In an embodiment that the case 11 is provided with openings in two opposite ends, two end covers 12 can be correspondingly arranged, the two end covers 12 seal the two openings of the case 11 respectively, and the two end covers 12 and the case 11 jointly define the accommodating space.

In some embodiments, the battery cell 10 may further include an electrode terminal 3, the electrode terminal 3 is disposed on the shell 1, and the electrode terminal 3 is used to be electrically connected with a tab 21 of the electrode assembly 2 to input or output electric energy of the battery cell 10. The electrode terminal 3 can be arranged on the case 11 of the shell 1, or arranged on the end cover 12 of the shell 1. The electrode terminal 3 can be directly connected to the tab 21, for example, the electrode terminal 3 is directly welded with the tab 21. The electrode terminal 3 can also be indirectly connected to the tab 21, for example, the electrode terminal 3 is indirectly connected to the tab 21 by means of a current collecting member 4. The current collecting member 4 can be a metal conductor, such as copper, iron, aluminum, steel, and aluminum alloy.

As an example, as shown in FIG. 3, if the opening is formed in one end of the case 11, one end cover 12 is arranged in the shell 1, and one end cover 12 seals one opening of the case 11. Two electrode terminals 3 are arranged on the end cover 12, and the two electrode terminals 3 are respectively a positive electrode terminal and a negative electrode terminal; a positive tab and a negative tab are formed at one end of the electrode assembly 2 facing the end cover 12; and the positive electrode terminal is connected to the positive tab by means of one current collecting member 4, and the negative electrode terminal is electrically connected to the negative tab by means of the other current collecting member 4.

In some embodiments, with reference to FIG. 3, the battery cell 10 can further include an insulating member 5, the insulating member 5 is a component for isolating the case 11 from the electrode assembly 2, and the insulating isolation of the case 11 and the electrode assembly 2 is realized by the insulating member 5. The insulating member 5 is made of an insulating material, and the materials of the insulating member 5 include but are not limited to plastic, rubber and the like.

As an example, the insulating member 5 coats the outer side of the electrode assembly 2 in the circumferential direction of the opening of the case 11. One or a plurality of electrode assemblies 2 may arranged in the shell 1. If one electrode assembly 2 is arranged, the insulating member 5 is coated around the electrode assembly 2; and if the plurality of electrode assemblies 2 are arranged, one insulating member 5 may be provided corresponding to one electrode assembly 2, each insulating member 5 is coated around one electrode assembly 2, or the plurality of electrode assemblies 2 may be used as an integral component, and the insulating member 5 is coated around the integral member.

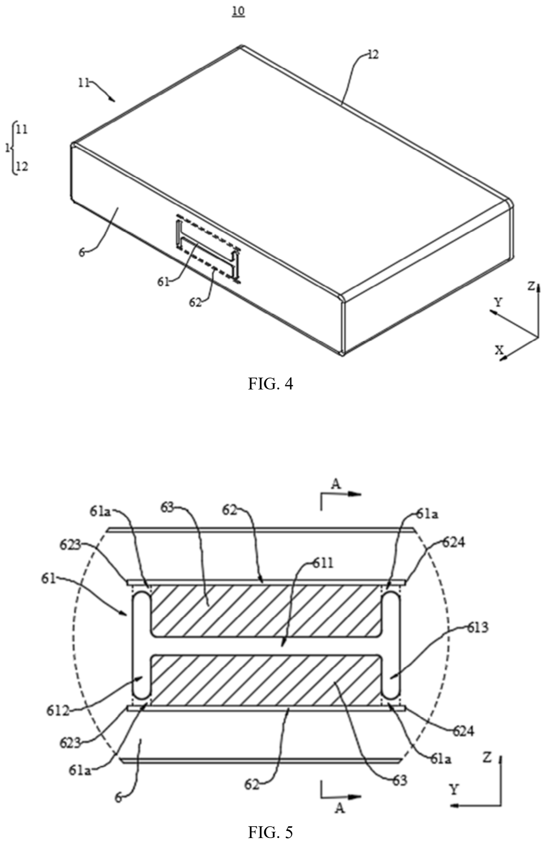

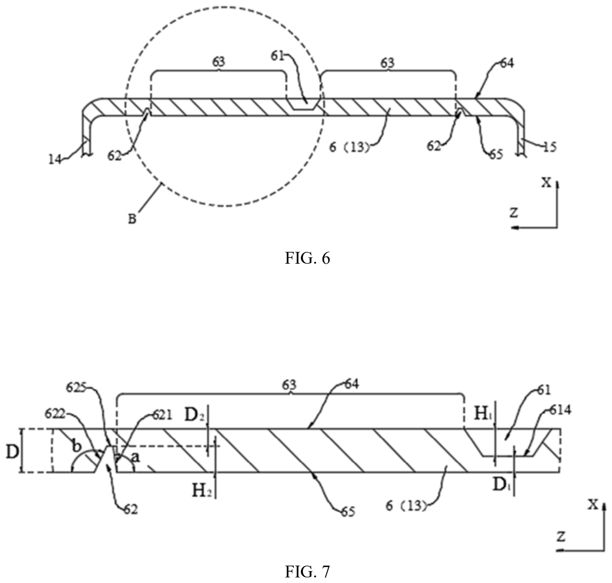

Referring to FIGS. 4 to 6, FIG. 4 is an assembly view of the battery cell 10 shown in FIG. 3, FIG. 5 is a partial view of the shell 1 shown in FIG. 4, and FIG. 6 is an A-A cross-sectional view of the shell 1 shown in FIG. 5. An embodiment of the present application provides a battery cell 10, including a shell 1 and a pressure relief component 6, where the shell 1 includes a first wall portion 13, the pressure relief component 6 is disposed on the first wall portion 13, and the pressure relief component 6 includes a first groove 61 and a second groove 62; in a thickness direction of the first wall portion 13, a projection of the first groove 61 and a projection of at least one second groove 62 jointly define at least one predetermined pressure relief region 63; and the pressure relief component 6 is configured to be capable of rupturing along at least a part of the first groove 61 when the battery cell 10 undergoes pressure relief, and the second groove 62 is configured to guide at least a part of the predetermined pressure relief region 63 to be flipped to open the at least a part of the predetermined pressure relief region 63.

Here, a volume of the first groove 61 is V, and a sum of areas of all the predetermined pressure relief regions 63 is A, with 0.05 mm ≤ V/A ≤ 0.5 mm.

The shell 1 includes a plurality of wall portions, which jointly define an accommodating space inside the shell 1 to accommodate an electrode assembly 2, electrolyte and other components which may be components such as a current collecting member 4 and an insulating member 5. Among the plurality of wall portions of the shell 1, one wall portion may be the first wall portion 13; alternatively, the plurality of wall portions may be all the first wall portion 13. It can be understood that, taking the shell 1 in a cuboid shape as an example, there are six wall portions in the shell 1, and one, two, three, four, five or six wall portions may be the first wall portion 13. In the shell 1, at least one end cover 12 may be the first wall portion 13; alternatively, at least one wall portion in the case 11 may be the first wall portion 13.

The pressure relief component 6 is a component in the battery cell 10 for relieving the pressure inside the battery cell 10. The pressure relief component 6 may be integrally formed with the shell 1. It can be understood that a part of the shell 1 may be used as the pressure relief component 6. For example, the pressure relief component 6 is integrally formed with the end cover 12 of the shell 1. As another example, the pressure relief component 6 is integrally formed with one wall portion of a case 11 of the shell 1. The pressure relief component 6 may also be disposed separately from the shell 1. The pressure relief component 6 and the shell 1 are two components produced separately, and the pressure relief component 6 is mounted on the shell 1. For example, the pressure relief component 6 is mounted on the end cover 12 of the shell 1. As another example, the pressure relief component 6 is mounted on the case 11 of the shell 1.

The first groove 61 is a pressure relief groove provided in the pressure relief component 6. When the pressure inside the battery cell 10 reaches a burst pressure of the pressure relief component 6, the pressure relief component 6 can rupture along at least a part of the first groove 61 to open the predetermined pressure relief region 63. It can be understood that when the battery cell 10 undergoes pressure relief, the pressure relief component 6 can rupture along the entire first groove 61 or along a part of the first groove 61. The first groove 61 may be formed in various ways, such as stamping, milling, etc. The first groove 61 may include at least one groove segment, and a cross section of the groove segment may have various shapes, such as rectangular shape, a trapezoid shape, etc. The cross section of the groove segment is perpendicular to an extension direction of the groove segment. The first groove 61 may have various shapes. For example, the first groove 61 is a groove extending along an arc trajectory. As another example, the first groove 61 includes a plurality of groove segments, and the plurality of groove segments may form a U-shaped, H-shaped, V-shaped, Y-shaped, X-shaped, T-shaped or the like structure.

The second groove 62 is a flipping groove provided in the pressure relief component 6. When the pressure relief component 6 ruptures along at least a part of the first groove 61, the second groove 62 can guide at least a part of the predetermined pressure relief region 63 to be flipped. That is, the second groove 62 helps flip the predetermined pressure relief region 63, making it easier for the predetermined pressure relief region 63 to be flipped to the exterior of the battery cell 10, thereby quickly opening the predetermined pressure relief region 63. The second groove 62 may guide the entire predetermined pressure relief region 63 to be flipped; alternatively, the second groove 62 may guide only a part of the predetermined pressure relief region 63 to be flipped. During pressure relief of the battery cell 10, the pressure relief component 6 can rupture along at least a part of the first groove 61, and generally does not rupture along the second groove 62. A minimum thickness of a remaining portion of the region of the pressure relief component 6 on which the first groove 61 is disposed may be less than a minimum thickness of a remaining portion of the region of the pressure relief component 6 on which the second groove 62 is disposed, so that the region of the pressure relief component 6 on which the first groove 61 is disposed is more likely to rupture than the region of the pressure relief component 6 on which the second groove 62 is disposed. The second groove 62 may be formed in various ways, such as stamping, milling, etc. The second groove 62 may have various shapes. For example, the second groove 62 is a groove extending along an arc trajectory. As another example, the second groove 62 is a groove extending along a linear trajectory. A cross section of the second groove 62 may have various shapes, such as rectangular shape, a trapezoid shape, etc.

The second groove\ 62 not only has the function of helping flip the predetermined pressure relief region 63, but also has a buffering function. The second groove 62 can absorb the surplus material extruded at the time of forming the first groove 61, which reduces the risk that the surplus material extruded from the first groove 61 diffuses to a surface close to the shell 1 in a width direction Z of the second groove, and improves the flatness of the surface of the shell 1 in the width direction Z of the second groove. When the shell 1 of the battery cell 10 is deformed by internal and external impact forces in the width direction Z of the second groove, the deformation energy of the shell 1 can also be absorbed by the second groove 62, thereby reducing the influence of expansion and deformation of the battery cell 10 in the width direction Z of the second groove on the pressure relief component 6.

The second groove 62 and the first groove 61 may be disposed on a same surface of the pressure relief component 6 in the thickness direction X of the first wall portion, or the second groove 62 and the first groove 61 may also be respectively disposed on opposite surfaces of the pressure relief component 6 in the thickness direction X of the first wall portion. The second groove 62 and the first groove 61 may be directly connected, or the second groove 62 and the first groove 61 may also not be in contact with each other. If the second groove 62 and the first groove 61 are directly connected, the second groove 62 and the first groove 61 may be disposed on the same surface of the pressure relief component 6, and the second groove 62 and the first groove 61 may jointly enclose the predetermined pressure relief region 63. If the second groove 62 and the first groove 61 are not in contact with each other, the projection of the second groove 62 and the projection of the first groove 61 may partially overlap or may not overlap in the thickness direction X of the first wall portion. If the projection of the second groove 62 does not overlap with the projection of the first groove 61 in the thickness direction X of the first wall portion, the projection of the second groove 62, a projection of an extension line 62a of the second groove and the projection of the first groove 61 jointly enclose the predetermined pressure relief region 63. Alternatively, the projection of the first groove 61, a projection of an extension line 61a of the first groove and the projection of the second groove 62 jointly enclose the predetermined pressure relief region 63. Alternatively, the projection of the first groove 61, the projection of the extension line 61a of the first groove, the projection of the second groove 62 and the projection of the extension line 62a of the second groove jointly enclose the predetermined pressure relief region 63.

The predetermined pressure relief region 63 is a region of the pressure relief component 6 defined by the projections of the first groove 61 and the at least one second groove 62 in the thickness direction X of the first wall portion. In the thickness direction X of the first wall portion, the projection of the first groove 61 and the projection of one second groove 62 may define one predetermined pressure relief region 63. For example, the first groove 61 is a V-shaped groove, and the second groove 62 is a linear groove. In the thickness direction X of the first wall portion, the projection of the first groove 61 and the projection of one second groove 62 may define a plurality of predetermined pressure relief regions 63. For example, the first groove 61 is an H-shaped groove, the second groove 62 is an annular groove, and the first groove 61 is located in a circular region defined by the second groove 62. In the thickness direction X of the first wall portion, the projection of the first groove 61 and projections of a plurality of second grooves 62 may also define one predetermined pressure relief region 63. For example, the first groove 61 is an H-shaped groove, the second grooves 62 are linear grooves, and the plurality of second grooves 62 are arranged at intervals in an extension direction of the second grooves 62 and are located on the same side as the first groove 61. In the thickness direction X of the first wall portion, the projection of the first groove 61 and the projections of the plurality of second grooves 62 define three more predetermined pressure relief regions 63. For example, the first groove 61 is an H-shaped groove, the second grooves 62 are linear grooves, and the first groove 61 is located between the two second grooves 62.

The predetermined pressure relief region 63 may be in a triangular shape, a rectangular shape, a trapezoid shape, a semi-circular shape, etc. In the thickness direction X of the first wall portion, the pressure relief component 6 has a first surface 64 and a second surface 65 opposite to each other. One of the first surface 64 and the second surface 65 is an outer surface of the pressure relief component 6, and the other is an inner surface of the pressure relief component 6. Taking the first groove 61 being disposed on the first surface 64 as an example, a part of the first surface 64 located in the predetermined pressure relief region 63 is a measurement surface of the predetermined pressure relief region 63. The area of the predetermined pressure relief region 63 is the area of the measurement surface of the predetermined pressure relief region 63. Taking the projection of the first groove 61, the projection of the extension line 61a of the first groove, and the projection of the second groove 62 jointly enclosing the predetermined pressure relief region 63 as an example, an edge of the measurement surface of the predetermined pressure relief region 63 may be formed by connecting a projection of an inner edge of a groove mouth of the second groove 62 (an edge of the groove mouth of the second groove 62 on one side close to the predetermined pressure relief region 63) in the first surface 64, a projection of an inner edge of a groove mouth of the first groove 61 (an edge of the groove mouth of the first groove 61 on one side close to the predetermined pressure relief region 63) in the first surface 64, and a projection of an extension line of the inner edge of the groove mouth of the first groove 61 in the first surface 64, and the area of the predetermined pressure relief region 63 may be obtained by measuring the area of the measurement surface of the predetermined pressure relief region 63. Taking the first groove 61 being disposed on the second surface 65 as an example, a part of the second surface 65 located in the predetermined pressure relief region 63 is a measurement surface of the predetermined pressure relief region 63. The area of the predetermined pressure relief region 63 is the area of the measurement surface of the predetermined pressure relief region 63. Taking the projection of the first groove 61, the projection of the extension line 61a of the first groove, and the projection of the second groove 62 jointly enclosing the predetermined pressure relief region 63 as an example, an edge of the measurement surface of the predetermined pressure relief region 63 may be formed by connecting a projection of an inner edge of a groove mouth of the second groove 62 (an edge of the groove mouth of the second groove 62 on one side close to the predetermined pressure relief region 63) in the second surface 65, a projection of an inner edge of a groove mouth of the first groove 61 (an edge of the groove mouth of the first groove 61 on one side close to the predetermined pressure relief region 63) in the second surface 65, and a projection of an extension line of the inner edge of the groove mouth of the first groove 61 in the second surface 65, and the area of the predetermined pressure relief region 63 may be obtained by measuring the area of the measurement surface of the predetermined pressure relief region 63. It should be noted that if the first groove 61 and the second groove 62 are both disposed on the first surface 64, the groove mouth of the first groove 61 and the groove mouth of the second groove 62 are both formed on the first surface 64; if the first groove 61 and the second groove 62 are both disposed on the second surface 65, the groove mouth of the first groove 61 and the groove mouth of the second groove 62 are both formed on the second surface 65; if the first groove 61 is disposed on the first surface 64 and the second groove 62 is disposed on the second surface 65, the groove mouth of the first groove 61 is formed on the first surface 64 and the groove mouth of the second groove 62 is formed on the second surface 65; and if the first groove 61 is disposed on the second surface 65 and the second groove 62 is disposed on the first surface 64, the groove mouth of the first groove 61 is formed on the second surface 65 and the groove mouth of the second groove 62 is formed on the first surface 64.

As an example, in the embodiment shown in FIG. 4 to FIG. 6, the thickness direction X of the first wall portion is parallel to a first direction, the wall portion on which the case 11 is opposite to the end cover 12 is the first wall portion 13, the first wall portion 13 serves as the pressure relief component 6, the first groove 61 and the second groove 62 are respectively disposed on opposite surfaces of the pressure relief component 6 in the thickness direction X of the first wall portion, the first groove 61 is H-shaped, the second groove 62 extends along a linear trajectory, an extension direction Y of the second groove is parallel to a second direction, the width direction Z of the second groove is parallel to a third direction, and the first direction, the second direction and the third direction are perpendicular to each other. The first direction is a height direction of the battery cell 10, the second direction is a length direction of the battery cell 10, and the third direction is a thickness direction of the battery cell 10. In FIG. 5, there are two predetermined pressure relief regions 63, and a sum of the areas of the two shaded parts shown in FIG. 5 is the sum of the areas of the two predetermined pressure relief regions 63.

The volume of the first groove 61 is a volume of an internal space of the first groove 61. If the first groove 61 includes only one groove segment, a volume of the groove segment is the volume of the first groove 61. If the first groove 61 includes a plurality of groove segments, a sum of the volumes of the plurality of groove segments is the volume of the first groove 61. Taking the first groove 61 including a plurality of groove segments as an example, the volume of each groove segment may be measured first, and then the volumes of all groove segments may be added to calculate the volume of the first groove 61. For individual groove segments, a length of the groove segment may be measured first, then the pressure relief component 6 is cut in a direction perpendicular to an extension direction of the groove segment, and an area of a cross section of the groove segment is measured on the cut surface of the pressure relief component 6 (the cut surface is as close as possible to a midpoint of the groove segment in the extension direction), and then the volume of the groove segment may be calculated by multiplying the length of the groove segment by the area of the cross section of the groove segment. Taking the cross section of the groove segment having a rectangular shape as an example, a groove depth and a groove width of the groove segment may be measured on an upper side of the cut surface of the pressure relief component 6, and then the groove depth and the groove width of the groove segment may be multiplied to calculate the area of the cross section of the groove segment. It should be noted that if the groove segment has fillets or chamfers at both ends in the extension direction, the volume of the groove segment calculated by multiplying the length of the groove segment and the area of the cross section of the groove segment is a calculated volume, and an actual volume of the groove segment may be slightly smaller than the calculated volume, but the calculated volume of the groove segment may still be obtained by multiplying the length of the groove segment and the area of the cross section of the groove segment, and the calculated volume is approximately equal to the actual volume of the groove segment. That is, when the volume of the groove segment is actually measured, the calculated volume of the groove segment obtained by the calculation can be regarded as the actual volume of the groove segment.

It should be noted that in the embodiment of the present application, the sum of the areas of all the predetermined pressure relief regions 63 is A, which does not limit the number of the predetermined pressure relief regions 63 to be multiple, and there may be one or more predetermined pressure relief regions 63. If there is one predetermined pressure relief region 63, the area of the predetermined pressure relief region 63 is the sum of the areas of all the predetermined pressure relief regions 63.

V/A may be any or a value in a range between any two of 0.05 mm, 0.06 mm, 0.08 mm, 0.1 mm, 0.15 mm, 0.2 mm, 0.25 mm, 0.3 mm, 0.35 mm, 0.38 mm, 0.4 mm, 0.42 mm, 0.45 mm, 0.46 mm, 0.48 mm, 0.5 mm, etc.

In the embodiment of the present application, the pressure relief component 6 is provided with a first groove 61, so that the pressure relief component 6 may rupture along at least a part of the first groove 61 when the battery cell 10 undergoes pressure relief to relieve the internal pressure of the battery cell 10. The pressure relief component 6 is further provided with a second groove 62. The first groove 61 and the second groove 62 jointly define at least one predetermined pressure relief region 63. The second groove 62 is capable of guiding at least a part of the predetermined pressure relief region 63 to be flipped to open the at least a part of the predetermined pressure relief region 63 for pressure relief, and the second groove 62 assists the predetermined pressure relief region 63, so that the predetermined pressure relief region 63 is flipped more easily, which reduces the difficulty of flipping the predetermined pressure relief region 63, and increases the rate of opening the predetermined pressure relief region 63. With V/A ≤ 0.5 mm, when the first groove 61 is formed, the surplus material extruded from a region of the pressure relief component 6 on which the first groove 61 is disposed can be shared by a larger predetermined pressure relief region 63, which decreases the stacking amount per unit area of the predetermined pressure relief region 63, so that a height of a material stacking protrusion formed on a surface of the predetermined pressure relief region 63 due to material extrusion on the region of the pressure relief component 6 where the first groove 61 is disposed is not too large, which, on the one hand, improves flatness of the surface of the pressure relief component 6 on which the first groove 61 is disposed, and on the other hand, reduces release of a large residual stress during normal use of the battery cell 10 due to an excessive height of the material stacking protrusion of the predetermined pressure relief region 63 that may result in a risk of reducing fatigue strength of the pressure relief component 6, thereby improving service life of the battery cell 10. With V/A ≥ 0.05 mm, the height of the material stacking protrusion formed on the surface of the predetermined pressure relief region 63 due to the material extrusion on the region of the pressure relief component 6 where the first groove 61 is disposed is not too small, and the residual stress released by the material stacking protrusion helps the pressure relief component 6 to rupture along the first groove 61 in a more timely manner when the battery cell 10 thermally runs away, which improves the timeliness of pressure relief of the battery cell 10 and reduces the risk of explosion of the battery cell 10, thereby improving the reliability of the battery cell 10. Therefore, meeting 0.05 mm ≤ V/A ≤ 0.5 mm can improve the flatness of the surface of the pressure relief component 6 on which the first groove 61 is disposed and improve production quality of the battery cell 10, and take into account the requirements for the service life of the battery cell 10 during normal use and the reliability requirements of the battery cell 10 during thermal runaway.

In some embodiments, 0.1 mm ≤ V/A ≤ 0.35 mm is met.

In the embodiment, V/A may be any or a value in a range between any two of 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, 0.25 mm, 0.26 mm, 0.27 mm, 0.28 mm, 0.29 mm, 0.3 mm, 0.31 mm, 0.32 mm, 0.33 mm, 0.34 mm, 0.35 mm, etc.

In the embodiment, meeting V/A ≤ 0.35 mm, on the one hand, further improves the flatness of the surface of the pressure relief component 6 on which the first groove 61 is disposed, and on the other hand, further reduces the influence of the material stacking protrusion in the predetermined pressure relief region 63 on the fatigue strength of the pressure relief component 6; and meeting V/A ≥ 0.1 mm further improves timeliness of pressure relief of the battery cell 10, and further reduces the risk of explosion of the battery cell 10.

In some embodiments, 82 mm³ ≤ V ≤ 450 mm³ is met.

In the embodiment, V may be any or a value in a range between any two of 82 mm³, 90 mm³, 100 mm³, 115 mm³, 120 mm³, 150 mm³, 153 mm³, 180 mm³, 184 mm³, 200 mm³, 210 mm³, 250 mm³, 265 mm³, 285 mm³, 300 mm³, 350 mm³, 400 mm³, 450 mm³, etc.

In the embodiment, with V ≤ 450 mm³, the extrusion amount at the time of forming the first groove 61 is not too large, which reduces forming force on the pressure relief component 6 at the time of forming the first groove 61, and reduces the risk of damaging the pressure relief component 6 at the time of forming the first groove 61, and with V ≥ 82 mm³, the extrusion amount at the time of forming the first groove 61 is not too small, making it easier to meet the depth, width, and length requirements of the first groove 61, and reducing the difficulty of forming the first groove 61.

In some embodiments, 115 mm³ ≤ V ≤ 265 mm³ is met.

In the embodiment, V may be any or a value in a range between any two of 115 mm³, 120 mm³, 125 mm³, 130 mm³, 135 mm³, 140 mm³, 145 mm³, 150 mm³, 153 mm³, 155 mm³, 160 mm³, 165 mm³, 170 mm³, 175 mm³, 180 mm³, 184 mm³, 185 mm³, 190 mm³, 195 mm³, 200 mm³, 205 mm³, 210 mm³, 215 mm³, 220 mm³, 225 mm³, 230 mm³, 235 mm³, 240 mm³, 245 mm³, 250 mm³, 255 mm³, 260 mm³, 265 mm³, etc.

In the embodiment, meeting V ≤ 265 mm³ further decreases the extrusion amount at the time of forming the first groove 61, further reduces the forming force on the pressure relief component 6 at the time of forming the first groove 61, and reduces the risk of damaging the pressure relief component 6 at the time of forming the first groove 61; and meeting V ≥ 115 mm³ further increases the extrusion amount at the time of forming the first groove 61, and further reduces the difficulty of forming the first groove 61.

In some embodiments, 160 mm² ≤ A ≤ 1500 mm² is met.

In the embodiment, A may be any or a value in a range between any two of 160 mm², 200 mm², 250 mm², 300 mm², 320 mm², 400 mm², 450 mm², 500 mm², 550 mm², 600 mm², 650 mm², 700 mm², 750 mm², 800 mm², 850 mm², 875 mm², 890 mm², 900 mm², 950 mm², 1000 mm², 1050 mm², 1100 mm², 1150 mm², 1200 mm², 1250 mm², 1300 mm², 1350 mm², 1400 mm², 1437 mm², 1450 mm², 1500 mm², etc.

In the embodiment, with A ≤ 1500 mm², the area of the predetermined pressure relief region 63 is not too large, thereby reducing the risk that the pressure relief component 6 ruptures along the first groove 61 in advance due to deformation of the predetermined pressure relief region 63 caused by pressure changes inside the battery cell 10; and with A ≥ 160 mm², the pressure relief component 6 has a sufficiently large pressure relief area, increasing the pressure relief rate of the battery cell 10.

In some embodiments, 400 mm² ≤ A ≤ 1200 mm² is met.

In the embodiment, A may be any or a value in a range between any two of 400 mm², 425 mm², 450 mm², 475 mm², 500 mm², 525 mm², 550 mm², 575 mm², 600 mm², 625 mm², 650 mm², 675 mm², 700 mm², 725 mm², 750 mm², 775 mm², 800 mm², 825 mm², 850 mm², 857 mm², 875 mm², 880 mm², 900 mm², 925 mm², 950 mm², 975 mm², 1000 mm², 1025 mm², 1050 mm², 1075 mm², 1100 mm², 1125 mm², 1150 mm², 1175 mm², 1200 mm², etc.

In the embodiment, meeting A ≤ 1200 mm² further reduces the risk that the pressure relief component 6 ruptures along the first groove 61. Meeting A ≥ 400 mm² further increases the pressure relief rate of the battery cell 10.

In some embodiments, referring to FIG. 6 and FIG. 7. FIG. 7 is a partial enlarged view of a part B in FIG. 6. In the thickness direction X of the first wall portion, the pressure relief component 6 has a first surface 64 and a second surface 65 opposite to each other, and the second groove 62 is recessed from the second surface 65 toward the first surface 64. In the width direction Z of the second groove, the second groove 62 includes a first groove side surface 621 and a second groove side surface 622 provided opposite to each other and connected with the second surface 65, the first groove side surface 621 is closer to the predetermined pressure relief region 63 than the second groove side surface 622, an angle formed by the first groove side surface 621 and the second surface 65 is a, an angle formed by the second groove side surface 622 and the second surface 65 is b, with 90°≤ a < b < 180°, and the width direction Z of the second groove is perpendicular to the thickness direction X of the first wall portion.

When the angle a and the angle b are measured, the pressure relief component 6 may be cut in a direction perpendicular to the extension direction of the second groove 62, and then the angle between the first groove side surface 621 and the second surface 65 and the angle between the second groove side surface 622 and the second surface 65 may be measured on the cut surface using a measuring tool. The first groove side surface 621, the second groove side surface 622 and the second surface 65 may also be scanned and imaged on the cut surface by a CT scanning device, and then the angle formed by the first groove side surface 621 and the second surface 65 and the angle formed by the second groove side surface 622 and the second surface 65 may be measured.

One of the first surface 64 and the second surface 65 may be an outer surface of the pressure relief component 6, and the other may be an inner surface of the pressure relief component 6. The outer surface of the pressure relief component 6 faces an exterior of the battery cell 10, and the inner surface of the pressure relief component 6 faces an interior of the battery cell 10. The first surface 64 and the second surface 65 may be flat surfaces, and the first surface 64 and the second surface 65 may be disposed in parallel or at a non-zero angle. The second groove 62 is recessed from the second surface 65 toward the first surface 64. That is, the second groove 62 is disposed on the second surface 65. In this case, the first groove 61 may be disposed on the second surface 65 or the first surface 64. As an example, in the embodiment shown in FIG. 7, the first surface 64 is the outer surface of the pressure relief component 6, the first groove 61 is disposed on the first surface 64, and the second groove 62 is disposed on the second surface 65.

The first groove side surface 621 may be a flat surface or an arc surface. If the first groove side surface 621 is an arc surface, an angle between a connecting line of both ends of the first groove side surface 621 in a depth direction of the second groove 62 and the second surface 65 is the angle a between the first groove side surface 621 and the second surface 65. The second groove side surface 622 may be a flat surface or an arc surface. If the second groove side surface 622 is an arc surface, an angle between a connecting line of both ends of the second groove side surface 622 in a depth direction of the second groove 62 and the second surface 65 is the angle b between the second groove side surface 622 and the second surface 65. The first groove side surface 621 and the second surface 65 may be directly connected or indirectly connected. For example, the first groove side surface 621 and the second surface 65 smoothly transition through an arc surface. The second groove side surface 622 and the second surface 65 may be directly connected or indirectly connected. For example, the second groove side surface 622 and the second surface 65 smoothly transition through an arc surface. As an example, in the embodiment shown in FIG. 7, the second surface 65, the first groove side surface 621 and the second groove side 622 are all flat surfaces.

The first groove side surface 621 and the second surface 65 may be disposed at an obtuse angle or a right angle, and the second groove side surface 622 and the second surface 65 may be disposed at an obtuse angle. As an example, b-a ≥ 3° is met.

The second groove 62 may further include a groove bottom surface. The groove bottom surface 625 of the second groove connects the first groove side surface 621 and the second groove side surface 622. The groove bottom surface 625 of the second groove may be a flat surface, or the groove bottom surface 625 of the second groove may be an arc surface. As an example, the width of the second groove 62 gradually decreases in the depth direction of the second groove 62, and the groove bottom surface 625 of the second groove is a flat surface parallel to the second surface 65.

In the embodiment, meeting a < b is equivalent to reducing the angle between the first groove side surface 621 and the second surface 65, which can reduce the stacking amount of the surplus material in the predetermined pressure relief region 63 extruded at the time of forming the second groove 62, thereby reducing the height of the material stacking protrusion formed on the surface of the predetermined pressure relief region 63 due to material extrusion on the region of the pressure relief component 6 where the second groove 62 is disposed, improving the surface flatness of the predetermined pressure relief region 63, reducing the influence of the material stacking protrusion on the predetermined pressure relief region 63, and reducing the risk of premature opening of the predetermined pressure relief region 63 due to uneven surface of the predetermined pressure relief region 63.

In some embodiments, 90° ≤ a ≤ 150° is met.

In the embodiment, a may be any or a value in a range between any two of 90°, 100°, 110°, 120°, 130°, 135°, 140°, 150°, etc.

In the embodiment, meeting 90°≤a≤150° further reduces the angle between the first groove side surface 621 and the second surface 65, further reduces an inclination angle of the first groove side surface 621, and is beneficial to decreasing the stacking amount of the surplus material extruded at the time of forming the second groove 62 in the predetermined pressure relief region.

In some embodiments, 90° ≤ b ≤ 170° is met.

In the embodiment, b may be any or a value in a range between any two of 91°, 95°, 100°, 105°, 110°, 115°, 120°, 125°, 130°, 135°, 140°, 145°, 150°, 155°, 160°, 165°, 170°, etc.

In the embodiment, meeting 90° <b < 170° further reduces the angle between the second groove side surface 622 and the second surface 65, further reduces an inclination angle of the second groove side surface 622, and reduces the difficulty of forming the second groove 62.

In some embodiments, with continued reference to FIG. 5, the pressure relief component 6 is provided with a plurality of second grooves 62. in the thickness direction X of the first wall portion, the projection of the first groove 61 and projections of the plurality of second grooves 62 jointly define a plurality of predetermined pressure relief regions 63, and each predetermined pressure relief regions 63 is disposed corresponding to one or more second grooves 62.

In the thickness direction X of the first wall portion, the projection of the first groove 61 and the projections of the plurality of second grooves 62 may jointly define two, three, four, five or more predetermined pressure relief regions 63. Each predetermined pressure relief regions 63 may be disposed corresponding to at least one second groove 62. That is, each predetermined pressure relief region 63 may be disposed corresponding to one second groove 62, or may be disposed corresponding to a plurality of second grooves 62.

As an example, in the embodiment shown in FIG. 5, the predetermined pressure relief regions 63 are in one-to-one correspondence with the second grooves 62. in the thickness direction X of the first wall portion, the projection of the first groove 61 and the projections of two second grooves 62 jointly define two predetermined pressure relief regions 63, and the two predetermined pressure relief regions 63 are symmetrically disposed.

In the embodiment, the first groove 61 and the plurality of second grooves 62 jointly define a plurality of predetermined pressure relief regions 63. In the case of thermal runaway of the battery cell 10, the plurality of predetermined pressure relief regions 63 all may be opened. When a total pressure relief area of the pressure relief component 6 is constant, the rate of opening the predetermined pressure relief regions 63 can be increased to achieve pressure relief more quickly.

In some embodiments, with continued reference to FIGS. 5 to 7, in the thickness direction X of the first wall portion, the projection of the second groove 62 does not overlap with the projection of the first groove 61.

It can be understood that in the thickness direction X of the first wall portion, the projection of the second groove 62 and the projection of the first groove 61 have no overlapping portion.

In the thickness direction X of the first wall portion, the projection of the extension line 62a of the second groove may be connected with the projection of the first groove 61; alternatively, the projection of the extension line 61a of the first groove may be connected with the projection of the second groove 62; alternatively, the projection of the extension line 61a of the first groove may be connected with the projection of the extension line 62a of the second groove.

The second groove 62 and the first groove 61 may be disposed on the same side of the pressure relief component 6 in the thickness direction X of the first wall portion. For example, the second groove 62 and the first groove 61 are both disposed on the first surface 64. As another example, the second groove 62 and the first groove 61 are both disposed on the second surface 65. The second groove 62 and the first groove 61 may also be disposed on different sides of the pressure relief component 6 in the thickness direction X of the first wall portion. For example, the first groove 61 is disposed on the first surface 64, and the second groove 62 is disposed on the second surface 65.

In the embodiment, the projection of the second groove 62 in the thickness direction X of the first wall portion does not overlap with the projection of the first groove 61 in the thickness direction X of the first wall portion, which can reduce the mutual influence of the first groove 61 and the second groove 62 during machining, and reduce the risk that the first groove 61 and the second groove 62 communicate with each other during machining.

In some embodiments, with continued reference to FIG. 5 to 7, the second groove 62 is spaced apart from the first groove 61 in the width direction Z of the second groove, and the width direction Z of the second groove is perpendicular to the thickness direction X of the first wall portion.

The second groove 62 is spaced apart from the first groove 61 in the width direction Z of the second groove, that is, the projection of the second groove 62 in the thickness direction X of the first wall portion is at a distance from the projection of the first groove 61 in the thickness direction X of the first wall portion in the width direction Z of the second groove. In the embodiment, the second groove 62 and the first groove 61 may be located on the same side of the pressure relief component 6 in the thickness direction X of the first wall portion, or may be located on opposite sides of the pressure relief component 6 in the thickness direction X of the first wall portion. It can be understood that the projection of the second groove 62 in the thickness direction X of the first wall portion and the projection of the first groove 61 in the thickness direction X of the first wall portion are spaced apart in the width direction Z of the second groove.

As an example, in the embodiment shown in FIG. 6, the shell 1 includes a first wall portion 13, a second wall portion 14, and a third wall portion 15. In the width direction Z of the second groove, the second wall portion 14 and the third wall portion 15 are disposed opposite to each other, the first wall portion 13 connects the second wall portion 14 and the third wall portion 15, and the first wall portion 13 is the pressure relief component 6. The first wall portion 13 is provided with two second grooves 62. in the width direction Z of the second groove, one second groove 62 is located between the first groove 61 and the second wall portion 14, and the other second groove 62 is located between the first groove 61 and the third wall portion 15.

In the embodiment, the second groove 62 is spaced apart from the first groove 61 in the width direction Z of the second groove, which can realize that the projection of the second groove 62 in the thickness direction X of the first wall portion does not overlap with the projection of the first groove 61 in the thickness direction X of the first wall portion, which, on the one hand, can reduce the mutual influence of the first groove 61 and the second groove 62 during machining, and on the other hand, can reduce the influence of residual stress between the region of the pressure relief component 6 on which the first groove 61 is disposed and the region of the pressure relief component 6 on which the second groove 62 is disposed, and can reduce a risk that a rupture generated by rupturing of the pressure relief component 6 along the first groove 61 spreads to the second groove 62 and accordingly the pressure relief component 6 ruptures along the second groove 62.

In some embodiments, with continued reference to FIG. 5, in the thickness direction X of the first wall portion, both ends of the projection of the second groove 62 in the extension direction respectively extend beyond both ends of the projection of the first groove 61.

In the thickness direction X of the first wall portion, the projection of the second groove 62 has two opposite ends in the extension direction, which are respectively a first end 623 and a second end 624. The two ends of the projection of the second groove 62 in the extension direction respectively extend beyond both ends of the projection of the first groove 61, that is, both ends of the projection of the first groove 61 are located between the first end 623 and the second end 624 in an extension direction of the projection of the second groove 62. The extension direction of the projection of the second groove 62 in the thickness direction X of the first wall portion is parallel to the extension direction Y of the second groove. In the extension direction Y of the second groove, a length of the second groove 62 is greater than a length of the first groove 61 (a maximum span of the first groove 61 in the extension direction Y of the second groove).

In the embodiment, the two ends of the projection of the second groove 62 in the thickness direction X of the first wall portion in the extension direction respectively extend beyond both ends of the projection of the first groove 61 in the thickness direction X of the first wall portion, so that the second groove 62 is longer, enhancing the auxiliary flipping effect of the second groove 62 on the predetermined pressure relief region 63. In addition, this structure can also improve a separation effect of the second groove 62 on a surface of the battery cell 10 in the width direction Z of the second groove (an outer surface of the second wall portion 14 or an outer surface of the third wall portion 15) and the first groove 61, improve an absorption effect of the second groove 62 on the surplus material extruded at the time of forming the first groove 61, improve the flatness of the surface of the battery cell 10 in the width direction Z of the second groove, and can improve the blocking effect of the second groove 62 on the deformation energy of the battery cell 10 when the battery cell 10 is subject to internal and external impact forces, and reduce the influence of expansion of the battery cell 10 on the pressure relief component 6.

In some embodiments, with continued reference to FIG. 7, a minimum residual thickness of the first groove 61 is D₁, and a minimum residual thickness of the second groove 62 is D₂, with D₁ < D₂.

The minimum residual thickness of the first groove 61 is a minimum thickness of a remaining portion of the pressure relief component 6 after the first groove 61 is disposed, and the remaining portion may be a groove bottom wall of the first groove 61. A thickness of the groove bottom wall of the first groove 61 may be uniform or non-uniform. If the thickness of the groove bottom wall of the first groove 61 is non-uniform, a thickness of a thinnest position of the groove bottom wall of the first groove 61 is the minimum residual thickness of the first groove 61. In the embodiment where the first groove 61 includes a plurality of groove segments, the minimum residual thicknesses of all groove segments may be equal, and the minimum residual thickness of any groove segment is the minimum residual thickness of the first groove 61; and if the minimum residual thicknesses of at least two groove segments are not equal, the minimum residual thickness of the groove segment with the smallest minimum residual thickness is the minimum residual thickness of the first groove 61. Here, the minimum residual thickness of the groove segment is a minimum thickness of a remaining portion of the pressure relief component 6 after the groove segment is disposed, and the remaining portion may be the groove bottom wall of the groove segment.

The minimum residual thickness of the second groove 62 is a minimum thickness of a remaining portion of the pressure relief component 6 after the second groove 62 is disposed, and the remaining portion may be a groove bottom wall of the second groove 62. A thickness of the groove bottom wall of the second groove 62 may be uniform or non-uniform. If the thickness of the groove bottom wall of the second groove 62 is non-uniform, a thickness of a thinnest position of the groove bottom wall of the second groove 62 is the minimum residual thickness of the second groove 62.

In the embodiment, with D₁ < D₂, the strength of the region of the pressure relief component 6 on which the first groove 61 is disposed is less than the strength of the region of the pressure relief component 6 on which the second groove 62 is disposed, so that the pressure relief component 6 can preferentially rupture along the first groove 61 to achieve rapid opening of the predetermined pressure relief region 63.

In some embodiments, with continued reference to FIG. 7, in the thickness direction X of the first wall portion, a maximum groove depth of the first groove 61 is H₁, and a maximum groove depth of the second groove 62 is H₂, with H₂ < H₁.

A maximum distance between the groove mouth of the first groove 61 and a groove bottom surface 614 of the first groove in the thickness direction X of the first wall portion is the maximum groove depth of the first groove 61; and a maximum distance between the groove mouth of the second groove 62 and the groove bottom surface 625 of the second groove in the thickness direction X of the first wall portion is the maximum groove depth of the second groove 62.

As an example, the first surface 64 is parallel to the second surface 65, a distance between the first surface 64 and the second surface 65 is D, and a thickness of the pressure relief component 6 is D, with D = D₁ + H₁ = D₂ + H₂.

In the embodiment, with H₂ < H₁, during the production process, the depth of the first groove 61 may be machined deeper than the depth of the second groove 62, thereby achieving a smaller minimum residual thickness of the first groove 61 than the minimum residual thickness of the second groove 62.

In some embodiments, in the thickness direction X of the first wall portion, the maximum groove depth of the first groove 61 is H₁, and the thickness of the pressure relief component 6 is D, with 0.16 ≤ H₁/D < 1.

H₁/D may be any or a value in a range between any two of 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99, etc.

It can be understood that if the pressure relief component 6 and the first wall portion 13 are integrally formed, the first wall portion 13 may be used as the pressure relief component 6, and the thickness of the pressure relief component 6 is the thickness of the first wall portion 13.

In the embodiment, with 0.16 ≤ H₁/D < 1, a ratio of a maximum depth of the first groove 61 to the thickness of the pressure relief component 6 is not too small, so that a burst pressure of the battery cell 10 is not too high, which is beneficial to improving the timeliness of pressure relief of the battery cell 10.

In some embodiments, 0.4 mm ≤ H₁ ≤ 2 mm is met, and 0.8 mm ≤ D ≤ 2.5 mm is met.

H₁ may be any or a value in a range between any two of 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, etc.

D may be any or a value in a range between any two of 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm, etc.

In the embodiment, with 0.4 mm ≤ H₁ ≤ 2 mm and 0.8 mm ≤ D ≤2.5 mm, the maximum depth of the first groove and the thickness of the pressure relief component 6 are within a reasonable range, which has good economy. In the embodiment where the first wall portion 13 is used as the pressure relief component 6, the thickness of the first wall portion 13 is 0.8 mm to 2.5 mm. The thickness of the first wall portion 13 is greater than or equal to 0.8 mm, so that the first wall portion 13 has a sufficient strength. The thickness of the first wall portion 13 is less than or equal to 2 mm, so that the thickness of the first wall portion 13 is not too large. In the case that a volume of the shell 1 is constant, an internal space of the shell 1 may be increased to free up more space for the electrode assembly 2. In the case that the thickness of the first wall portion 13 is controlled within a range from 0.8 mm to 2.5 mm, the maximum groove depth of the first groove 61 is controlled within a range from 0.4 mm to 2 mm, so that the maximum groove depth of the first groove 61 is more matched with the thickness of the pressure relief component 6, so that the pressure relief component 6 has a good pressure relief capability.

In some embodiments, in the thickness direction X of the first wall portion, the pressure relief component 6 has a first surface 64 and a second surface 65 opposite to each other, the first groove 61 is disposed on the first surface 64, and the second groove 62 is disposed on the second surface 65.

The first surface 64 and the second surface 65 are two opposite surfaces of the pressure relief component 6 in the thickness direction X of the first wall portion. The first groove 61 is disposed on the first surface 64, that is, the first groove 61 is recessed from the first surface 64 toward the second surface 65; and the second groove 62 is disposed on the second surface 65, that is, the second groove 62 is recessed from the second surface 65 toward the first surface 64. One of the first surface 64 and the second surface 65 may be the outer surface of the pressure relief component 6, and the other may be the inner surface of the pressure relief component 6. The outer surface of the pressure relief component 6 faces the exterior of the battery cell 10, and the inner surface of the pressure relief component 6 faces the interior of the battery cell 10. The first surface 64 and the second surface 65 may be flat surfaces, and the first surface 64 and the second surface 65 may be disposed in parallel or at a non-zero angle. As an example, in the embodiment shown in FIG. 7, The first surface 64 is parallel to the second surface 65.

As an example, a minimum distance between the groove bottom surface 614 of the first groove and the second surface 65 in the thickness direction X of the first wall portion is equal to the minimum residual thickness of the first groove 61, and a minimum distance between the groove bottom surface 625 of the second groove and the first surface 64 in the thickness direction X of the first wall portion is equal to the minimum residual thickness of the second groove 62. The maximum groove depth of the first groove 61 is equal to a maximum distance between the first surface 64 and the groove bottom surface 614 of the first groove in the thickness direction X of the first wall portion, and the maximum groove depth of the second groove 62 is equal to a maximum distance between the second surface 65 and the groove bottom surface 625 of the second groove in the thickness direction X of the first wall portion.

In the embodiment, the first groove 61 and the second groove 62 are respectively disposed on the first surface 64 and the second surface 65, and the first groove 61 and the second groove 62 are respectively located on both sides of the pressure relief component 6 in the thickness direction X of the first wall portion, so that the first groove 61 and the second groove 62 are respectively machined on both sides of the pressure relief component 6, which is conducive to reducing mutual influence of the first groove 61 and the second groove 62 during machining.

In some embodiments, with continued reference to FIG. 7, the projection of the first groove 61 at least partially overlaps with the projection of the second groove 62 in the width direction Z of the second groove, and the width direction Z of the second groove is perpendicular to the thickness direction X of the first wall portion.

The projection of the first groove 61 in the width direction Z of the second groove and the projection of the second groove 62 in the width direction Z of the second groove may partially overlap or may completely overlap. If the two projections completely overlap, a first protrusion may be provided on the first surface 64 at a position corresponding to the second groove 62, so that the second groove 62 does not penetrate the pressure relief component 6 in the thickness direction X of the first wall portion, and a second protrusion may be provided on the second surface 65 at a position opposite to the first groove 61, so that the first groove 61 does not penetrate the pressure relief component 6 in the thickness direction X of the first wall portion.

It can be understood that the projections of the first groove 61 and the second groove 62 in the width direction Z of the second groove have an overlapping region. It can also be understood that projections of both a groove wall surface (a groove bottom surface and groove side surfaces) of the first groove 61 and a groove wall surface (a groove bottom surface and groove side surfaces) of the second groove 62 in the width direction Z of the second groove at least partially overlap.

It should be noted that if the groove bottom surface 614 of the first groove and the groove bottom surface 625 of the second groove are exactly flush, the projections of the groove bottom surface 614 of the first groove and the groove bottom surface 625 of the second groove in the width direction Z of the second groove overlap, and the overlapping region is a line. In this case, the projection of the first groove 61 partially overlaps the projection of the second groove 62.

In the embodiment, the projections of the first groove 61 and the second groove 62 in the width direction Z of the second groove at least partially overlap, so that the projections of the first groove 61 and the second groove 62 in the width direction Z of the second groove have an overlapping region, which, on the one hand, can improve the absorption effect of the second groove 62 on the surplus material extruded at the time of forming the first groove 61, and reduce the risk that the surplus material extruded from the first groove 61 diffuses to the surface close to the shell 1 in the width direction Z of the second groove that may cause the surface to be uneven, and on the other hand, can improve the absorption effect of the second groove 62 on the deformation energy of the battery cell 10 when the battery cell 10 is deformed by internal and external forces in the width direction of the second groove, and reduce the influence of expansion and deformation of the battery cell 10 in the width direction Z of the second groove on the pressure relief component 6.

In some embodiments, with continued reference to FIG. 7, the bottom surface 625 of the second groove is closer to the first surface 64 than the bottom surface 614 of the first groove in the thickness direction X of the first wall portion.

It can be understood that in the thickness direction X of the first wall portion, the minimum distance between the groove bottom surface 625 of the second groove and the first surface 64 is smaller than a minimum distance between the groove bottom surface 614 of the first groove and the first surface 64.

The groove bottom surface 614 of the first groove may be a flat surface or an arc surface; and the groove bottom surface 625 of the second groove may be a flat surface or an arc surface. As an example, in the embodiment shown in FIG. 7, the groove bottom surface 614 of the first groove and the groove bottom surface 625 of the second groove are both flat surfaces and parallel to the first surface 64 and the second surface 65.

In the embodiment, the groove bottom surface 625 of the second groove is closer to the first surface 64 than the groove bottom surface 614 of the first groove. This structure is conducive to achieving more overlapping regions between the projection of the second groove 62 and the first groove 61 in the width direction Z of the second groove, further improving the absorption effect of the second groove 62 on the surplus material extruded at the time of forming the first groove 61, and further improving the absorption effect of the second groove 62 on the deformation energy of the battery cell 10 when the battery cell 10 is deformed by the internal and external forces in the width direction Z of the second groove.

In some embodiments, in the thickness direction X of the first wall portion, the maximum groove depth of the second groove 62 is H₂, and the minimum residual thickness of the first groove 61 is D₁, with D₁ < H₂.

As an example, the first surface 64 is parallel to the second surface 65, the groove mouth of the second groove 62 is located on the second surface 65, in the thickness direction X of the first wall portion, a portion between the groove bottom surface 614 of the first groove and the second surface 65 is a remaining portion of the first groove 61, a minimum thickness of the remaining portion is the minimum residual thickness of the first groove 61, and the maximum distance between the groove bottom surface 625 of the second groove and the second surface 65 is the maximum groove depth of the second groove 62. The second surface 65 is a measurement reference plane for the maximum groove depth of the second groove 62 and the minimum residual thickness of the first groove 61.

In the embodiment, with D₁ < H₂, this structure is conducive to achieving more overlapping regions between the projections of the second groove 62 and the first groove 61 in the width direction Z of the second groove, further improving the absorption effect of the second groove 62 on the surplus material extruded at the time of forming the first groove 61, and further improving the absorption effect of the second groove 62 on the deformation energy of the battery cell 10 when the battery cell 10 is deformed by the internal and external forces in the width direction Z of the second groove.

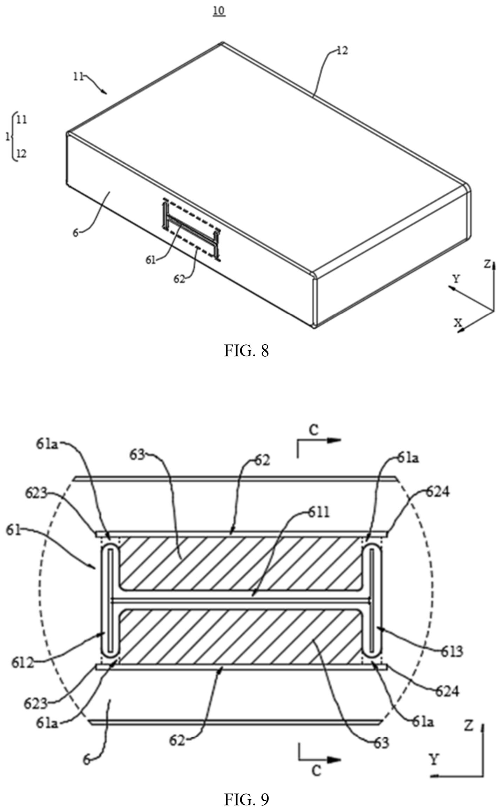

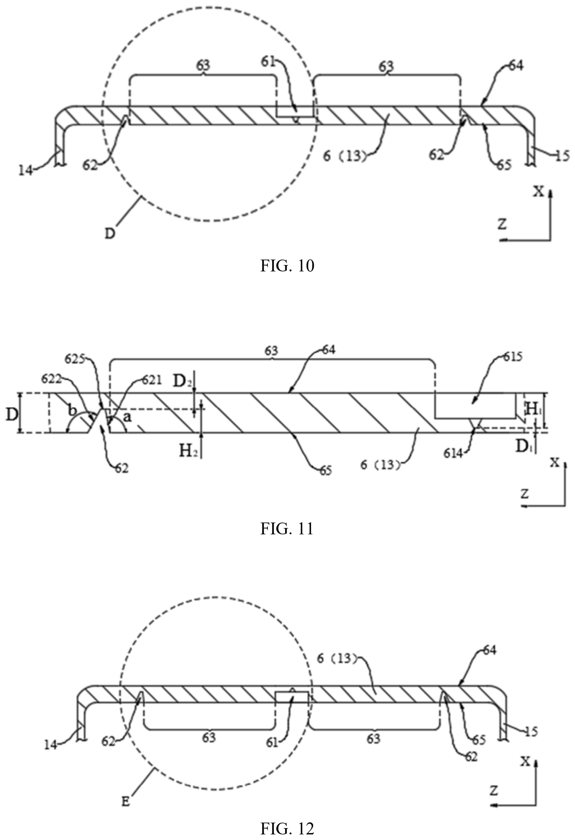

In some embodiments, referring to FIGS 8 to 11, FIG. 8 is an assembly diagram of a battery cell 10 provided in some other embodiments of the present application; FIG. 9 is a partial view of the shell 1 shown in FIG. 8; FIG. 10 is a C-C cross-sectional view of the shell 1 shown in FIG. 9; and FIG. 11 is a partial enlarged view of part D in FIG. 10. The first groove 61 includes a plurality of stages of grooves sequentially provided in a direction from the first surface 64 to the second surface 65, and in the thickness direction X of the first wall portion, among adjacent two stages of grooves, a stage of groove away from the first surface 64 is disposed on a groove bottom surface of the other stage of groove close to the first surface 64. Here, a stage of groove of the plurality of stages of grooves disposed on the first surface 64 is a first-stage groove 615, and in the width direction Z of the second groove, the projection of the second groove 62 at least partially overlaps with a projection of the first-stage groove 615, and the width direction Z of the second groove is perpendicular to the thickness direction X of the first wall portion.

The first groove 61 may have two stages of grooves, three stages of grooves, four stages of grooves, five stages of grooves, etc. It can be understood that the first groove 61 is a stepped groove. In the direction from the first surface 64 to the second surface 65, a groove width of each stage of groove gradually decreases. The volume of the first groove 61 is equal to the sum of volumes of all stages of grooves. As shown in FIG. 11, taking the first groove 61 being a two-stage groove as an example, the two-stage groove includes a first-stage groove 615 and a second-stage groove. During machining, the first-stage groove 615 with a larger width may be machined on the first surface 64 first, and then the second-stage groove with a smaller width may be machined on a groove bottom surface of the first-stage groove 615.

The first-stage groove 615 is a first-stage groove in the first groove 61 which is provided on the first surface 64. In the embodiment where the first groove 61 includes a plurality of groove segments, it can be understood that each groove segment includes a plurality of stages of grooves, and the stage of groove with all groove segments disposed on the first surface 64 constitutes the first-stage groove 615. In the plurality of stages of grooves of the first groove 61, a groove bottom surface of the stage of groove farthest from the first surface 64 is the groove bottom surface 614 of the first groove, a minimum residual thickness of the stage of groove farthest from the first surface 64 is the minimum residual thickness of the first groove 61, and a maximum distance from the groove bottom surface of the stage of groove farthest from the first surface 64 to the first surface 64 is equal to the maximum groove depth of the first groove 61. When the volume of the first groove 61 is calculated, the volume of each groove segment may be calculated first. Since each groove segment is a structure with a plurality of stages of grooves, when the volume of each groove segment is calculated, the volume of each stage of groove in each groove segment may be calculated separately. For each stage of groove in each groove segment, a length and a cross-sectional area of each stage of groove in each groove segment may be measured first, and the length and the cross-sectional area may be multiplied to calculate the volume of each stage of groove in each groove segment. Taking the cross section of a stage of groove in the groove segment being rectangular as an example, the pressure relief component 6 may be cut in a direction perpendicular to an extension direction of the groove segment, a groove depth and a groove width of the stage of groove in the groove segment are measured on the cut surface of the pressure relief component 6 (the cut surface is as close as possible to a midpoint position of the groove segment in the extension direction), and then the cross section of the stage of groove in the groove segment may be calculated by multiplying the groove depth and the groove width. It should be noted that if a stage of groove in the groove segment has fillets or chamfers at both ends in the extension direction, the calculated volume obtained by multiplying the length of the stage of groove and the area of the cross section may be regarded as an actual volume of the stage of groove.

The projection of the second groove 62 in the width direction Z of the second groove and a projection of the first-stage groove 615 in the width direction Z of the second groove may partially overlap or may completely overlap. If the two projections completely overlap, a first protrusion may be provided on the first surface 64 at a position corresponding to the second groove 62, so that the second groove 62 does not penetrate the pressure relief component 6 in the thickness direction X of the first wall portion, and a second protrusion may be provided on the second surface 65 at a position opposite to the first-stage groove 615, so that the first groove 61 does not penetrate the pressure relief component 6 in the thickness direction X of the first wall portion.

It can be understood that the projections of the second groove 62 and the first-stage groove 615 in the width direction Z of the second groove have an overlapping region. It can also be understood that the projections of both the groove wall surface (a groove bottom surface and groove side surfaces) of the second groove 62 and a groove wall surface (a groove bottom surface and groove side surfaces) of the first-stage groove 615 in the width direction Z of the second groove at least partially overlap.

In the embodiment, by disposing the first groove 61 as a plurality of stages of grooves arranged in the thickness direction X of the first wall portion, when the first groove 61 is formed, each stage of groove may be machined one by one in the direction from the first surface 64 to the second surface 65, which reduces the forming depth of each stage of groove, decreases the forming force on the pressure relief component 6 at the time of forming the first groove 61, and reduces the risk of damaging the pressure relief component 6 at the time of forming the first groove 61. Since the projection of the first-stage groove 615 of the first groove 61 in the width direction Z of the second groove at least partially overlaps with the projection of the second groove 62 in the width direction Z of the second groove, the projection of the second groove 62 in the width direction can not only cover a part of the first groove 61, but also cover other stages of grooves in the first groove 61 except the first-stage groove 615, which, on the one hand, can improve the absorption effect of the second groove 62 on the surplus material extruded from the first groove 61 at the time of machining the plurality of stages of grooves, on the other hand, can further improve the absorption effect of the second groove 62 on the deformation energy of the battery cell 10 when the battery cell 10 is deformed by the internal and external impact forces, and reduce the influence of the expansion and deformation of the battery cell 10 in the width direction Z of the second groove on the pressure relief component 6.

In some embodiments, with continued reference to FIG. 11, the bottom surface 625 of the second groove is closer to the first surface 64 than the bottom surface of the first-stage groove 615 in the thickness direction X of the first wall portion.

It can be understood that in the thickness direction X of the first wall portion, the minimum distance between the groove bottom surface 625 of the second groove and the first surface 64 is smaller than a minimum distance between the groove bottom surface of the first-stage groove 615 and the first surface 64.

The groove bottom surface 625 of the second groove may be a flat surface or an arc surface; and the groove bottom surface of the first-stage groove 615 may be a flat surface or an arc surface. As an example, in the embodiment shown in FIG. 11, the groove bottom surface of the first-stage groove 615 and the groove bottom surface 625 of the second groove are both flat surfaces and parallel to the first surface 64 and the second surface 65.

In the embodiment, the projection of the second groove 62 in the width direction can cover other stages of grooves in the first groove 61 except the first-stage groove 615, and can cover more parts of the first-stage groove 615, which, on the one hand, can improve the absorption effect of the second groove 62 on the surplus material extruded from the first groove 61 at the time of forming the plurality of stages of grooves, on the other hand, can improve the absorption effect of the second groove 62 on the deformation energy of the battery cell 10 when the battery cell 10 is deformed by the internal and external impact forces, and reduce the influence of the expansion and deformation of the battery cell 10 in the width direction Z of the second groove on the pressure relief component 6.

In some other embodiments, in the thickness direction X of the first wall portion, the groove bottom surface 625 of the second groove is flush with the groove bottom surface of the first-stage groove 615.

As an example, the groove bottom surface 625 of the second groove and the groove bottom surface of the first groove 615 are both flat surfaces and coplanar.

In the embodiment, the projection of the second groove 62 in the width direction can cover other stages of grooves in the first groove 61 except the first-stage groove 615, which, on the one hand, can improve the absorption effect of the second groove 62 on the surplus material extruded from the first groove 61 at the time of forming the plurality of stages of grooves, on the other hand, can further improve the absorption effect of the second groove 62 on the deformation energy of the battery cell 10 when the battery cell 10 is deformed by the internal and external impact forces, and reduce the influence of the expansion and deformation of the battery cell 10 in the width direction Z of the second groove on the pressure relief component 6.

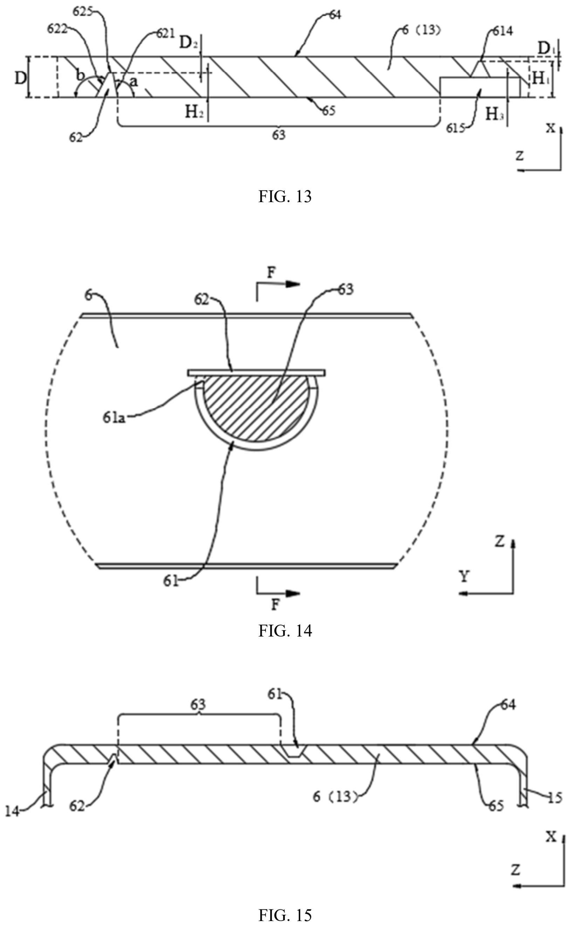

In some embodiments, referring to FIGS. 12 and 13, FIG. 12 is a partial cross-sectional view of a shell 1 provided in some embodiments of the present application; and FIG. 13 is a partial enlarged view of part E in FIG. 12. In the thickness direction X of the first wall portion, the pressure relief component 6 has a first surface 64 and a second surface 65 opposite to each other, and both the first groove 61 and the second groove 62 are recessed in a direction from the second surface 65 to the first surface 64.

It can be understood that both the first groove 61 and the second groove 62 are disposed on the second surface 65. The second surface 65 may be an outer surface of an outer component or an inner surface of an outer component.

In the embodiment, the first groove 61 and the second groove 62 are disposed on the same side of the pressure relief component 6 in the thickness direction X of the first wall portion, making it easier to machine the first groove 61 and the second groove 62 on the pressure relief component 6, and machining of the first groove 61 and the second groove 62 may be realized without flipping of the pressure relief component 6, which is conducive to optimizing production rhythm of the battery cell 10.

In some embodiments, with continued reference to FIG. 13, the first groove 61 includes a plurality of stages of grooves sequentially provided in a direction from the second surface 65 to the first surface 64, and in the thickness direction X of the first wall portion, among adjacent two stages of grooves, a stage of groove away from the second surface 65 is disposed on a groove bottom surface of the other stage of groove close to the second surface 65. Here, a stage of groove of the plurality of stages of grooves disposed on the second surface 65 is a first-stage groove 615, and in the thickness direction X of the first wall portion, a groove bottom surface of the first-stage groove 615 is closer to the second surface 65 than the groove bottom surface 625 of the second groove.

The first-stage groove 615 is a first-stage groove in the first groove 61 which is provided on the second surface 65. In the plurality of stages of grooves of the first groove 61, a groove bottom surface of the stage of groove farthest from the second surface 65 is the groove bottom surface 614 of the first groove, a minimum residual thickness of the stage of groove farthest from the second surface 65 is the minimum residual thickness of the first groove 61, and a maximum distance from the groove bottom surface of the stage of groove farthest from the second surface 65 to the second surface 65 is equal to the maximum groove depth of the first groove 61. In the thickness direction X of the first wall portion, the minimum distance between the groove bottom surface 625 of the second groove and the first surface 64 is equal to the minimum residual thickness of the second groove 62, and a minimum distance between the groove bottom surface of the stage of groove farthest from the second surface 65 and the first surface 64 is equal to the minimum residual thickness of the first groove 61.

It can be understood that in the thickness direction X of the first wall portion, the minimum distance between the groove bottom surface of the first-stage groove 615 and the second surface 65 is smaller than the minimum distance between the groove bottom surface 625 of the second groove and the second surface 65.

The groove bottom surface 625 of the second groove may be a flat surface or an arc surface; and the groove bottom surface of the first-stage groove 615 may be a flat surface or an arc surface. As an example, in the embodiment shown in FIG. 13, the groove bottom surface of the first-stage groove 615 and the groove bottom surface 625 of the second groove are both flat surfaces and parallel to the first surface 64 and the second surface 65.

In the embodiment, by disposing the first groove 61 as a plurality of stages of grooves arranged in the thickness direction X of the first wall portion, when the first groove 61 is formed, each stage of groove may be machined one by one in the direction from the second surface 65 to the first surface 64, which reduces the forming depth of each stage of groove, decreases the forming force on the pressure relief component 6 at the time of forming the first groove 61, and reduces the risk of damaging the pressure relief component 6 at the time of forming the first groove 61. Since the groove bottom surface of the first-stage groove 615 is closer to the second surface 65 than the groove bottom surface 625 of the second groove, the projection of the second groove 62 in the width direction at least covers the first-stage groove 615 of the first groove 61, so that the second groove 62 has a deeper depth, so that the second groove 62 can have a good absorption effect on the surplus material extruded at the time of forming the first-stage groove 615, and the second groove 62 can have a good absorption effect on the deformation energy of the battery cell 10 when the battery cell 10 is deformed by the internal and external impact forces.

In some embodiments, with continued reference to FIG. 13, in the thickness direction X of the first wall portion, a maximum groove depth of the second groove 62 is H₂, and a maximum groove depth of the first-stage groove 615 is H₃, with H₃ < H₂.

As an example, a maximum distance between the groove bottom surface 625 of the second groove and the second surface 65 in the thickness direction X of the first wall portion is the maximum groove depth of the second groove 62, and a maximum distance between the groove bottom surface of the first-stage groove 615 and the second surface 65 in the thickness direction X of the first wall portion is the maximum groove depth of the first-stage groove 615. The maximum groove depth of the second groove 62 is greater than the maximum groove depth of the first-stage groove 615, so that the groove bottom surface of the first-stage groove 615 is closer to the second surface 65 than the groove bottom surface 625 of the second groove.

In the embodiment, with H₃ < H₂, the second groove 62 has a deeper depth, so that the second groove 62 can have a good absorption effect on the surplus material extruded at the time of forming the first-stage groove 615, and the second groove 62 can have a good absorption effect on the deformation energy of the battery cell 10 when the battery cell 10 is deformed by the internal and external impact forces.

In some embodiments, referring to FIG. 6, FIG. 7 and FIGS. 10 to 13, the first surface 64 is a surface of the pressure relief component 6 facing the exterior of the battery cell 10, and the second surface 65 is a surface of the pressure relief component 6 facing the interior of the battery cell 10.

Here, the first surface 64 is the outer surface of the pressure relief component 6, and the second surface 65 is the inner surface of the pressure relief component 6.

The first surface 64 is a surface of the pressure relief component 6 facing the exterior of the battery cell 10. In the case that the first groove 61 is disposed on the first surface 64, the first groove 61 is disposed on the outside of the pressure relief component 6, which facilitates machining and forming of the first groove 61 on the outside of the battery cell 10, and helps to reduce the difficulty of forming the first groove 61, thereby improving production efficiency of the battery cell 10. The second surface 65 is a surface of the pressure relief component 6 facing the interior of the battery cell 10. In the case that the second groove 62 is disposed on the second surface 65, the second groove 62 is disposed on the inside of the pressure relief component 6, on the one hand, when the predetermined pressure relief region 63 is flipped outward and opened, both groove side surfaces (a first groove side surface 621 and a second groove side surface 622) of the second groove 62 in the width direction are less likely to come into contact, which is conducive to increasing the opening area of the predetermined pressure relief region 63; on the other hand, the second groove 62 is not exposed to the exterior of the battery cell 10, reducing the risk of oxidation and corrosion of the pressure relief component 6 in the second groove 62. In addition, the second surface 65 is a surface of the pressure relief component 6 facing the exterior of the battery cell 10. In the case that the first groove 61 is disposed on the second surface 65, the first groove 61 is disposed on the inside of the pressure relief component 6, which can reduce the risk of oxidation corrosion of the pressure relief component 6 in the first groove 61.

In some other embodiments, the first surface 64 may also be the surface of the pressure relief component 6 facing the interior of the battery cell 10, and the second surface 65 may be the surface of the pressure relief component 6 facing the exterior of the battery cell 10.

In some embodiments, referring to FIGS. 14 and 15, FIG. 14 is a partial view of a shell 1 (the first groove 61 is an arc groove) provided in some embodiments of the present application; and FIG. 15 is an F-F cross-sectional view of the shell 1 shown in FIG. 14. In the thickness direction X of the first wall portion, the projection of the first groove 61, the projection of the extension line 61a of the first groove and the projection of the second groove 62 jointly enclose the predetermined pressure relief region 63.

The first groove 61 may include only one groove segment, and the first groove 61 may be a groove extending along a non-linear trajectory. For example, the first groove 61 is a groove extending along an arc trajectory, a parabolic trajectory, etc. Both ends of the first groove 61 may have extension lines, and in the thickness direction X of the first wall portion, projections of the extension lines at both ends of the first groove 61 intersect with the projection of the second groove 62; alternatively, only one end of the first groove 61 has an extension line, and in the thickness direction X of the first wall portion, the projection of the extension line at one end of the first groove 61 intersects with the projection of the second groove 62, and the projection of the first groove 61 intersects with the projection of the second groove 62 at the projection at the other end of the first groove 61.

The first groove 61 may include a plurality of groove segments, and the plurality of groove segments may form a U-shaped, H-shaped, V-shaped, Y-shaped, X-shaped, T-shaped or the like structure. An extension line of one groove segment or a plurality of groove segments may serve as the extension line 61a of the first groove. Taking the first groove 61 including three groove segments as an example, the three groove segments form a U-shaped structure. Among the two groove segments located at both ends of the first groove 61, the two groove segments may have extension lines, and in the thickness direction X of the first wall portion, projections of the extension lines of the two groove segments intersect with the projection of the second groove 62; alternatively, only one groove segment has an extension line, and in the thickness direction X of the first wall portion, the projection of the extension line of the groove segment intersects with the projection of the second groove 62, and the projection of the other groove segment intersects with the projection of the second groove 62.

Regardless of whether the first groove 61 includes only one groove segment or a plurality of groove segments, the extension line 61a of the first groove is a portion that continues from an end of the groove segment located at the end of the first groove 61 in the extension direction of the groove segment. It can be understood that if the groove segment extends along an arc trajectory, the extension line 61a of the first groove also extends along the arc trajectory; and if the groove segment extends along a linear trajectory, the extension line 61a of the first groove also extends along a linear trajectory.

As an example, in the embodiment shown in FIG. 14 and FIG. 15, the first groove 61 is an arc groove, the first groove 61 is disposed on the first surface 64, the second groove 62 is disposed on the second surface 65, in the width direction Z of the second groove, the second groove 62 is spaced apart from the first groove 61, and in the thickness direction X of the first wall portion, both ends of the projection of the second groove 62 in the extension direction respectively extend beyond both ends of the projection of the first groove 61. The edge of the measurement surface of the predetermined pressure relief region 63 is formed by connecting the projection of the inner edge of the groove mouth of the second groove 62 (an edge of the groove mouth of the second groove 62 on one side close to the predetermined pressure relief region 63) in the first surface 64, the projection of the inner edge of the groove mouth of the first groove 61 (an edge of the groove mouth of the first groove 61 on one side close to the predetermined pressure relief region 63) in the first surface 64, and the projections of extension lines at both ends of the inner edge of the groove mouth of the first groove 61 in the first surface 64. The area of the measurement surface of the predetermined pressure relief region 63 is the area of the predetermined pressure relief region 63. When measuring the area of the predetermined pressure relief region 63, a first straight line may be drawn on the first surface 64, so that the projection of the inner edge of the groove mouth of the second groove 62 on the first surface 64 is located within the first straight line, and then an extension line of the inner edge of the groove mouth of the first groove 61 is drawn on the first surface 64 in the extension direction of the inner edge and intersects with the first straight line, thereby defining a measurement surface, and the edge of the measurement surface is composed of an arc and a straight line.

In the embodiment, the projection of the first groove 61 in the thickness direction X of the first wall portion, the projection of the extension line 61a of the first groove in the thickness direction X of the first wall portion, and the projection of the second groove 62 in the thickness direction X of the first wall portion jointly enclose the predetermined pressure relief region 63. In this structure, the projection of the second groove 62 in the thickness direction X of the first wall portion and the projection of the first groove 61 in the thickness direction X of the first wall portion do not form a closed structure, thereby reducing the mutual influence of the first groove 61 and the second groove 62 during machining, and reducing the risk of falling off and splashing in the predetermined pressure relief region 63 during pressure relief.

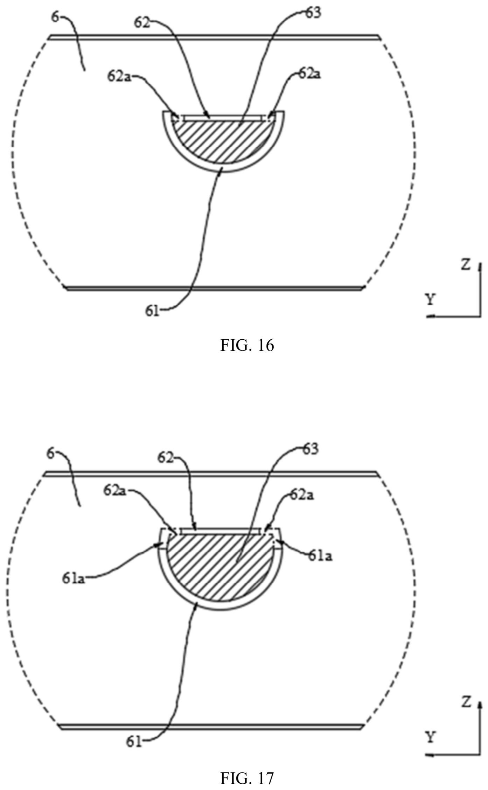

In some embodiments, referring to FIG. 16, FIG. 16 is a partial view of a shell 1 (the first groove 61 is an arc groove) provided in some other embodiments of the present application. In the thickness direction X of the first wall portion, the projection of the first groove 61, the projection of the second groove 62 and the projection of the extension line 62a of the second groove jointly enclose the predetermined pressure relief region 63.

The first groove 61 may include only one groove segment, and the first groove 61 may be a groove extending along a non-linear trajectory. For example, the first groove 61 is a groove extending along an arc trajectory, a parabolic trajectory, etc. The first groove 61 may include a plurality of groove segments, and the plurality of groove segments may form a U-shaped, H-shaped, V-shaped, Y-shaped, X-shaped, T-shaped or the like structure.

The extension line 62a of the second groove is a portion that continues to extend from an end of the second groove 62 in the extension direction Y of the second groove. If the second groove 62 extends along an arc trajectory, the extension line 62a of the second groove also extends along an arc trajectory; and if the second groove 62 extends along a linear trajectory, the extension line 62a of the second groove also extends along a linear trajectory. Both ends of the second groove 62 may have extension lines, and in the thickness direction X of the first wall portion, projections of the extension lines at both ends of the second groove 62 intersect with the projection of the first groove 61; alternatively, only one end of the second groove 62 has an extension line, and in the thickness direction X of the first wall portion, the projection of the extension line at one end of the second groove 62 intersects with the projection of the first groove 61, and the projection of the second groove 62 intersects with the projection of the first groove 61 at the projection at the other end of the second groove 62.

As an example, in the embodiment shown in FIG. 16, the first groove 61 is an arc groove, the first groove 61 is disposed on the first surface 64 (not shown in FIG. 16), the second groove 62 is disposed on the second surface 65 (not shown in FIG. 16), and the second groove 62 is located in an region enclosed by a connecting line of both ends of the first groove 61 and the first groove 61. The edge of the measurement surface of the predetermined pressure relief region 63 is formed by connecting the projection of the inner edge of the groove mouth of the second groove 62 (the edge of the groove mouth of the second groove 62 on one side close to the predetermined pressure relief region 63) in the first surface 64, the projections of the extension lines at both ends of the inner edge of the groove mouth of the second groove 62 in the first surface 64, and the projection of the inner edge of the groove mouth of the first groove 61 (the edge of the groove mouth of the first groove 61 on the side close to the predetermined pressure relief region 63) in the first surface 64. The area of the measurement surface of the predetermined pressure relief region 63 is the area of the predetermined pressure relief region 63. When measuring the area of the predetermined pressure relief region 63, a first straight line may be drawn on the first surface 64, so that the projection of the inner edge of the groove mouth of the second groove 62 on the first surface 64 is located within the first straight line, and both ends of the first straight line respectively extend to the inner edge of the groove mouth of the first groove 61, thereby defining a measurement surface, and the edge of the measurement surface is composed of an arc and a straight line.

In the embodiment, the projection of the first groove 61 in the thickness direction X of the first wall portion, the projection of the second groove 62 in the thickness direction X of the first wall portion, and the projection of the extension line 62a of the second groove in the thickness direction X of the first wall portion jointly enclose the predetermined pressure relief region 63. In this structure, the projection of the second groove 62 in the thickness direction X of the first wall portion and the projection of the first groove 61 in the thickness direction X of the first wall portion do not form a closed structure, thereby reducing the mutual influence of the first groove 61 and the second groove 62 during machining, and reducing the risk of falling off and splashing in the predetermined pressure relief region 63 during pressure relief.

In some embodiments, referring to FIG. 17, FIG. 17 is a partial view of a shell 1 (the first groove 61 is an arc groove) provided in some still other embodiments of the present application. In the thickness direction X of the first wall portion, the projection of the first groove 61, the projection of the extension line 61a of the first groove, the projection of the second groove 62 and the projection of the extension line 62a of the second groove jointly enclose the predetermined pressure relief region 63.

The first groove 61 may include only one groove segment, and the first groove 61 may be a groove extending along a non-linear trajectory. For example, the first groove 61 is a groove extending along an arc trajectory, a parabolic trajectory, etc. Both ends of the first groove 61 may have extension lines, and both ends of the second groove 62 may also have extension lines; in the thickness direction X of the first wall portion, projections of the extension lines at both ends of the first groove 61 intersect with projections of the extension lines at both ends of the second groove 62 respectively; alternatively, only one end of the first groove 61 has an extension line, only one end of the second groove 62 also has an extension line, and in the thickness direction X of the first wall portion, the projection of the extension line at one end of the first groove 61 intersects with the projection of the extension line at one end of the second groove 62, and the projection of the other end of the first groove 61 is connected with the projection of the other end of the second groove 62.

The first groove 61 may include a plurality of groove segments, and the plurality of groove segments may form a U-shaped, H-shaped, V-shaped, Y-shaped, X-shaped, T-shaped or the like structure. An extension line of one groove segment or a plurality of groove segments may serve as the extension line 61a of the first groove. Taking the first groove 61 including three groove segments as an example, the three groove segments form a U-shaped structure. Among the two groove segments located at both ends of the first groove 61, the two groove segments may have extension lines, and in the thickness direction X of the first wall portion, projections of the extension lines of the two groove segments intersect with the projections of the extension lines at both ends of the second groove 62 respectively; alternatively, only one groove segment has an extension line, and in the thickness direction X of the first wall portion, the projection of the extension line of the groove segment intersects with the projection of the extension line 62a of the second groove, and the projection of the other groove segment intersects with the projection of the second groove 62.

Regardless of whether the first groove 61 includes only one groove segment or a plurality of groove segments, the extension line 61a of the first groove is a portion that continues from an end of the groove segment located at the end of the first groove 61 in the extension direction of the groove segment. The extension line 62a of the second groove is a portion that continues to extend from an end of the second groove 62 in the extension direction Y of the second groove.

As an example, in the embodiment shown in FIG. 17, the first groove 61 is an arc groove, the first groove 61 is disposed on the first surface 64 (not shown in FIG. 17), the second groove 62 is disposed on the second surface 65 (not shown in FIG. 17), in the width direction Z of the second groove, the second groove 62 is spaced apart from the first groove 61, and in the thickness direction X of the first wall portion, both ends of the projection of the second groove 62 in the extension direction do not extend beyond both ends of the projection of the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, the projections of the extension lines at both ends of the inner edge of the groove mouth of the second groove 62 in the first surface 64, the projection of the inner edge of the groove mouth of the first groove 61 (the edge of the groove mouth of the first groove 61 on the side close to the predetermined pressure relief region 63) in the first surface 64, and the projections of the extension lines at both ends of the inner edge of the groove mouth of the first groove 61 in the first surface 64. The area of the measurement surface of the predetermined pressure relief region 63 is the area of the predetermined pressure relief region 63. When measuring the area of the predetermined pressure relief region 63, a first straight line may be drawn on the first surface 64, so that the projection of the inner edge of the groove mouth of the second groove 62 on the first surface 64 is located within the first straight line, and then extension lines at both ends of the inner edge of the groove mouth of the first groove 61 is drawn on the first surface 64 in the extension direction of the inner edge and intersects with the first straight line, thereby defining a measurement surface, and the edge of the measurement surface is composed of an arc and a straight line.

In the embodiment, the projection of the first groove 61 in the thickness direction X of the first wall portion, the projection of the extension line of the first groove 61 in the thickness direction X of the first wall portion, the projection of the second groove 62 in the thickness direction X of the first wall portion, and the projection of the extension line of the second groove 62 in the thickness direction X of the first wall portion jointly enclose the predetermined pressure relief region 63. In this structure, the projection of the second groove 62 in the thickness direction X of the first wall portion and the projection of the first groove 61 in the thickness direction X of the first wall portion do not form a closed structure, thereby reducing the mutual influence of the first groove 61 and the second groove 62 during machining, and reducing the risk of falling off and splashing in the predetermined pressure relief region 63 during pressure relief.

In some embodiments, with continued reference to FIGS. 14 to 17, the first groove 61 extends along an arc trajectory.

A central angle of the first groove 61 may be less than 15°, 30°, 45°, 60°, 90°, 120°, 150°, 180°, 210°, 240°, 270°, 300°, 330°, etc.

In the embodiment shown in FIGS. 14 to 17, the central angle of the first groove 61 is greater than 180° and less than 270°.

In the embodiment, the first groove 61 extends along an arc trajectory, and the first groove 61 is an arc groove. The first groove 61 with this structure includes only one groove segment, which simplifies the structure of the first groove 61.

In some embodiments, the second groove 62 extends along a linear trajectory. The second groove 62 is a linear groove, which has a simple structure and is easy to machine and form.

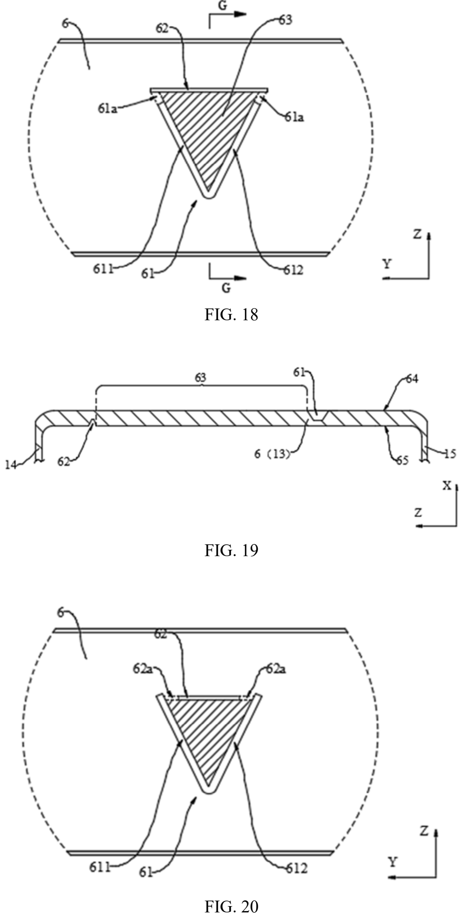

In some embodiments, referring to FIGS 18 and 19, FIG. 18 is a partial view of a shell 1 (the first groove 61 is a V-shaped groove) provided in some embodiments of the present application; and FIG. 19 is a G-G cross-sectional view of the shell 1 shown in FIG. 18. The first groove 61 includes a first groove segment 611 and a second groove segment 612, and the first groove segment 611 is connected with the second groove segment 612. In the thickness direction X of the first wall portion, a projection of the first groove segment 611, a projection of an extension line of the first groove segment 611, a projection of the second groove segment 612, a projection of an extension line of the second groove segment 612 and the projection of the second groove 62 jointly enclose the predetermined pressure relief region 63.

The first groove segment 611 and the second groove segment 612 are two groove segments in the first groove 61. The first groove segment 611 and the second groove segment 612 may be linear grooves extending along a linear trajectory, or may be non-linear grooves extending along a non-linear trajectory, such as arc grooves extending along an arc trajectory. If the first groove segment 611 and the second groove segment 612 both extend along a linear trajectory, the first groove segment 611 and the second groove segment 612 can be disposed at an acute angle, a right angle, or an obtuse angle. Both the first groove segment 611 and the second groove segment 612 may be connected at their ends to form a V-shaped, L-shaped or the like structure, and the first groove 61 with this structure may define one predetermined pressure relief region 63 with one second groove 62. The first groove segment 611 and the second groove segment 612 may also be disposed in an intersecting manner to form an X-shaped structure. The first groove 61 with this structure may define two predetermined pressure relief regions 63 with two second grooves 62, or may define four predetermined pressure relief regions 63 with four second grooves 62. The extension line of the first groove segment 611 is a portion that continues to extend from an end of the first groove segment 611 in the extension direction of the first groove segment 611. The extension line of the second groove segment 612 is a portion that continues to extend from an end of the second groove segment 612 in the extension direction of the second groove segment 612. The extension line of the first groove segment 611 and the extension line of the second groove segment 612 are both the extension lines 61a of the first groove.

As an example, in the embodiment shown in FIG. 18 and FIG. 19, the first groove segment 611 and the second groove segment 612 are connected to form a V-shaped structure, the first groove 61 is disposed on the first surface 64, the second groove 62 is disposed on the second surface 65, in the width direction Z of the second groove, the second groove 62 is spaced apart from the first groove 61, and in the thickness direction X of the first wall portion, both ends of the projection of the second groove 62 in the extension direction respectively extend beyond both ends of the projection of the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, a projection of an inner edge of a groove mouth of the first groove segment 611 (an edge of the groove mouth of the first groove segment 611 on the side close to the predetermined pressure relief region 63) in the first surface 64, a projection of an extension line of the inner edge of the groove mouth of the first groove segment 611 in the first surface 64, a projection of an inner edge of a groove mouth of the second groove segment 612 (an edge of the groove mouth of the second groove segment 612 on the side close to the predetermined pressure relief region 63) in the first surface 64, and a projection of an extension line of the inner edge of the groove mouth of the second groove segment 612 in the first surface 64, and the area of the measurement surface of the predetermined pressure relief region 63 is the area of the predetermined pressure relief region 63, and the predetermined pressure relief region 63 is triangular. When measuring the area of the predetermined pressure relief region 63, a first straight line may be drawn on the first surface 64, so that the projection of the inner edge of the groove mouth of the second groove 62 on the first surface 64 is located within the first straight line, then an extension line of the inner edge of the groove mouth of the first groove segment 611 is drawn on the first surface 64 in the extension direction of the inner edge and intersects with the first straight line, and then an extension line of the inner edge of the groove mouth of the second groove segment 612 is drawn on the first surface 64 in the extension direction of the inner edge and intersects with the first straight line, thereby defining a triangular measurement surface, and the area of the predetermined relief region 63 may be calculated by measuring the base and height of the triangle and multiplying the base by the height.

It should be noted that in the embodiment where the first groove 61 is a structure with a plurality of stages of grooves, both the first groove segment 611 and the second groove segment 612 are structure with a plurality of stages of grooves.

In the embodiment, the first groove 61 has a simple structure, and a position at which the first groove segment 611 and the second groove segment 612 are connected has more concentrated stress, is weaker, and is easier to rupture, so that the pressure relief component 6 can quickly rupture from the first groove segment 611 and the second groove segment 612 after the pressure relief component ruptures from the position at which the first groove segment 611 and the second groove segment 612 are connected when the battery cell 10 thermally runs away, so that the predetermined pressure relief region 63 can be opened more quickly to relieve pressure in time.

In some embodiments, referring to FIG. 20, FIG. 20 is a partial view of a shell 1 (the first groove 61 is a V-shaped groove) provided in some other embodiments of the present application. The first groove 61 includes a first groove segment 611 and a second groove segment 612, and the first groove segment 611 is connected with the second groove segment 612. In the thickness direction X of the first wall portion, the projection of the first groove segment 611, the projection of the second groove segment 612, the projection of the second groove 62 and the projection of the extension line of the second groove 62 jointly enclose the predetermined pressure relief region 63.

As an example, in the embodiment shown in FIG. 20, the first groove segment 611 and the second groove segment 612 are connected to form a V-shaped structure, the first groove 61 is disposed on the first surface 64 (not shown in FIG. 20), the second groove 62 is disposed on the second surface 65 (not shown in FIG. 20), and the second groove 62 is located in a region enclosed by a connecting line between one end of the first groove segment 611 and one end of the second groove segment 612 and the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, the projections of the extension lines at both ends of the inner edge of the groove mouth of the second groove 62 in the first surface 64, the projection of the inner edge of the groove mouth of the first groove segment 611 (the edge of the groove mouth of the first groove segment 611 on the side close to the predetermined pressure relief region 63) in the first surface 64, and the projection of the inner edge of the groove mouth of the second groove segment 612 (the edge of the groove mouth of the second groove segment 612 on the side close to the predetermined pressure relief region 63) in the first surface 64, and the area of the measurement surface of the predetermined pressure relief region 63 is the area of the predetermined pressure relief region 63, and the predetermined pressure relief region 63 is triangular. When measuring the area of the predetermined pressure relief region 63, a first straight line may be drawn on the first surface 64, so that the projection of the inner edge of the groove mouth of the second groove 62 on the first surface 64 is located within the first straight line, and both ends of the first straight line respectively extend to the inner edge of the groove mouth of the first groove segment 611 and the inner edge of the groove mouth of the second groove segment 612, thereby defining a triangular measurement surface, and the area of the predetermined relief region 63 may be calculated by measuring the base and height of the triangle and multiplying the base by the height.

In the embodiment, the first groove 61 has a simple structure, and a position at which the first groove segment 611 and the second groove segment 612 are connected has more concentrated stress, is weaker, and is easier to rupture, so that the pressure relief component 6 can quickly rupture from the first groove segment 611 and the second groove segment 612 after the pressure relief component ruptures from the position at which the first groove segment 611 and the second groove segment 612 are connected when the battery cell 10 thermally runs away, so that the predetermined pressure relief region 63 can be opened more quickly to relieve pressure in time.

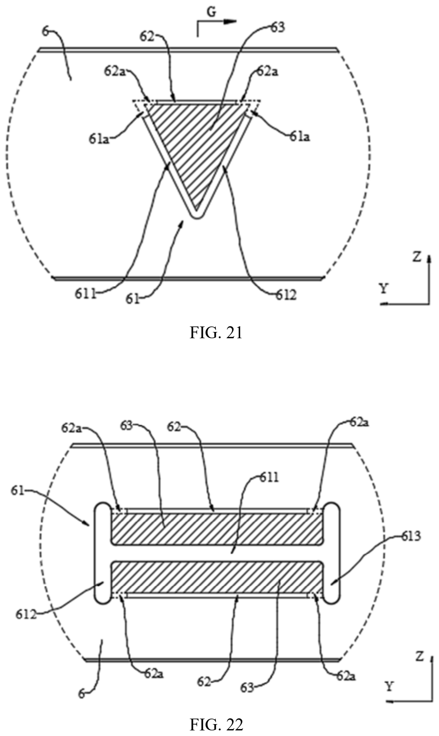

In some embodiments, referring to FIG. 21, FIG. 21 is a partial view of a shell 1 (the first groove 61 is a V-shaped groove) provided in some still other embodiments of the present application. The first groove 61 includes a first groove segment 611 and a second groove segment 612, and the first groove segment 611 is connected with the second groove segment 612. In the thickness direction X of the first wall portion, the projection of the first groove segment 611, the projection of the extension line of the first groove segment 611, the projection of the second groove segment 612, the projection of the extension line of the second groove segment 612, the projection of the second groove 62 and the projection of the extension line 62a of the second groove jointly enclose the predetermined pressure relief region 63.

As an example, in the embodiment shown in FIG. 21, the first groove segment 611 and the second groove segment 612 are connected to form a V-shaped structure, the first groove 61 is disposed on the first surface 64 (not shown in FIG. 21), the second groove 62 is disposed on the second surface 65 (not shown in FIG. 21), in the width direction Z of the second groove, the second groove 62 is spaced apart from the first groove 61, and in the thickness direction X of the first wall portion, both ends of the projection of the second groove 62 in the extension direction do not extend beyond both ends of the projection of the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, the projection of the extension lines at both ends of the inner edge of the groove mouth of the second groove 62 in the first surface 64, the projection of the inner edge of the groove mouth of the first groove segment 611 (the edge of the groove mouth of the first groove segment 611 on the side close to the predetermined pressure relief region 63) in the first surface 64, the projection of the extension line of the inner edge of the groove mouth of the first groove segment 611 in the first surface 64, the projection of the inner edge of the groove mouth of the second groove segment 612 (the edge of the groove mouth of the second groove segment 612 on the side close to the predetermined pressure relief region 63) in the first surface 64, and the projection of the extension line of the inner edge of the groove mouth of the second groove segment 612 in the first surface 64, and the area of the measurement surface of the predetermined pressure relief region 63 is the area of the predetermined pressure relief region 63, and the predetermined pressure relief region 63 is triangular. When measuring the area of the predetermined pressure relief region 63, a first straight line may be drawn on the first surface 64, so that the projection of the inner edge of the groove mouth of the second groove 62 on the first surface 64 is located within the first straight line, then an extension line of the inner edge of the groove mouth of the first groove segment 611 is drawn on the first surface 64 in the extension direction of the inner edge and intersects with the first straight line, and then an extension line of the inner edge of the groove mouth of the second groove segment 612 is drawn on the first surface 64 in the extension direction of the inner edge and intersects with the first straight line, thereby defining a triangular measurement surface, and the area of the predetermined relief region 63 may be calculated by measuring the base and height of the triangle and multiplying the base by the height.

In the embodiment, the first groove 61 has a simple structure, and a position at which the first groove segment 611 and the second groove segment 612 are connected has more concentrated stress, is weaker, and is easier to rupture, so that the pressure relief component 6 can quickly rupture from the first groove segment 611 and the second groove segment 612 after the pressure relief component ruptures from the position at which the first groove segment 611 and the second groove segment 612 are connected when the battery cell 10 thermally runs away, so that the predetermined pressure relief region 63 can be opened more quickly to relieve pressure in time.

In some embodiments, with continued reference to FIG. 9 and FIG. 10, the first groove 61 includes a first groove segment 611, a second groove segment 612 and a third groove segment 613, the second groove segment 612 and the third groove segment 613 are disposed opposite to each other, the first groove segment 611 connects the second groove segment 612 and the third groove segment 613, and the first groove segment 611 and the second groove 62 are disposed opposite to each other. In the thickness direction X of the first wall portion, a projection of the first groove segment 611, a projection of the second groove segment 612, a projection of an extension line of the second groove segment 612, a projection of the third groove segment 613, a projection of an extension line of the third groove segment 613 and the projection of the second groove 62 jointly enclose the predetermined pressure relief region 63.

The first groove segment 611, the second groove segment 612 and the third groove segment 613 are three groove segments in the first groove 61. The first groove segment 611, the second groove segment 612 and the third groove segment 613 may be linear grooves extending along a linear trajectory, or may be non-linear grooves extending along a non-linear trajectory, such as arc grooves extending along an arc trajectory. If the first groove segment 611, the second groove segment 612 and the third groove segment 613 all extend along a linear trajectory, the first groove segment 611 and the second groove segment 612 may be disposed at an acute angle, a right angle or an obtuse angle, the first groove segment 611 and the third groove segment 613 may be disposed at an acute angle, a right angle or an obtuse angle, the second groove segment 612 and the third groove segment 613 may be disposed in parallel; alternatively, the extension line of the second groove segment 612 may intersect with the extension line of the third groove segment 613.

The first groove segment 611 connects the second groove segment 612 and the third groove segment 613. Both ends of the first groove segment 611 may be connected with the second groove segment 612 and the third groove segment 613 respectively. Alternatively, at least one of the second groove segment 612 and the third groove segment 613 may be connected to a position offset from an end of the first groove segment 611, so that at least one of the second groove segment 612 and the third groove segment 613 is located between both ends of the first groove segment 611. The position at which the second groove segment 612 is connected with the first groove segment 611 may be located at one end of the second groove segment 612, or may be located between both ends of the second groove segment 612. The position at which the third groove segment 613 is connected with the first groove segment 611 may be located at one end of the third groove segment 613, or may be located between both ends of the third groove segment 613. The first groove segment 611, the second groove segment 612 and the third groove segment 613 may form a U-shaped, H-shaped or the like structure. If the first groove segment 611, the second groove segment 612 and the third groove segment 613 form a U-shaped structure, the first groove 61 with this structure can define one predetermined pressure relief region 63 with one second groove 62. If the first groove segment 611, the second groove segment 612 and the third groove segment 613 form an H-shaped structure, the first groove 61 with this structure can define two predetermined pressure relief regions 63 with two second grooves 62.

The extension line of the second groove segment 612 is a portion that continues to extend from an end of the second groove segment 612 in the extension direction of the second groove segment 612. The extension line of the third groove segment 613 is a portion that continues to extend from an end of the third groove segment 613 in the extension direction of the third groove segment 613. The extension line of the second groove segment 612 and the extension line of the third groove segment 613 are both the extension lines 61a of the first groove.

As an example, in the embodiment shown in FIGS. 9 and 10, the first groove segment 611, the second groove segment 612 and the third groove segment 613 form an H-shaped structure, and there are two predetermined pressure relief regions 63; a portion of the second groove segment 612, a portion of the third groove segment 613, the first groove segment 611 and one second groove 62 jointly define one predetermined pressure relief region 63, and the other portion of the second groove segment 612, the other portion of the third groove segment 613, the first groove segment 611 and the other second groove 62 jointly define the other predetermined pressure relief region 63. The first groove 61 is disposed on the first surface 64, the second groove 62 is disposed on the second surface 65, in the width direction Z of the second groove, the second groove 62 is spaced apart from the first groove 61, and in the thickness direction X of the first wall portion, both ends of the projection of the second groove 62 in the extension direction respectively extend beyond both ends of the projection of the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, a projection of an inner edge of a groove mouth of the first groove segment 611 (an edge of the groove mouth of the first groove segment 611 on the side close to the predetermined pressure relief region 63) in the first surface 64, a projection of an inner edge of a groove mouth of the second groove segment 612 (an edge of the groove mouth of the second groove segment 612 on the side close to the predetermined pressure relief region 63) in the first surface 64, a projection of an extension line of the inner edge of the groove mouth of the second groove segment 612 in the first surface 64, a projection of an inner edge of a groove mouth of the third groove segment 613 (an edge of the groove mouth of the third groove segment 613 on the side close to the predetermined pressure relief region 63) in the first surface 64 and a projection of an extension line of the inner edge of the groove mouth of the third groove segment 613 in the first surface 64, and the predetermined pressure relief region 63 is rectangular. When measuring the area of the predetermined pressure relief region 63, a first straight line may be drawn on the first surface 64, so that the projection of the inner edge of the groove mouth of the second groove 62 on the first surface 64 is located within the first straight line, then an extension line of the inner edge of the groove mouth of the second groove segment 612 is drawn on the first surface 64 in the extension direction of the inner edge and intersects with the first straight line, and then an extension line of the inner edge of the groove mouth of the third groove segment 613 is drawn on the first surface 64 in the extension direction of the inner edge and intersects with the first straight line, thereby defining a rectangular measurement surface, and the area of the predetermined relief region 63 may be calculated by measuring the length and width of the rectangle and multiplying the length by the width.

In the embodiment, the second groove segment 612 and the third groove segment 613 are disposed opposite to each other, the first groove segment 611 and the second groove 62 are disposed opposite to each other in the width direction of the second groove 62, the first groove segment 611 connects the second groove segment 612 and the third groove segment 613, an intersection position of the first groove segment 611 and the second groove segment 612 and a connection position of the first groove segment 611 and the third groove segment 613 are weaker, and the predetermined pressure relief region 63 more easily ruptures and is opened for pressure relief, and the opening area of the predetermined pressure relief region 63 can be further increased, thereby increasing the pressure relief area of the battery cell 10 and improving the pressure relief rate of the battery cell 10.

In some embodiments, referring to FIG. 22, FIG. 22 is a partial view of a shell 1 (the first groove 61 is an H-shaped groove) provided in some other embodiments of the present application. The first groove 61 includes a first groove segment 611, a second groove segment 612 and a third groove segment 613, the second groove segment 612 and the third groove segment 613 are disposed opposite to each other, the first groove segment 611 connects the second groove segment 612 and the third groove segment 613, and in the width direction of the second groove 62, the first groove segment 611 and the second groove 62 are disposed opposite to each other. In the thickness direction X of the first wall portion, the projection of the first groove segment 611, the projection of the second groove segment 612, the projection of the third groove segment 613, the projection of the second groove 62 and the projection of the extension line 62a of the second groove jointly enclose the predetermined pressure relief region 63.

As an example, in the embodiment shown in FIGS. 22, the first groove segment 611, the second groove segment 612 and the third groove segment 613 form an H-shaped structure, and there are two predetermined pressure relief regions 63; a portion of the second groove segment 612, a portion of the third groove segment 613, the first groove segment 611 and one second groove 62 jointly define one predetermined pressure relief region 63, and the other portion of the second groove segment 612, the other portion of the third groove segment 613, the first groove segment 611 and the other second groove 62 jointly define the other predetermined pressure relief region 63. The first groove 61 is disposed on the first surface 64 (not shown in FIG. 22), the second groove 62 is disposed on the second surface 65 (not shown in FIG. 22), and the second groove 62 is located in a region enclosed by a connecting line between one end of the second groove segment 612 and one end of the third groove segment 613 and the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, the projections of the extension lines at both ends of the inner edge of the groove mouth of the second groove 62 in the first surface 64, the projection of the inner edge of the groove mouth of the first groove segment 611 (the edge of the groove mouth of the first groove segment 611 on the side close to the predetermined pressure relief region 63) in the first surface 64, the projection of the inner edge of the groove mouth of the second groove segment 612 (the edge of the groove mouth of the second groove segment 612 on the side close to the predetermined pressure relief region 63) in the first surface 64, and the projection of the inner edge of the groove mouth of the third groove segment 613 (the edge of the groove mouth of the third groove segment 613 on the side close to the predetermined pressure relief region 63) in the first surface 64, and the predetermined pressure relief region 63 is rectangular. When measuring the area of the predetermined pressure relief region 63, a first straight line may be drawn on the first surface 64, so that the projection of the inner edge of the groove mouth of the second groove 62 on the first surface 64 is located within the first straight line, and both ends of the first straight line respectively extend to the inner edge of the groove mouth of the second groove segment 612 and the inner edge of the groove mouth of the third groove segment 613, thereby defining a rectangular measurement surface, and the area of the predetermined relief region 63 may be calculated by measuring the length and width of the rectangle and multiplying the length by the width.

In the embodiment, the second groove segment 612 and the third groove segment 613 are disposed opposite to each other, the first groove segment 611 and the second groove 62 are disposed opposite to each other in the width direction of the second groove 62, the first groove segment 611 connects the second groove segment 612 and the third groove segment 613, an intersection position of the first groove segment 611 and the second groove segment 612 and a connection position of the first groove segment 611 and the third groove segment 613 are weaker, and the predetermined pressure relief region 63 more easily ruptures and is opened for pressure relief, and the opening area of the predetermined pressure relief region 63 can be further increased, thereby increasing the pressure relief area of the battery cell 10 and improving the pressure relief rate of the battery cell 10.

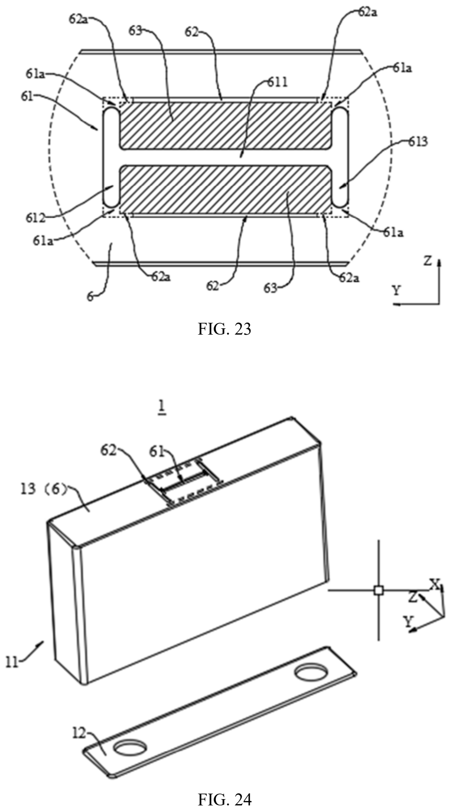

In some embodiments, referring to FIG. 23, FIG. 23 is a partial view of a shell 1 (the first groove 61 is an H-shaped groove) provided in some still other embodiments of the present application. The first groove 61 includes a first groove segment 611, a second groove segment 612 and a third groove segment 613, the second groove segment 612 and the third groove segment 613 are disposed opposite to each other, the first groove segment 611 connects the second groove segment 612 and the third groove segment 613, and in the width direction of the second groove 62, the first groove segment 611 and the second groove 62 are disposed opposite to each other. In the thickness direction X of the first wall portion, a projection of the first groove segment 611, a projection of the second groove segment 612, a projection of an extension line of the second groove segment 612, a projection of the third groove segment 613, a projection of an extension line of the third groove segment 613, the projection of the second groove 62, and the projection of the extension line 62a of the second groove jointly enclose the predetermined pressure relief region 63.

As an example, in the embodiment shown in FIGS. 23, the first groove segment 611, the second groove segment 612 and the third groove segment 613 form an H-shaped structure, and there are two predetermined pressure relief regions 63; a portion of the second groove segment 612, a portion of the third groove segment 613, the first groove segment 611 and one second groove 62 jointly define one predetermined pressure relief region 63, and the other portion of the second groove segment 612, the other portion of the third groove segment 613, the first groove segment 611 and the other second groove 62 jointly define the other predetermined pressure relief region 63. The first groove 61 is disposed on the first surface 64 (not shown in FIG. 23), the second groove 62 is disposed on the second surface 65 (not shown in FIG. 23), in the width direction Z of the second groove, the second groove 62 is spaced apart from the first groove 61, and in the thickness direction X of the first wall portion, both ends of the projection of the second groove 62 in the extension direction do not extend beyond both ends of the projection of the first groove 61. The edge of the measurement surface of the predetermined pressure relief region 63 is formed by connecting the projection of the inner edge of the groove mouth of the second groove 62 (the edge of the groove mouth of the second groove 62 on the side close to the predetermined pressure relief region 63) in the first surface 64, projections of extension lines at both ends of an inner edge of a groove mouth of the second groove 62 in the first surface 64, a projection of an inner edge of a groove mouth of the first groove segment 611 (an edge of the groove mouth of the first groove segment 611 on the side close to the predetermined pressure relief region 63) in the first surface 64, a projection of an inner edge of a groove mouth of the second groove segment 612 (an edge of the groove mouth of the second groove segment 612 on the side close to the predetermined pressure relief region 63) in the first surface 64, a projection of an extension line of the inner edge of the groove mouth of the second groove segment 612 in the first surface 64, a projection of an inner edge of a groove mouth of the third groove segment 613 (an edge of the groove mouth of the third groove segment 613 on the side close to the predetermined pressure relief region 63) in the first surface 64 and a projection of an extension line of the inner edge of the groove mouth of the third groove segment 613 in the first surface 64, and the predetermined pressure relief region 63 is rectangular. When measuring the area of the predetermined pressure relief region 63, a first straight line may be drawn on the first surface 64, so that the projection of the inner edge of the groove mouth of the second groove 62 on the first surface 64 is located within the first straight line, then an extension line of the inner edge of the groove mouth of the second groove segment 612 is drawn on the first surface 64 in the extension direction of the inner edge and intersects with the first straight line, and then an extension line of the inner edge of the groove mouth of the third groove segment 613 is drawn on the first surface 64 in the extension direction of the inner edge and intersects with the first straight line, thereby defining a rectangular measurement surface, and the area of the predetermined relief region 63 may be calculated by measuring the length and width of the rectangle and multiplying the length by the width.

In the embodiment, the second groove segment 612 and the third groove segment 613 are disposed opposite to each other, the first groove segment 611 and the second groove 62 are disposed opposite to each other in the width direction of the second groove 62, the first groove segment 611 connects the second groove segment 612 and the third groove segment 613, an intersection position of the first groove segment 611 and the second groove segment 612 and a connection position of the first groove segment 611 and the third groove segment 613 are weaker, and the predetermined pressure relief region 63 more easily ruptures and is opened for pressure relief, and the opening area of the predetermined pressure relief region 63 can be further increased, thereby increasing the pressure relief area of the battery cell 10 and improving the pressure relief rate of the battery cell 10.

In some embodiments, with continued reference to FIG. 22 and FIG. 23, a connection position of the second groove segment 612 and the first groove segment 611 is offset from both ends of the second groove segment 612, and the connection position of the third groove segment 613 and the first groove segment 611 is offset from both ends of the third groove segment 613, so that the predetermined pressure relief regions 63 are formed on both sides of the first groove segment 611.

The connection position of the second groove segment 612 and the first groove segment 611 is offset from both ends of the second groove segment 612. That is, the connection position of the second groove segment 612 and the first groove segment 611 is not located at any of both ends of the second groove segment 612. In the extension direction of the second groove segment 612, the connection position of the second groove segment 612 and the first groove segment 611 is located between both ends of the second groove segment 612. The connection position of the second groove segment 612 and the first groove segment 611 may be located at a midpoint position of the second groove segment 612, or may be offset from the midpoint position of the second groove segment 612.

The connection position of the third groove segment 613 and the first groove segment 611 is offset from both ends of the third groove segment 613. That is, the connection position of the third groove segment 613 and the first groove segment 611 is not located at any of both ends of the third groove segment 613. In the extension direction of the third groove segment 613, the connection position of the third groove segment 613 and the first groove segment 611 is located between both ends of the third groove segment 613. The connection position of the third groove segment 613 and the first groove segment 611 may be located at a midpoint position of the third groove segment 613, or may be offset from the midpoint position of the third groove segment 613.

It should be noted that in the embodiment where the first groove 61 is a structure with a plurality of stages of grooves, the first groove segment 611, the second groove segment 612 and third groove segment 613 all are structure with a plurality of stages of grooves.

In the embodiment, the connection position of the second groove segment 612 and the first groove segment 611 is offset from both ends of the second groove segment 612. During the pressure relief process, after the pressure relief component 6 ruptures at the connection position of the second groove segment 612 and the first groove segment 611, the rupture can spread along the second groove segment 612 to both ends of the second groove segment 612, thereby shortening the time for the pressure relief component 6 to rupture along the second groove segment 612. The connection position of the third groove segment 613 and the first groove segment 611 is offset from both ends of the third groove segment 613. During the pressure relief process, after the pressure relief component 6 ruptures at the connection position of the third groove segment 613 and the first groove segment 611, the rupture can spread along the third groove segment 613 to both ends of the third groove segment 613, thereby shortening the time for the pressure relief component 6 to rupture along the third groove segment 613. In such a structure, the first groove segment 611 of the first groove 61 is located between two predetermined pressure relief regions 63. After the pressure relief component 6 ruptures along the first groove segment 611, the two predetermined pressure relief regions 63 can be opened in a split manner for pressure relief when the battery cell 10 undergoes pressure relief, so that the two predetermined pressure relief regions 63 can be opened quickly, which is beneficial to increasing the pressure relief rate of the battery cell 10.

In some embodiments, the first groove segment 611 extends along a linear or arc trajectory; and/or the second groove segment 612 extends along a linear or are trajectory; and/or the third groove segment 613 extends along a linear or arc trajectory.

As an example, in the embodiment shown in FIGS. 22 and 23, the first groove segment 611, the second groove segment 612 and the third groove segment 613 all extend along a linear trajectory, and both the second groove segment 612 and the third groove segment 613 are perpendicular to the first groove segment 611.

If the first groove segment 611 extends along a linear trajectory, the first groove segment 611 is a linear groove, which can reduce the difficulty of forming the first groove segment 611. If the first groove segment 611 extends along an arc trajectory, the first groove segment 611 is an arc groove, and the pressure relief component 6 is more likely to rupture along the first groove segment 611 when the battery cell 10 undergoes pressure relief, so that the predetermined pressure relief region 63 can be opened more quickly. If the second groove segment 612 extends along a linear trajectory, the second groove segment 612 is a linear groove, which can reduce the difficulty of forming the second groove segment 612. If the second groove segment 612 extends along an arc trajectory, the second groove segment 612 is an arc groove, and the pressure relief component 6 is more likely to rupture along the second groove segment 612 when the battery cell 10 undergoes pressure relief, so that the predetermined pressure relief region 63 can be opened more quickly. If the third groove segment 613 extends along a linear trajectory, the third groove segment 613 is a linear groove, which can reduce the difficulty of forming the third groove segment 613. If the third groove segment 613 extends along an arc trajectory, the third groove segment 613 is an arc groove, and the pressure relief component 6 is more likely to rupture along the third groove segment 613 when the battery cell 10 undergoes pressure relief, so that the predetermined pressure relief region 63 can be opened more quickly.

In some embodiments, referring to FIG. 24, FIG. 24 is an exploded view of a shell 1 (an opening is formed at one end of a case 11, the case 11 includes a first wall portion 13, and a pressure relief component 6 is the first wall portion 13) according to some embodiments of the present application. The pressure relief component 6 is integrally formed with the first wall portion 13.

The entire first wall portion 13 may be used as the pressure relief component 6, or a part of the first wall portion 13 may be used as the pressure relief component 6, so that the pressure relief component 6 is integrally formed with the first wall portion 13. Both the first groove 61 and the second groove 62 are disposed on the first wall portion 13. One of the first surface 64 and the second surface 65 of the pressure relief component 6 is the inner surface of the first wall portion 13, and the other is the outer surface of the first wall portion 13.

In the embodiment, the pressure relief component 6 is integrally formed with the first wall portion 13, and the first groove 61 and the second groove 62 may be directly formed on the first wall portion 13 to form an integrated pressure relief structure, which results in higher reliability, eliminates the mounting process of the pressure relief component 6, and has better economy.

In some embodiments, the first groove 61 is stamped and formed on the first wall portion 13; and/or the second groove 62 is stamped and formed on the first wall portion 13.

If the first groove 61 is a structure with a stage of groove, when the first groove 61 is formed on the first wall portion 13, stamping may be performed on the first wall portion 13 once to stamp out the first groove 61 on the first wall portion 13. If the first groove 61 is a structure with a plurality of stages of grooves, when the first groove 61 is formed on the first wall portion 13, stamping may be performed on the first wall portion 13 for a plurality of times, and a stage of groove may be stamped out each time, and the first groove 61 may be finally formed after the plurality of stamping.

In the embodiment, if the first groove 61 is stamped and formed on the first wall portion 13, the first groove 61 has a simple forming method, which is beneficial to reducing the production cost of the battery cell 10. If the second groove 62 is stamped and formed on the first wall portion 13, the second groove 62 has a simple forming method, which is conducive to reducing the production cost of the battery cell 10.

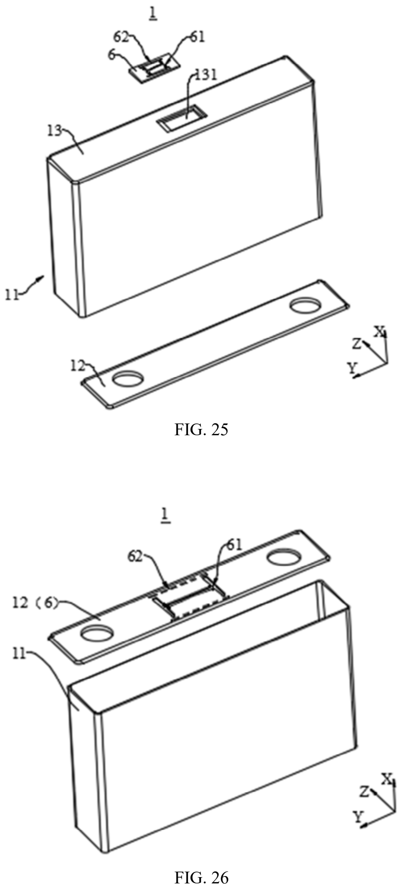

In some embodiments, referring to FIG. 25, FIG. 25 is an exploded view of a shell 1 (an opening is formed at one end of a case 11, the case 11 includes a first wall portion 13, and a pressure relief component 6 is mounted on the first wall portion 13) according to some embodiments of the present application. The pressure relief component 6 is disposed separately from the first wall portion 13, and the pressure relief component 6 is mounted on the first wall portion 13.

The pressure relief component 6 and the shell 1 are two separate components, and the pressure relief component 6 is mounted on the first wall portion 13 after being produced separately. The pressure relief component 6 may be mounted on the first wall portion 13 by welding, riveting, bonding, etc. As an example, the first wall portion 13 is provided with a pressure relief hole 131, the pressure relief component 6 covers the pressure relief hole 131, and the pressure relief component 6 is welded to the first wall portion 13.

In the embodiment, the pressure relief component 6 is a component independent of the shell 1, and the pressure relief component 6 and the shell 1 may be produced and assembled separately, with low production difficulty and high efficiency.

In some embodiments, the first wall portion 13 is a rectangular wall portion, and the first groove 61 and the second groove 62 are arranged in a width direction of the first wall portion 13.

The shell 1 may be in a cuboid shape, and the first wall portion 13 may be any wall portion having a rectangular shape in the shell 1. The first wall portion 13 is a rectangular wall portion, that is, the first wall portion 13 is in a substantially rectangular shape when viewed in a thickness direction of the first wall portion 13. Here, a length of the first wall portion 13 is greater than a width of the first wall portion 13.

The first groove 61 and the second groove 62 are arranged in the width direction of the first wall portion 13. The first groove 61 and the second groove 62 may be spaced apart in the width direction of the first wall portion 13; alternatively. the projection of the first groove 61 in the thickness direction X of the first wall portion and the projection of the second groove 62 in the thickness direction X of the first wall portion are just connected in the width direction of the first wall portion 13. Taking the first groove 61 being in a H-shape as an example, both the second groove segment 612 and the third groove segment 613 of the first groove 61 may be at a certain distance from the second groove 62 in the width direction of the first wall portion 13, so that the first groove 61 is spaced apart from the second groove 62 in the width direction of the first wall portion 13; alternatively, the projection of at least one of the second groove segment 612 and the third groove segment 613 of the first groove 61 in the thickness direction X of the first wall portion just extends in the width direction of the first wall portion 13 at one end of the extension direction to the projection of the second groove 62 in the thickness direction X of the first wall portion, so that the projection of the first groove 61 in the thickness direction X of the first wall portion and the projection of the second groove 62 in the thickness direction X of the first wall portion are exactly connected in the width direction of the first wall portion 13.

As an example, the width direction of the first wall portion 13 is parallel to the width direction Z of the second groove.

In the embodiment, the first groove 61 and the second groove 62 are arranged in the width direction of the first wall portion 13, so that the second groove 62 is closer to an edge of the first wall portion 13 in the width direction of the first wall portion 13, so that the region of the pressure relief component 6 on which the second groove 62 is disposed has a higher strength, reducing the risk that the pressure relief component 6 ruptures along the second groove 62 when the battery cell 10 undergoes pressure relief. In addition, during use of the battery cell 10, the expansion amount of the battery cell 10 in the width direction of the first wall portion 13 is greater than the expansion amount of the battery cell in a length direction of the first wall portion 13, and the expansion of the battery cell 10 in the width direction of the first wall portion 13 has a greater influence on the pressure relief component 6. The first groove 61 and the second groove 62 are arranged in the width direction of the first wall portion 13, and the second groove 62 can have a good absorption effect on the deformation energy of the battery cell 10 when the battery cell 10 expands and is deformed in the width direction of the first wall portion 13, thereby reducing the influence of the expansion of the battery cell 10 in the width direction of the first wall portion 13 on the pressure relief component 6.

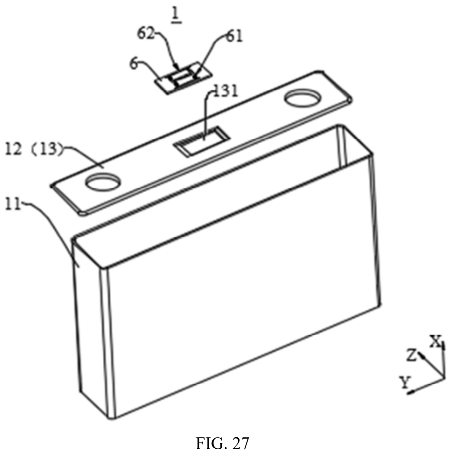

In some embodiments, referring to FIGS. 24 to 27, FIG. 26 is an exploded view of a shell 1 (an opening is formed at one end of a case 11, and an end cover 12 is a pressure relief component 6) provided in some embodiments of the present application; and FIG. 27 is an exploded view of a shell 1 (an opening is formed at one end of a case 11, an end cover 12 is the first wall portion 13, and the pressure relief component 6 is mounted on the first wall portion 13) provided in some embodiments of the present application. Openings are formed at least at one end of the case 11. The end covers 12 correspond to the openings one by one, and the end covers 12 close the opening. Here, at least one end cover 12 is the first wall portion 13; and/or at least one wall portion in the case 11 is the first wall portion 13.

The case 11 may have only one opening. For example, the opening is formed at only one end of the case 11. The case 11 may also have a plurality of openings. For example, openings are formed at two opposite ends of the case 11. The number of end covers 12 is the same as the number of openings of the case 11. It can be understood that if the case 11 has only one opening, there is only one end cover 12; and if the case 11 has two openings, there are two end covers 12. One or more end covers 12 may be the first wall portion 13; alternatively, one or more wall portions in the case 11 may be the first wall portion 13. In an embodiment where an open is formed at only one end of the case 11, a positive electrode terminal and a negative electrode terminal may be provided on the end cover 12, and a positive tab and a negative tab may be formed on one end of the electrode assembly 2 facing the end cover 12 to facilitate electrical connection with the positive electrode terminal and the negative electrode terminal respectively. In an embodiment where openings are formed at two opposite ends of the case 11, the positive electrode terminal may be provided on one end cover 12, the negative electrode terminal may be provided on the other end cover 12, and the positive tab and the negative tab may be respectively formed on two opposite ends 2 of the electrode assembly, so that the positive tab is electrically connected with the positive electrode terminal, and the negative tab is electrically connected with the negative electrode terminal.

In the embodiment shown in FIG. 24, an opening is formed at one end of the case 11, a wall portion of the case 11 opposite to the end cover 12 is the first wall portion 13, and the pressure relief component 6 is the first wall portion 13 portion; in the embodiment shown in FIG. 25, an opening is formed at one end of the case 11, a wall portion of the case 11 opposite to the end cover 12 is the first wall portion 13, and the pressure relief component 6 is mounted on the first wall portion 13; and in the embodiment shown in FIG. 26, an opening is formed at one end of the case 11, the end cover 12 is the first wall portion 13 (not shown in FIG. 26), and the first wall portion 13 is the pressure relief component 6. In the embodiment shown in FIG. 27, an opening is formed at one end of the case 11, the end cover 12 is the first wall portion 13, and the pressure relief component 6 is mounted on the first wall portion 13.

In the embodiment, if at least one end cover 12 is the first wall portion 13, the at least one end cover 12 has a pressure relief function, which reduces the difficulty of forming the first groove 61 and the second groove 62 on the end cover 12 or the difficulty of mounting the pressure relief component 6. If at least one wall portion in the case 11 is the first wall portion 13, the case 11 has a pressure relief function, emissions discharged from the interior of the battery cell 10 are less likely to affect external components outside the end cover 12 when the battery cell 10 undergoes pressure relief, reducing the risk of damaging the external components by the emissions. The external component may be a bus component connected to the electrode terminal 3, a temperature detection component, a voltage detection component, etc. The emissions include but are not limited to: electrolyte, dissolved or split positive and negative electrode plates, fragments of separators, high-temperature and high-pressure gases generated by the reaction, flames, etc.

In some embodiments, with continued reference to FIGS. 24 and 25, an opening is formed at only one end of the case 11, and a wall portion on which the case 11 is disposed opposite to the end cover 12 is the first wall portion 13.

As an example, the case 11 is in a cuboid shape, and the case 11 further includes four side walls, the four side walls surround the first wall portion 13, and the four side walls and the first wall portion 13 jointly define a space inside the case 11.

In the embodiment, the case 11 is a structure with an opening at one end, which further simplifies the structure of the entire battery cell 10. The first wall portion 13 is the wall portion on which the case 11 is disposed opposite to the end cover 12, which can achieve directional pressure relief from the bottom of the case 11.

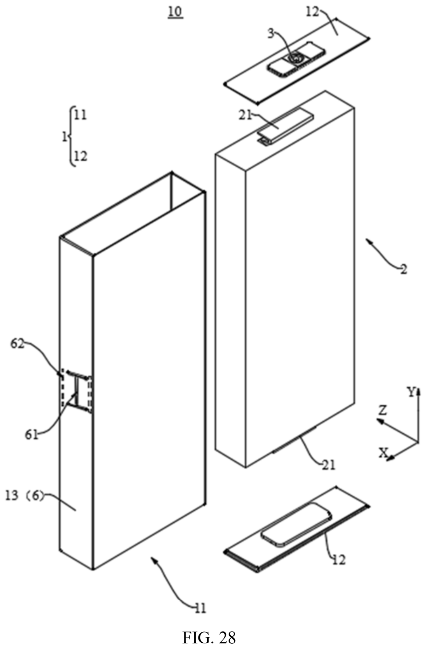

In some embodiments, with reference to FIG. 28, FIG. 28 is an exploded view of a battery cell 10 provided in some embodiments of the present application. Openings are formed at two opposite ends of the case 11, and at least one wall portion in the case 11 is the first wall portion 13.

In the case 11, one wall portion may be the first wall portion 13; alternatively, a plurality of wall portions may be the first wall portion 13. The pressure relief component 6 may be the first wall portion 13, and the pressure relief component 6 may also be mounted on the first wall portion 13.

In the embodiment shown in FIG. 28, the case 11 is in a cuboid shape, and the case 11 includes four wall portions, and the four wall portions are successively connected end to end and jointly define a space inside the case 11. Among the four wall portions, two opposite wall portions are large-area wall portions, and the other two wall portions are small-area wall portions; an outer surface area of the large-area wall portions is larger than an outer surface area of the small-area wall portions. One or two of the small-area wall portions in the case 11 are the first wall portions 13.

In the embodiment, the case 11 is a structure with openings formed at two opposite ends, and an electrode assembly 2 may be assembled into the case 11 through any of the openings, which can reduce the assembly difficulty of the battery cell 10 and improve the assembly quality of the battery cell 10. The case 11 with this structure may be made larger in length (openings are formed at both ends of the casing 11 in the length direction), which is conducive to increasing capacity of the battery cell 10.

In some embodiments, the material of the pressure relief component 6 includes steel.

The steel may be carbon steel, alloy steel, stainless steel, etc.

It can be understood that in the embodiment where the pressure relief component 6 and the first wall portion 13 are integrally formed, the material of the first wall portion 13 includes steel. If the first wall portion 13 is an end cover 12, the end cover 12 may be made of steel; and if the first wall portion 13 is a wall portion in the case 11, the case 11 may be made of steel.

In the embodiment, steel has the characteristic of high strength, and the pressure relief component 6 made of steel has better strength. When the burst pressure of the battery cell 10 is constant, the pressure relief component 6 may be made thinner, reducing the volume of the pressure relief component 6. In the embodiment where the pressure relief component 6 and the first wall portion 13 are integrally formed, the first wall portion 13 is made of steel, and the first wall portion 13 may be made thinner. In the case that the volume of the shell 1 is constant, the capacity of the shell 1 may be increased to provide more space for the electrode assembly 2, which is beneficial to improving the volume energy density of the battery cell 10.

In some embodiments, the steel is carbon steel or stainless steel.

The carbon steel may be low carbon steel, medium carbon steel or high carbon steel.

In some embodiments, the material of the pressure relief component 6 includes aluminum alloy.

It can be understood that in the embodiment where the pressure relief component 6 and the first wall portion 13 are integrally formed, the material of the first wall portion 13 includes aluminum alloy. If the first wall portion 13 is an end cover 12, the end cover 12 may be made of aluminum alloy; and if the first wall portion 13 is a wall portion in the case 11, the case 11 may be made of aluminum alloy.

The aluminum alloy has the characteristics of light weight and good ductility, making it easier to machine the first groove 61 and the second groove 62 on the pressure relief component 6. In the embodiment where the pressure relief component 6 and the first wall portion 13 are integrally formed, the first wall portion 13 is made of aluminum alloy, which can effectively reduce the difficulty of forming the first wall portion 13. Since the aluminum alloy has good ductility, it is easier to pile materials up in the predetermined relief area 63 at the time of forming the first groove 61. However, controlling V/A to 0.05 mm to 0.5 mm can effectively reduce the influence of stacking in the predetermined pressure relief region 63 on the performance of the battery cell 10, thereby improving the flatness of the surface of the pressure relief component 6 on which the first groove 61 is disposed, and taking into account both the requirements for service life of the battery cell 10 during normal use and the reliability requirements of the battery cell 10 during thermal runaway.

In some embodiments, the aluminum alloy includes components at the following percentage mass contents: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%.

This aluminum alloy belongs to 3xxx aluminum, and the aluminum alloy has lower hardness and better forming ability, reduces machining difficulty of the first groove 61 and the second groove 62, helps to improve machining accuracy of the first groove 61 and the second groove 62, and improves pressure relief consistency of the pressure relief component 6.

In some embodiments, the aluminum alloy includes components at the following percentage mass contents: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and the sum of other elements ≤ 0.15%.

This aluminum alloy belongs to the 5xxx aluminum, and the pressure relief component 6 made of this aluminum alloy has higher hardness, greater strength, and good damage resistance. An embodiment of the present application provides a battery 100, which includes the battery cell 10 provided in any of the above embodiments.

An embodiment of the present application provides an electrical device which includes the battery cell 10 provided by any one of the abovementioned embodiments, and the battery cell 10 is configured to provide electric energy to the electrical device.

An embodiment of the present application further provides a battery cell 10, and the battery cell 10 includes a shell 1 and an electrode assembly 2; and the electrode assembly 2 is provided with the positive tab and the negative tab, and the electrode assembly 2 is accommodated in the shell 1. The shell 1 is in a cuboid shape. The shell 1 includes a case 11 and an end cover 12. An opening is formed at one end of the case 11, and the end cover 12 closes the opening. The end cover 12 is provided with a positive electrode terminal and a negative electrode terminal. The positive electrode terminal is electrically connected with a positive tab through one current collecting member 4, and the negative electrode terminal is electrically connected with a negative tab through another current collecting member 4.

Here, the case 11 is made of an aluminum alloy material, a wall portion on which the case 11 is opposite to the end cover 12 is a pressure relief component 6, the pressure relief component 6 is a rectangular wall portion, a first groove 61 is provided on an outer surface of the pressure relief component 6, two second grooves 62 are provided on an inner surface of the pressure relief component 6, and in a width direction of the pressure relief component 6, the first groove 61 is located between the two second grooves 62, and the second grooves 62 are spaced apart from the first groove 61. A minimum residual thickness of the first groove 61 is smaller than a minimum residual thickness of the second grooves 62. The first groove 61 is an H-shaped structure, the first groove 61 includes a first groove segment 611, a second groove segment 612 and a third groove segment 613, the first groove segment 611, the second groove segment 612 and the third groove segment 613 all extend along a linear trajectory, the second groove segment 612 and the third groove segment 613 are disposed in parallel, the first groove segment 611 connects the second groove segment 612 and the third groove segment 613, the second groove segment 612 and the third groove segment 613 are both perpendicular to the first groove segment 611, a connection position of the first groove segment 611 and the second groove segment 612 is located at a midpoint position of the second groove segment 612, a connection position of the first groove segment 611 and the third groove segment 613 is located at a midpoint position of the third groove segment 613, and in a thickness direction X of a first wall portion, projections of the second grooves 62 extend beyond the second groove segment 612 and the third groove segment 613 along both ends of an extension direction respectively. The first groove 61 is a stepped groove, and the first groove 61 includes two steps of grooves, and each stage of groove is an H-shaped structure. Here, in the thickness direction X of the first wall portion, a projection of the first groove segment 611, a projection of the second groove segment 612, a projection of an extension line of the second groove segment 612, the third groove segment 613, a projection of an extension line of the third groove segment 613, and the projections of the two second grooves 62 jointly enclose two predetermined pressure relief regions 63, the two predetermined pressure relief regions 63 are respectively located on both sides of the first groove segment 611, and the pressure relief component 6 is configured to be capable of rupturing along at least a part of the first groove 61 when the battery cell 10 undergoes pressure relief, and the second groove 62 is configured to guide at least a part of the predetermined pressure relief region 63 to be flipped to open the at least a part of the predetermined pressure relief region 63. A volume of the first groove 61 is V, and a sum of areas of all the predetermined pressure relief regions 63 is A, with 0.05 mm ≤ V/A ≤ 0.5 mm, 82 mm³ ≤ V ≤ 450 mm³, and 160 mm² ≤ A ≤ 1500 mm².

In a width direction Z of the second groove, the second groove 62 includes a first groove side surface 621 and a second groove side surface 622 provided opposite to each other and connected with the pressure relief component 6, the first groove side surface 621 is closer to the predetermined pressure relief region 63 than the second groove side surface 622, an angle formed by the first groove side surface 621 and the inner surface of the pressure relief component 6 is a, an angle formed by the second groove side surface 622 and the inner surface of the pressure relief component 6 is b, with 90°≤ a < b < 180°.

In such a battery cell 10, meeting 0.05 mm ≤ V/A ≤ 0.5 mm can not only improve the flatness of the surface of the pressure relief component 6 on which the first groove 61 is disposed, and also take into account the requirements for the service life of the battery cell 10 during normal use and the reliability requirements of the battery cell 10 during thermal runaway. With a <b, an inclination angle of the first groove side surface 621 is smaller than that of the second groove side surface 622, which is equivalent to reducing the angle between the first groove side surface 621 and the second surface 65, which can reduce the stacking amount of surplus material in the predetermined pressure relief region 63 extruded at the time of forming the first groove 61, reducing the height of the material stacking protrusion formed on the surface of the predetermined pressure relief region 63 due to material extrusion on a region of the pressure relief component 6 where the first groove 61 is disposed, further improving the flatness of the surface of the pressure relief region 6 on which the first groove 61 is disposed.

It is to be noted that, without conflict, the embodiments in the present application and the features in the embodiments may be combined with each other.

The features and performance of the present application are described in further detail below with reference to the examples.

The battery cells 10 in each embodiment and comparative embodiments were prepared and tested according to the following method.

### I. Preparation of Battery Cell 10

### 1. Preparation of Positive Electrode Plate

In N-methyl pyrrolidone (NMP), a positive electrode active material LiNi_{0.7}Co_{0.1}Mn_{0.1}O₂, a conductive agent Super P and a binder polyvinylidene fluoride (PVDF) were prepared into a positive electrode slurry, where a solid content of the positive electrode slurry was 50 wt%, and a mass ratio of the LiNi_{0.7}Co_{0.1}Mn_{0.1}O₂, super P and PVDF in the solid content was 8:1:1. The positive electrode slurry was coated on upper and lower surfaces of a current collector aluminum foil, dried at 85 °C, cold pressed, edge trimmed, sheet cut and slit, and dried at 85°C under vacuum conditions for 4 h to obtain a positive electrode plate.

### 2. Preparation of Negative Electrode Plate

Graphite, the conductive agent Super P, a thickener carboxymethyl cellulose (CMC) and a binder styrene butadiene rubber (SBR) were uniformly mixed in deionized water to prepare a negative electrode slurry, where a solid content of the negative electrode slurry was 30 wt%, and a mass ratio of the graphite, silicon monoxide, super P, CMC and the binder styrene butadiene rubber (SBR) in the solid content was 88:7:3:2. The negative electrode slurry was coated on upper and lower surfaces of a current collector copper foil, dried at 85 °C, cold pressed, edge trimmed, sheet cut and slit, and dried at 120°C under vacuum conditions for 12 h to obtain a negative electrode plate.

### 3. Preparation of Electrolyte

In an argon atmosphere glove box (H₂O < 0.1 ppm, O₂ < 0.1 ppm), fully dried electrolyte salt LiPF₆ was dissolved in a mixed solvent (the mixed solvent included ethylene carbonate (EC) and diethyl carbonate (DEC), and the ethylene carbonate (EC) and the diethyl carbonate (DEC) were mixed at a mass ratio of 50:50), and mixed uniformly to obtain a liquid electrolyte with a concentration of 1 mol/L.

### 4. Spacer

A 16 µm polyethylene film was used as the separator.

### 5. Preparation of Battery Cell 10

The positive electrode plate, the separator and the negative electrode plate were stacked in order, with the separator located between the positive electrode plate and the negative electrode plate to isolate the positive electrode and the negative electrode, and winding was done to obtain an electrode assembly 2, the electrode assembly 2 was placed in an aluminum shell 1, the electrolyte prepared above was injected into the dried shell 1, and then encapsulation, standing, formation, shaping, capacity test and the like were performed to complete the preparation of a battery cell 10.

The battery cells 10 in various embodiments and comparative embodiments were prepared using the above method. The battery cells 10 in various embodiments and comparative embodiments were of the same chemical system. The battery cells 10 in various embodiment and comparative embodiments differ in that the volume V of the first groove 61 and the sum A of the areas of all the predetermined pressure relief regions 63 on the first wall portion 13 were different. In various embodiments and comparative embodiments, the shell 1 of the battery cell 10 had a cuboid structure. A case 11 of the shell 1 was a structure with an opening formed at only one end. The case 11 was made of an aluminum alloy material. A wall portion on which the case 11 was disposed opposite to the end cover 12 was the first wall portion 13. The first wall portion 13 served as a pressure relief component 6. The first wall portion 13 was a rectangular wall portion. The first groove 61 was an H-shaped structure and included two stages of grooves. The first groove 61 was disposed on an outer surface of the first wall portion 13. The second groove 62 was disposed on an inner surface of the first wall portion 13. In a width direction of the first wall portion 13, the first groove 61 was located between two second grooves 62.

### II. Performance Parameter Test

### 1. Method for Measuring Number of Fatigue Cycle of Battery Cell 10

1) A special test clamp was prepared. Specifically, the clamp included three 10 mm steel plates (a first steel plate, a second steel plate and a third steel plate). Each steel plate may completely cover a large surface of the battery cell 10 (an outer surface of the case 11 perpendicular to the width direction of the first wall portion 13). The first steel plate and the third steel plate were located at both ends of the clamp and were connected and fixed by bolts. The second steel plate was located between the first steel plate and the third steel plate, and the second steel plate was constrained by a guide rail, so the second steel plate can only move translationally in a thickness direction of the second steel plate.
2) The battery cell 10 was mounted between the first steel plate and the second steel plate, a supporting structure was placed between the large surface on one side of the battery cell 10 and the first steel plate, and between the large surface on the other side of the battery cell and the second steel plate. The supporting structure may be a thermal insulation pad or a water cooling plate (consistent with the material/structure between two adjacent battery cells 10 in an actual battery 100), and the supporting structure may be compressed to provide an expansion space for the battery cell 10 during charge-discharge cycle aging. The large surface of the battery cell 10 was bonded to the supporting structure, the first steel plate was bonded to the corresponding supporting structure, the second steel plate was bonded to the corresponding supporting structure, and a pressure sensor was provided between the second steel plate and the third steel plate.
3) The position of the second steel plate was adjusted by adjusting a pre-tightening force of the bolts, the pressure sensor was observed to ensure that the battery cell 10 was subject to an initial compression force of 2000N, and the positive electrode terminal and the positive electrode terminal of the battery cell 10 were connected to a charging and discharging device.
4) The battery cell 10 and the clamp were placed in a constant temperature environment of 25±2°C to allow the battery cell 10 to reach temperature equilibrium, and then the test was started.
5) The test steps were performed with reference to Chapter 6.4 "Standard Cycle Life" in GBT31484-2015 Cycle Life Requirements and Test Methods for Traction Battery of Electric Vehicle, and the test cycle cutoff condition was changed to "Stop the test until damage occurs to a region of the first wall portion 13 on which the first groove 61 is disposed".

Specifically, test was performed according to the following steps:
a) discharging to 2.8 v at a current of 1I₁(A);
b) shelving for not less than 30 min;
c) Charging according to the method described in section 6.1.1.3 of GBT31484-2015 Cycle Life Requirements and Test Methods for Traction Battery of Electric Vehicle;
d) shelving for not less than 30 min;
e) discharging to 2.8 v at a current of 1I₁ (A); and
f) repeating the cycle from b) to e) and stopping the testing until damage occurs to the region of the first wall portion 13 on which the first groove 61 is disposed.

That is, during test, the region of the first wall portion 13 of the battery cell 10 on which the first groove 61 was disposed was continuously observed until the region is damaged and liquid leaks, and the number of cycles was recorded as the number of fatigue cycles of the battery cell 10. Here, the greater the number of fatigue cycles of the battery cell 10, the smaller the probability of valve opening and liquid leakage due to gas production during long-term use of the battery cell 10, and the longer the service life.

### 2. Test Method for Thermal Runaway of Battery Cell 10

1. A heating plate was selected according to the size of the battery cell 10, and the size of the heating plate should cover the large surface of the battery cell 10 as much as possible (coverage area ≥ 60%);
2. Before test, the battery cell 10 was charged to 100% SOC, and the battery cell 10 was placed in a constant temperature environment of 25±2°C;
3. Sensor Arrangement:
   1) Thermocouple Arrangement: A layer of Teflon was respectively attached to central regions of the two large surfaces of the battery cell 10, a thermocouple was arranged above the Teflon, and then a layer of Teflon was attached;
   2) Voltage Sampling Line Arrangement: A layer of Teflon was respectively attached to the positive electrode terminal, the positive electrode terminal and the shell 1 of the battery cell 10, a voltage sampling line was arranged above the Teflon, and then a layer of Teflon was attached;
   3) Air Pipe Arrangement: The first wall portion 13 of the battery cell 10 was drilled to obtain a hole, in the length direction of the first wall portion 13, the drilling position was located at the midpoint position between the first groove 61 and the side surface of the case 11 (the outer surface of the wall portion of the case 11 adjacent to the first wall portion 13 in the length direction of the first wall portion 13), the air pipe was extended into the hole and sealed, and the air pipe was connected with an air pressure sensor; and
   4) The thermocouple, the voltage sampling line and the air pressure sensor were connected to a data acquisition instrument to acquire and analyze data in real time, where an acquisition frequency of the data acquisition instrument is ≤ 0.1 S;
4. Clamp Assembly: The clamp was caused to completely cover the large surface of the battery cell 10 (the outer surface of the case 11 perpendicular to the width direction of the first wall portion 13) at a clamping force of 3000N, and the clamp, the heating plate and the battery cell 10 were arranged in the order of clamp + heating plate + battery cell 10 + clamp;
5. Test: The data acquisition instrument was turned on to acquire temperature, voltage, and air pressure data, and then the heating plate was turned on at a power of 500W to heat the battery cell 10 until the battery cell 10 thermally runs away; and
6. Obtaining the Pressure Holding Duration of the Battery Cell 10: The thermal runaway time and the venting time were determined based on the temperature, voltage, and air pressure data acquired by the data acquisition instrument, and the pressure holding time of the battery cell 10 was obtained according to the pressure holding time = venting time - thermal runaway time.

Thermal Runaway Determination Criteria: a) A trigger object generates a voltage drop, which drops to more than 25% of the initial voltage; b) The temperature of the detection point reaches the maximum operating temperature specified by the manufacturer; and c) the temperature rise rate dT/dt at the detection point is ≥ 1 °C/s and lasts for more than 3 s. When a) and c) or b) and c) occur, it is determined that thermal runaway occurs, and the thermal runaway time needs to be determined.

Valve Opening Time Determination: When the air pressure decreases by more than 25%, it may be determined that the valve is opened (the first wall portion 13 ruptures along at least a part of the first groove 61), and the moment at which the air pressure starts to decrease is the valve opening time. Both the valve opening time and the thermal runaway time may be obtained from the data acquisition instrument.

### 3. Method for Measuring Flatness Difference of Outer Surface of First Wall Portion 13

Four measurement points were taken on the outer surface of the first wall portion 13 in the region close to both ends in the length direction of the first wall portion 13 (where the first groove 61 was not disposed), the flatness of the four measurement points was measured, and an average value of the flatness of the four measurement points was calculated to obtain a reference value of flatness. Then, two experimental points were respectively taken at positions of the outer surface of the first wall portion 13 located in the predetermined pressure relief region 63 and close to the first groove segment 611, the second groove segment 612 and the third groove segment 613. The flatness of the six experimental points was measured, and an average value of the flatness of the six experimental points was calculated to obtain an experimental value of the flatness. Finally, the reference value was subtracted from the experimental value to obtain the flatness difference of the outer surface of the first wall portion 13.

### III. Test Results

The performance test results of the battery cells 10 in various embodiments and comparative embodiment are shown in Table 1 as follows:

**Table 1**

| Serial No. | V (mm³) | A (mm²) | V/A (mm) | Flatness difference of outer surface of first wall portion 13 | Number of fatigue cycles of battery cell 10 | Gas holding duration of battery cell 10 (s) |
|---|---|---|---|---|---|---|
| Embodiment 1 | 82 | 1640 | 0.05 | 0.04 | 3005 | 5 |
| Embodiment 2 | 90 | 1500 | 0.06 | 0.05 | 2852 | 4.6 |
| Embodiment 3 | 115 | 1437 | 0.08 | 0.06 | 2831 | 4.3 |
| Embodiment 4 | 120 | 1200 | 0.1 | 0.07 | 2555 | 4.1 |
| Embodiment 5 | 150 | 1000 | 0.15 | 0.08 | 2527 | 3.9 |
| Embodiment 6 | 180 | 900 | 0.2 | 0.09 | 2484 | 3.7 |
| Embodiment 7 | 200 | 800 | 0.25 | 0.1 | 2391 | 3.3 |
| Embodiment 8 | 265 | 880 | 0.3 | 0.11 | 2113 | 3.2 |
| Embodiment 9 | 300 | 857 | 0.35 | 0.12 | 1905 | 3.1 |
| Embodiment 10 | 285 | 750 | 0.38 | 0.14 | 1569 | 2.9 |
| Embodiment 11 | 350 | 875 | 0.4 | 0.17 | 1220 | 2.8 |
| Embodiment 12 | 210 | 500 | 0.42 | 0.2 | 1132 | 2.7 |
| Embodiment 13 | 400 | 890 | 0.45 | 0.22 | 1089 | 2.5 |
| Embodiment 14 | 184 | 400 | 0.46 | 0.25 | 1037 | 2.2 |
| Embodiment 15 | 153 | 320 | 0.48 | 0.3 | 973 | 2.1 |
| Embodiment 16 | 79 | 160 | 0.49 | 0.32 | 961 | 2 |
| Embodiment 17 | 450 | 900 | 0.5 | 0.35 | 951 | 1.8 |
| Comparative Embodiment 1 | 80 | 2000 | 0.04 | 0.03 | 3142 | 5.3 |
| Comparative Embodiment 2 | 70 | 2100 | 0.03 | 0.02 | 3273 | 5.4 |
| Comparative Embodiment 3 | 600 | 1000 | 0.6 | 0.38 | 914 | 1.6 |
| Comparative Embodiment 4 | 800 | 1067 | 0.75 | 0.41 | 872 | 1.3 |

As shown in Table 1, from the comparison between Embodiments 1 to 17 and Comparative Embodiments 1 to 2, it can be seen that with V/A ≥ 0.05 mm, the gas holding duration of the battery cell 10 during thermal runaway is shorter. Therefore, the burst pressure of the battery cell 10 is lower, and the pressure relief timeliness of the battery cell 10 during thermal runaway is better, which can reduce the risk of explosion of the battery cell 10 and improve the reliability of the battery cell 10. It can be seen from the comparison between Embodiments 1 to 17 and Comparative Embodiments 3 to 4 that with V/A ≤ 0.5 mm, the flatness difference of the outer surface of the first wall portion 13 (the surface of the first wall portion 13 on which the first groove 61 is disposed) is small, which improves the flatness of the outer surface of the first wall portion 13, and the number of fatigue cycles of the battery cell 10 is large, which improves the fatigue resistance of the region of the first wall portion 13 on which the first groove 61 is disposed, and can effectively improve the service life of the battery cell 10.

It can be seen from the comparison between Embodiments 4 to 9 and Embodiments 1 to 3 that with V/A ≥ 0.1 mm, the gas holding time of the battery cell 10 during thermal runaway is shorter, and the pressure relief timeliness of the battery cell 10 during thermal runaway is better, which can further improve the reliability of the battery cell 10. It can be seen from the comparison between Embodiments 4 to 9 and Embodiments 10 to 17 that meeting V/A ≤ 0.35 mm further improves the flatness of the outer surface of the first wall portion 13, results in a greater number of fatigue cycles of the battery cell 10, and further improves the service life of the battery cell 10.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application. The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
a shell comprising a first wall portion; and
a pressure relief component provided on the first wall portion, the pressure relief component comprising a first groove and a second groove, in a thickness direction of the first wall portion, a projection of the first groove and a projection of at least one second groove jointly defining at least one predetermined pressure relief region, the pressure relief component being configured to be capable of rupturing along at least a part of the first groove when the battery cell undergoes pressure relief, and the second groove being configured to guide at least a part of the predetermined pressure relief region to be flipped to open the at least a part of the predetermined pressure relief region,
wherein a volume of the first groove is V, and a sum of areas of all the predetermined pressure relief regions is A, with 0.05 mm ≤ V/A ≤ 0.5 mm.

2. The battery cell of claim 1, wherein 0.1 mm ≤ V/A ≤ 0.35 mm is met.

3. The battery cell of claim 1 or 2, wherein 82 mm³ ≤ V ≤ 450 mm³ is met.

4. The battery cell of claim 3, wherein 115 mm³ ≤ V ≤ 265 mm³ is met.

5. The battery cell of any of claims 1 to 4, wherein 160 mm² ≤ A ≤ 1500 mm² is met.

6. The battery cell of claim 5, wherein 400 mm² ≤ A ≤ 1200 mm² is met.

7. The battery cell of any of claims 1 to 6, wherein in the thickness direction of the first wall portion, the pressure relief component has a first surface and a second surface opposite to each other, and the second groove is recessed from the second surface toward the first surface; and
in a width direction of the second groove, the second groove comprises a first groove side surface and a second groove side surface provided opposite to each other and connected with the second surface, the first groove side surface is closer to the predetermined pressure relief region than the second groove side surface, an angle formed by the first groove side surface and the second surface is a, an angle formed by the second groove side surface and the second surface is b, with 90°≤ a < b < 180°, and the width direction of the second groove is perpendicular to the thickness direction of the first wall portion.

8. The battery cell of claim 7, wherein 90° ≤ a ≤ 150° is met.

9. The battery cell of claim 7 or 8, wherein 90° < b ≤ 170° is met.

10. The battery cell of any of claims 1 to 9, wherein the pressure relief component is provided with a plurality of second grooves, in the thickness direction of the first wall portion, the projection of the first groove and the projections of the plurality of second grooves jointly define a plurality of predetermined pressure relief regions, and each of the predetermined pressure relief regions is disposed corresponding to one or more second grooves.

11. The battery cell of any of claims 1 to 10, wherein in the thickness direction of the first wall portion, the projection of the second groove does not overlap with the projection of the first groove.

12. The battery cell of claim 11, wherein in the width direction of the second groove, the second groove is spaced apart from the first groove, and the width direction of the second groove is perpendicular to the thickness direction of the first wall portion.

13. The battery cell of any of claims 1 to 12, wherein in the thickness direction of the first wall portion, both ends of the projection of the second groove in an extension direction respectively extend beyond both ends of the projection of the first groove.

14. The battery cell of any of claims 1 to 13, wherein a minimum residual thickness of the first groove is D₁, and a minimum residual thickness of the second groove is D₂, with D₁ < D₂.

15. The battery cell of claim 14, wherein in the thickness direction of the first wall portion, a maximum groove depth of the first groove is H₁, and a maximum groove depth of the second groove is H₂, with H₂ < H₁.

16. The battery cell of any of claims 1 to 15, wherein in the thickness direction of the first wall portion, the maximum groove depth of the first groove is H₁, and a thickness of the pressure relief component is D, with 0.16 ≤ H₁/D < 1.

17. The battery cell of claim 16, wherein 0.4 mm ≤ H₁ ≤ 2 mm is met, and 0.8 mm ≤ D ≤ 2.5 mm is met.

18. The battery cell of any of claims 1 to 17, wherein in the thickness direction of the first wall portion, the pressure relief component has a first surface and a second surface opposite to each other, the first groove is disposed on the first surface, and the second groove is disposed on the second surface.

19. The battery cell of claim 18, wherein in the width direction of the second groove, the projection of the first groove at least partially overlaps with the projection of the second groove, and the width direction of the second groove is perpendicular to the thickness direction of the first wall portion.

20. The battery cell of claim 18 or 19, wherein in the thickness direction of the first wall portion, a groove bottom surface of the second groove is closer to the first surface than a groove bottom surface of the first groove.

21. The battery cell of any of claims 18 to 20, wherein in the thickness direction of the first wall portion, the maximum groove depth of the second groove is H₂, and the minimum residual thickness of the first groove is D₁, with D₁ < H₂.

22. The battery cell of any of claims 18 to 21, wherein the first groove comprises a plurality of stages of grooves sequentially provided in a direction from the first surface to the second surface, and in the thickness direction of the first wall portion, among adjacent two stages of grooves, a stage of groove away from the first surface is disposed on a groove bottom surface of the other stage of groove close to the first surface; and
a stage of groove of the plurality of stages of grooves disposed on the first surface is a first-stage groove, and in the width direction of the second groove, the projection of the second groove at least partially overlaps with a projection of the first-stage groove, and the width direction of the second groove is perpendicular to the thickness direction of the first wall portion.

23. The battery cell of claim 22, wherein in the thickness direction of the first wall portion, the groove bottom surface of the second groove is flush with a groove bottom surface of the first-stage groove, or the groove bottom surface of the second groove is closer to the first surface than the groove bottom surface of the first-stage groove.

24. The battery cell of any of claims 1 to 17, wherein in the thickness direction of the first wall portion, the pressure relief component has a first surface and a second surface opposite to each other, and both the first groove and the second groove are recessed from the second surface toward the first surface.

25. The battery cell of claim 24, wherein the first groove comprises a plurality of stages of grooves sequentially provided in a direction from the second surface to the first surface, and in the thickness direction of the first wall portion, among adjacent two stages of grooves, a stage of groove away from the second surface is disposed on a groove bottom surface of the other stage of groove close to the second surface; and
a stage of groove of the plurality of stages of grooves disposed on the second surface is a first-stage groove, and in the thickness direction of the first wall portion, a groove bottom surface of the first-stage groove is closer to the second surface than the groove bottom surface of the second groove.

26. The battery cell of claim 25, wherein in the thickness direction of the first wall portion, the maximum groove depth of the second groove is H₂, and a maximum groove depth of the first-stage groove is H₃, with H₃ < H₂.

27. The battery cell of any of claims 18 to 26, wherein the first surface is a surface of the pressure relief component facing an exterior of the battery cell, and the second surface is a surface of the pressure relief component facing an interior of the battery cell.

28. The battery cell of any of claims 1 to 27, wherein in the thickness direction of the first wall portion, the projection of the first groove, the projection of the second groove, and a projection of an extension line of the second groove jointly enclose the predetermined pressure relief region; or
in the thickness direction of the first wall portion, the projection of the first groove, a projection of an extension line of the first groove, and the projection of the second groove jointly enclose the predetermined pressure relief region; or
in the thickness direction of the first wall portion, the projection of the first groove, a projection of an extension line of the first groove, the projection of the second groove, and a projection of an extension line of the second groove jointly enclose the predetermined pressure relief region.

29. The battery cell of claim 28, wherein the first groove extends along an arc trajectory; and/or the second groove extends along a linear trajectory.

30. The battery cell of any of claims 1 to 28, wherein the first groove comprises a first groove segment and a second groove segment, and the first groove segment is connected with the second groove segment, wherein
in the thickness direction of the first wall portion, a projection of the first groove segment, a projection of the second groove segment, the projection of the second groove and the projection of the extension line of the second groove jointly enclose the predetermined pressure relief region; or
in the thickness direction of the first wall portion, a projection of the first groove segment, a projection of an extension line of the first groove segment, a projection of the second groove segment, a projection of an extension line of the second groove segment, and the projection of the second groove jointly enclose the predetermined pressure relief region; or
in the thickness direction of the first wall portion, a projection of the first groove segment, a projection of an extension line of the first groove segment, a projection of the second groove segment, a projection of an extension line of the second groove segment, the projection of the second groove, and the projection of the extension line of the second groove jointly enclose the predetermined pressure relief region.

31. The battery cell of any of claims 1 to 28, wherein the first groove comprises a first groove segment, a second groove segment and a third groove segment, the second groove segment and the third groove segment are disposed opposite to each other, the first groove segment connects the second groove segment and the third groove segment, and the first groove segment and the second groove are disposed opposite to each other, wherein
in the thickness direction of the first wall portion, a projection of the first groove segment, a projection of the second groove segment, a projection of the third groove segment, the projection of the second groove and the projection of the extension line of the second groove jointly enclose the predetermined pressure relief region; or
in the thickness direction of the first wall portion, a projection of the first groove segment, a projection of the second groove segment, a projection of an extension line of the second groove segment, a projection of the third groove segment, a projection of an extension line of the third groove segment and the projection of the second groove jointly enclose the predetermined pressure relief region; or
in the thickness direction of the first wall portion, a projection of the first groove segment, a projection of the second groove segment, a projection of an extension line of the second groove segment, a projection of the third groove segment, a projection of an extension line of the third groove segment, the projection of the second groove, and the projection of the extension line of the second groove jointly enclose the predetermined pressure relief region.

32. The battery cell of claim 31, wherein a connection position of the second groove segment and the first groove segment is offset from both ends of the second groove segment, and a connection position of the third groove segment and the first groove segment is offset from both ends of the third groove segment, so that the predetermined pressure relief region is respectively formed on both sides of the first groove segment.

33. The battery cell of claim 31 or 32, wherein the first groove segment extends along a linear or arc trajectory; and/or the second groove segment extends along a linear or are trajectory; and/or the third groove segment extends along a linear or arc trajectory.

34. The battery cell of any of claims 1 to 33, wherein the pressure relief component is integrally formed with the first wall portion.

35. The battery cell of claim 34, wherein the first groove is stamped and formed on the first wall portion, and/or the second groove is stamped and formed on the first wall portion.

36. The battery cell of any of claims 1 to 33, wherein the pressure relief component is disposed separately from the first wall portion, and the pressure relief component is mounted on the first wall portion.

37. The battery cell of any of claims 1 to 36, wherein the first wall portion is a rectangular wall portion, and the first groove and the second groove are arranged in a width direction of the first wall portion.

38. The battery cell of any of claims 1 to 37, wherein the shell comprises:
a case having openings formed at least at one end thereof; and
end covers, corresponding to the openings one by one, the end covers closing the openings,
wherein at least one of the end covers is the first wall portion, and/or at least one wall portion in the case is the first wall portion.

39. The battery cell of claim 38, wherein the opening is formed at only one end of the case, and a wall portion of the case opposite to the end cover is the first wall portion.

40. The battery cell of claim 38, wherein the openings are formed at each of opposite ends of the case, and at least one wall portion in the case is the first wall portion.

41. The battery cell of any of claims 1 to 40, wherein a material of the pressure relief component comprises steel.

42. The battery cell of claim 41, wherein the steel is carbon steel or stainless steel.

43. The battery cell of any of claims 1 to 40, wherein a material of the pressure relief component comprises an aluminum alloy.

44. The battery cell of claim 43, wherein the aluminum alloy comprises components at the following percentage mass contents: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%.

45. The battery cell of claim 43, wherein the aluminum alloy comprises components at the following percentage mass contents: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and the sum of other elements ≤ 0.15%.

46. A battery comprising the battery cell of any of claims 1 to 45.

47. An electrical device comprising the battery cell of any of claims 1 to 45, the battery cell being used to provide electric energy to the electrical device.
